(19) 

**Europäisches Patentamt**
**European Patent Office**
**Office européen des brevets**

(11) **EP 4 697 561 A1**

(12) **EUROPEAN PATENT APPLICATION**
published in accordance with Art. 153(4) EPC

(43) Date of publication:
**18.02.2026 Bulletin 2026/08**

(21) Application number: **24788710.2**

(22) Date of filing: **09.04.2024**

(51) International Patent Classification (IPC):
*H02J 50/40* (2016.01)     *B60L 5/00* (2006.01)
*B60L 50/60* (2019.01)     *B60L 53/12* (2019.01)
*B60L 58/10* (2019.01)     *B60M 7/00* (2006.01)
*H02J 7/00* (2026.01)      *H02J 50/12* (2016.01)
*H02J 50/80* (2016.01)

(52) Cooperative Patent Classification (CPC):
**B60L 5/00; B60L 50/60; B60L 53/12; B60L 58/10; B60M 7/00; H02J 7/00; H02J 50/12; H02J 50/40; H02J 50/80**

(86) International application number:
**PCT/JP2024/014353**

(87) International publication number:
**WO 2024/214686 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.04.2023 JP 2023066091**
            **29.11.2023 JP 2023201553**

(71) Applicant: **DENSO CORPORATION**
**Kariya-city, Aichi 448-8661 (JP)**

(72) Inventors:
• **OBAYASHI, Kazuyoshi**
  **Kariya- city, Aichi 4488661 (JP)**
• **YAMAGUCHI, Nobuhisa**
  **Kariya- city, Aichi 4488661 (JP)**
• **TANI, Keisuke**
  **Kariya- city, Aichi 4488661 (JP)**
• **KANESAKI, Masaki**
  **Kariya- city, Aichi 4488661 (JP)**
• **YAMADA, Hidetoshi**
  **Kariya- city, Aichi 4488661 (JP)**

(74) Representative: **TBK**
**Bavariaring 4-6**
**80336 München (DE)**

(54) **NON-CONTACT POWER SUPPLY SYSTEM, POWER TRANSMISSION DEVICE, AND POWER RECEPTION DEVICE**

(57)     A wireless power transfer system (10c) includes a power transmission apparatus (200), traveling-path segments (300c) including a power-transfer path segment (310) and a non-power transfer path segment (320), and a power-transfer management unit (400c). A mobile object, which travels on the one or more power-transfer path segments, includes a power reception unit, a battery, a battery sensor, and a first control unit. The power-transfer management unit includes a first controller that generates power transfer information. The power transfer information includes a first traveling speed for a predetermined route that includes (i) at least one selected power-transfer path segment included in the one or more power-transfer path segments, or (ii) a combination of at least one selected non-power transfer path segment included in the one or more non-power transfer path segments and the at least one selected power-transfer path segment. The mobile object, which travels at a second traveling speed (V2) on the at least one non-power transfer path segment, is controlled to travel at the first traveling speed on the at least one power-transfer path segment. The first controller calculates, as the first traveling speed, a third traveling speed required to charge the battery of the mobile object traveling on the route, and transmits the third traveling speed to the mobile object.

EP 4 697 561 A1

# FIG.19

310,300c

10c

C
310,300c

310,300c

100

Pr

310,300c

Pr

320,300c

100

| 200 | POWER TRANSMISSION APPARATUS |
| 400c | POWER-TRANSFER MANAGEMENT UNIT |

**Description**

CROSS-REFERENCE TO RELATED APPLICATION

This present application is based on and claims the benefit of priority from Japanese Patent Applications No. 2023-066091 and No. 2023-201553 filed on April 14, 2023 and November 29, 2023, respectively, the disclosure of each of which is incorporated herein by reference.

TECHNICAL FIELD

The present disclosure relates to wireless power transfer (WPT) systems, power transmission apparatuses, and power reception apparatuses.

BACKGROUND

For example, Patent Literature discloses an example of a technology of installing a power transfer lane along a portion of a traveling route and performing power transfer to a vehicle while the vehicle is traveling along the power transfer lane. The vehicle equipped with a power reception apparatus is supplied with power from a power transmission apparatus while traveling on the power transfer lane to which a power transmission apparatus is mounted.

CITATION LIST

Patent Literature 1: Japanese Patent Application Publication No. 2021-45013.

SUMMARY

Because the power transfer lane in such a wireless power transfer method based on the power transfer lane has a limited length, the time during which the vehicle travels on the power transfer lane is limited. This may make it difficult for the vehicle traveling on the power transfer lane to secure a required charging amount of its battery. Let us assume that the wireless power transfer method based on the power transfer lane is applied to an automated guided vehicle (AGV) used, for example, in a factory. In this assumption, because the AGV is configured to be charged in a stopped state, it is difficult for the AGV to perform requested work during the AGV being charged, resulting in the operating ratio of the AGV decreasing. This results in a countermeasure being required to install a high-capacity battery to increase the operating time of the AGV.

Accordingly, users have desired a technology that secures, in such a wireless power transfer method, a sufficient charging amount of a battery of a vehicle on a power transfer lane with a limited length. That is, users have desired, using the technology, to prevent a decrease in the operating ratio of the vehicle due to charging time and to eliminate the need for increasing the battery capacity.

The present disclosure may be implemented as, for example, first to third aspects.

The first aspect of the present disclosure provides a wireless power transfer system for wireless power transfer to at least one mobile object. The wireless power transfer system includes a power transmission apparatus configured to perform power transmission, and a plurality of traveling-path segments that includes (i) one or more power-transfer path segments through which the power transmission is performed, and (ii) one or more non-power transfer path segments other than the one or more power-transfer path segments. The wireless power transfer system includes a power-transfer management unit configured to control the wireless power transfer system.

The at least one mobile object is configured to travel on the one or more power-transfer path segments. The at least one mobile object includes a power reception unit configured to perform reception of the power transmitted from the power transmission apparatus, a battery configured to be chargeable by a predetermined suppliable power output as the power, a battery sensor configured to measure a remaining capacity of the battery, a first communication unit configured to communicate with the power-transfer management unit, and a first control unit configured to control the at least one mobile object.

The power transmission apparatus includes at least one power transmission coil provided on each of the one or more power-transfer path segments, and a power supply unit configured to output, to the at least one mobile object through the at least one power transmission coil, the suppliable power output.

The power-transfer management unit includes a first controller configured to generate power transfer information, and a second communication unit configured to communicate with the first communication unit.

One of the at least one mobile object and the power-transfer management unit includes a third controller configured to calculate, based on the remaining capacity of the battery, requested energy of the battery.

The power transfer information is information used by the first control unit for controlling travel and the reception of the power of the at least one mobile object. The power transfer information includes a first traveling speed for a predetermined route that includes at least one selected power-transfer path segment included in the one or more power-transfer path segments, or a combination of at least one selected non-power transfer path segment included in the one or more non-power transfer path segments and the at least one selected power-transfer path segment. The at least one mobile object, which travels at a second traveling speed on the at least one non-power transfer path segment, is controlled to travel at the first traveling speed on the at least one power-transfer path segment.

The first controller is configured to calculate, as the first traveling speed, a third traveling speed required to charge the battery of the at least one mobile object traveling on the route up to the requested energy in accordance with available power information and the requested energy. The available power information is predetermined related to a power delivery capability of the at least one power-transfer path segment. The first controller is configured to transmit, through the second communication unit, the third traveling speed to the at least one mobile object.

In the wireless power transfer system according to the first aspect, the at least one mobile object is configured to travel along the route at the third traveling speed that reflects changes in the requested energy of the battery and in the available power information. The available power information includes, for example, the suppliable power output and the length of the at least one selected power-transfer path segment, so that electric power received by the at least one mobile object depends on its traveling speed.

Accordingly, the at least one mobile object, which is configured to travel along the route at the third traveling speed, receives the requested energy corresponding to the changes in the remaining capacity of the battery and charges the battery based on the received requested energy. The wireless power transfer system of the first aspect therefore makes it possible to prevent stoppage of the at least one mobile object due to shortage of the remaining capacity, thus preventing reduction in the operating rate of the at least one mobile object.

The second aspect of the present disclosure provides a power transmission apparatus for performing power transmission to be used in a wireless power transfer system for wireless power transfer to at least one mobile object. The wireless power transfer system includes a plurality of traveling-path segments that includes (i) one or more power-transfer path segments through which the power transmission is performed, and (ii) one or more non-power transfer path segments other than the one or more power-transfer path segments. The wireless power transfer system includes a power-transfer management unit configured to control the wireless power transfer system. The at least one mobile object is configured to travel on the one or more power-transfer path segments.

The at least one mobile object includes a power reception unit configured to perform reception of the power transmitted from the power transmission apparatus, a battery configured to be chargeable by a predetermined suppliable power output as the power, a battery sensor configured to measure a remaining capacity of the battery, a first communication unit configured to communicate with the power-transfer management unit, and a first control unit configured to control the at least one mobile object.

The power transmission apparatus includes at least one power transmission coil provided on each of the one or more power-transfer path segments, and a power supply unit configured to output, to the at least one mobile object through the at least one power transmission coil, the suppliable power output.

The power-transfer management unit includes a first controller configured to generate power transfer information, and a second communication unit configured to communicate with the first communication unit.

One of the at least one mobile object and the power-transfer management unit includes a third controller configured to calculate, based on the remaining capacity of the battery, requested energy of the battery. The power transfer information is information used by the first control unit for controlling travel and the reception of the power of the at least one mobile object. The power transfer information includes a first traveling speed for a predetermined route that includes at least one selected power-transfer path segment included in the one or more power-transfer path segments, or a combination of at least one selected non-power transfer path segment included in the one or more non-power transfer path segments and the at least one selected power-transfer path segment.

The at least one mobile object, which travels at a second traveling speed on the at least one non-power transfer path segment, is controlled to travel at the first traveling speed on the at least one power-transfer path segment.

The first controller is configured to calculate, as the first traveling speed, a third traveling speed required to charge the battery of the at least one mobile object traveling on the route up to the requested energy in accordance with available power information and the requested energy, the available power information being predetermined related to a power delivery capability of the at least one power-transfer path segment. The first controller is configured to transmit, through the second communication unit, the third traveling speed to the at least one mobile object.

In the power transmission apparatus according to the second aspect, the at least one mobile object is configured to travel along the route at the third traveling speed that reflects changes in the requested energy of the battery and in the available power information. The available power information includes, for example, the suppliable power output and the length of the at least one selected power-transfer path segment, so that electric power received by the at least one mobile object depends on its traveling speed.

Accordingly, the at least one mobile object, which is configured to travel along the route at the third traveling speed, receives the requested energy corresponding to the changes in the remaining capacity of the battery and charges the battery based on the received requested energy. The power transmission apparatus of the second aspect therefore makes it possible to prevent stoppage of the at least one mobile object due to shortage of the remaining capacity, thus preventing reduction in the operating rate of the at least one mobile object.

The third aspect of the present disclosure provides a power reception apparatus provided at least one mobile object for power reception. The power reception apparatus is usable in a wireless power transfer system for wireless power transfer to the at least one mobile object. The wireless power transfer system includes a power transmission apparatus configured to perform power transmission, and a plurality of traveling-path segments that includes (i) one or more power-transfer path segments through which the power transmission is performed, and (ii) one or more non-power transfer path segments other than the one or more power-transfer path segments. The wireless power transfer system includes a power-transfer management unit configured to control the wireless power transfer system.

The at least one mobile object is configured to travel on the one or more power-transfer path segments.

The power reception apparatus includes a power reception unit configured to perform reception of the power transmitted from the power transmission apparatus, a battery configured to be chargeable by a predetermined suppliable power output as the power, a battery sensor configured to measure a remaining capacity of the battery, a first communication unit configured to communicate with the power-transfer management unit, and a first control unit configured to control the at least one mobile object.

The power transmission apparatus includes at least one power transmission coil provided on each of the one or more power-transfer path segments, and a power supply unit configured to output, to the at least one mobile object through the at least one power transmission coil, the suppliable power output.

The power-transfer management unit includes a first controller configured to generate power transfer information, and a second communication unit configured to communicate with the first communication unit.

One of the at least one mobile object and the power-transfer management unit includes a third controller configured to calculate, based on the remaining capacity of the battery, requested energy of the battery.

The power transfer information is information used by the first control unit for controlling travel and the reception of the power of the at least one mobile object. The power transfer information includes a first traveling speed for a predetermined route that includes at least one selected power-transfer path segment included in the one or more power-transfer path segments, or a combination of at least one selected non-power transfer path segment included in the one or more non-power transfer path segments and the at least one selected power-transfer path segment.

The at least one mobile object, which travels at a second traveling speed on the at least one non-power transfer path segment, is controlled to travel at the first traveling speed on the at least one power-transfer path segment.

The first controller is configured to calculate, as the first traveling speed, a third traveling speed required to charge the battery of the at least one mobile object traveling on the route up to the requested energy in accordance with available power information and the requested energy, the available power information being predetermined related to a power delivery capability of the at least one power-transfer path segment. The first controller is configured to transmit, through the second communication unit, the third traveling speed to the at least one mobile object.

In the power reception apparatus according to the third aspect, the at least one mobile object is configured to travel along the route at the third traveling speed that reflects changes in the requested energy of the battery and in the available power information. The available power information includes, for example, the suppliable power output and the length of the at least one selected power-transfer path segment, so that electric power received by the at least one mobile object depends on its traveling speed.

Accordingly, the at least one mobile object, which is configured to travel along the route at the third traveling speed, receives the requested energy corresponding to the changes in the remaining capacity of the battery and charges the battery based on the received requested energy. The power reception apparatus of the third aspect therefore makes it possible to prevent stoppage of the at least one mobile object due to shortage of the remaining capacity, thus preventing reduction in the operating rate of the at least one mobile object.


BRIEF DESCRIPTION OF THE DRAWINGS

Other aspects of the present disclosure will become apparent from the following description of embodiments with reference to the accompanying drawings in which:

Fig. 1 is an explanatory diagram illustrating a schematic configuration of a wireless power transfer system according to a first embodiment;
Fig. 2 is a block diagram illustrating a configuration of each of a mobile object and a power transmission apparatus illustrated in Fig. 1;
Fig. 3 is a block diagram illustrating a functional configuration of a power-transfer management unit illustrated in Fig. 1;
Fig. 4 is a flowchart illustrating a control routine when the mobile object travels on one power-transfer path segment;

Fig. 5 is a flowchart illustrating a control routine when the mobile object travels on a plurality of power-transfer path segments;

Fig. 6 is a flowchart illustrating a control routine when the mobile object travels on the same power-transfer path segment;

Fig. 7 is a flowchart illustrating a control routine for stopping power reception of the mobile object;

Fig. 8 is a schematic diagram illustrating a schematic configuration of a wireless power transfer system according to the second embodiment;

Fig. 9 is a block diagram illustrating a functional configuration of a power-transfer management unit according to the second embodiment;

Fig. 10 is a block diagram illustrating configurations of the mobile object and the power transmission apparatus according to the second embodiment;

Fig. 11 is a flowchart illustrating a control routine for route determination based on predicted charging time and an SOC;

Fig. 12 is a flowchart illustrating a control routine for selecting between stationary charging and in-motion charging;

Fig. 13 is a schematic diagram illustrating a configuration of a wireless power transfer system according to the third embodiment;

Fig. 14 is a block diagram illustrating configurations of the mobile object and the power transmission apparatus according to the third embodiment;

Fig. 15 is a block diagram illustrating a functional configuration of a power-transfer management unit according to the third embodiment;

Fig. 16 is a schematic diagram illustrating a functional configuration of a process-management unit;

Fig. 17 is a flowchart illustrating a control routine for wireless power transfer according to the third embodiment;

Fig. 18 is a flowchart illustrating a control routine for changing a traveling speed on a non-power transfer path segment;

Fig. 19 is a schematic diagram illustrating a configuration of a wireless power transfer system according to the fourth embodiment;

Fig. 20 is a schematic diagram illustrating a functional configuration of a power transfer management unit according to the fourth embodiment;

Fig. 21 is a flowchart illustrating a control routine for wireless power transfer system according to the fourth embodiment;

Fig. 22 is a schematic diagram illustrating control intervals according to the fourth embodiment;

Fig. 23 is a flowchart illustrating a control routine according to the fifth embodiment;

Fig. 24 is a flowchart illustrating a control routine according to the sixth embodiment;

Fig. 25 is a schematic diagram illustrating control intervals according to the seventh embodiment;

Fig. 26 is a schematic diagram illustrating a method for calculating requested energy according to the eighth embodiment;

Fig. 27 is a schematic diagram illustrating a configuration of a wireless power transfer system according to the tenth embodiment;

Fig. 28 is a block diagram illustrating a functional configuration of a process management unit according to the tenth embodiment;

Fig. 29 is a table illustrating items of available power information according to the tenth embodiment; and

Fig. 30 is a schematic diagram illustrating a configuration of a wireless power transfer system according to the eleventh embodiment.

DETAILED DESCRIPTION OF EMBODIMENTS

First embodiment

*Configuration of wireless power transfer system*

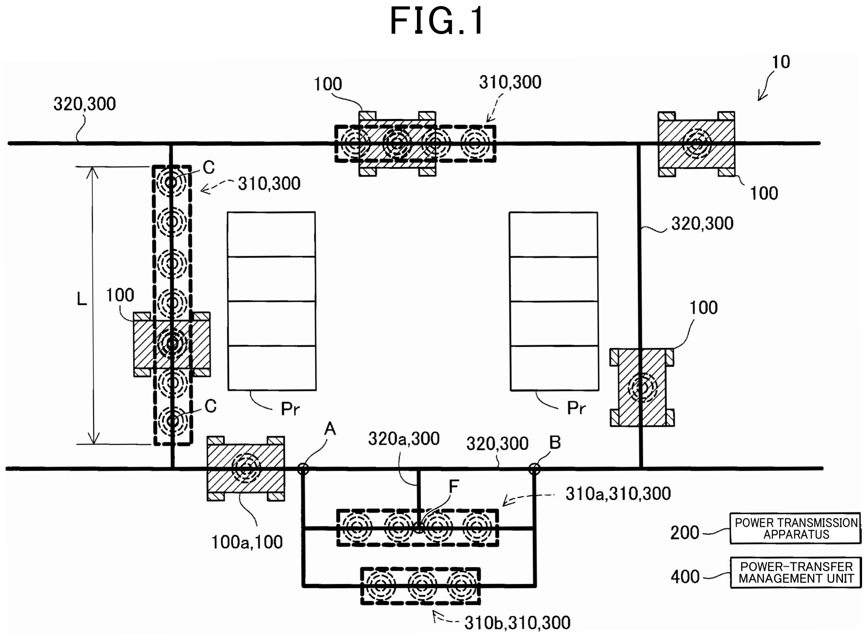

A wireless power transfer system 10 according to the first embodiment illustrated in Fig. 1 is configured to performs wireless power transfer to one or more mobile objects 100. The wireless power transfer system 10 is configured to perform, for example, wireless power transfer to one or more automated guided vehicles as the one or more mobile objects 100 that convey one or more products Pr in a logistics warehouse as illustrated in Fig. 1. The wireless power transfer system 10 includes the one or more mobile objects 100, a power transmission apparatus 200, traveling-path segments 300, and a power-transfer management unit 400.

The one or more traveling-path segments 300 refer to at least a part of a course along which the mobile objects 100 can travel. The course is constituted by one or more power-transfer path segments 310 and one or more non-power transfer path segments 320 arranged along the course.

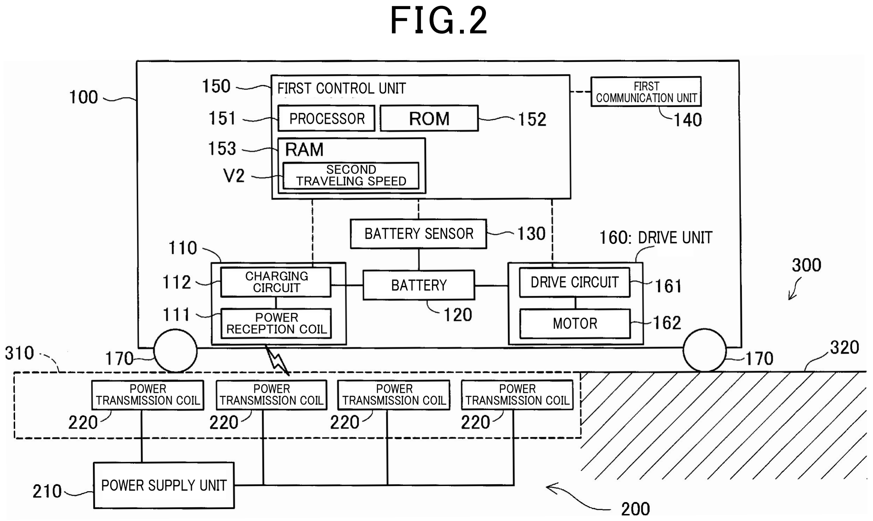

The power transmission apparatus 200 illustrated in Fig. 2 is configured to perform transmission of electric power for power transfer to the one or more mobile objects 100. In particular, the power transmission apparatus 200 is configured to perform wireless power transfer to the one or more mobile objects 200 each equipped with a power reception coil 111 through one or more power transmission coils 220 laid in at least one power-transfer path segment 310 that constitutes a part of a traveling-path segment 300.

At least one of the one or more power transmission coils 220 and the power reception coil 111 perform wireless power transfer by magnetic resonant coupling therebetween. The power transmission apparatus 200 includes the one or more transmission coils 220 and a power supply unit 210. The traveling-path segments 300 and the mobile objects 100 will be described later in detail.

The power supply unit 210 is configured to supply suppliable power output P to at least one mobile object 100 traveling on the at least one power-transfer path segment 310. The power supply unit 210 is configured to transmit, to the at least one mobile object 100, the suppliable power output P as power required to charge a battery 120 of the at least one mobile object 100. The power supply unit 210 is connected to the one or more transmission coils 220.

The "suppliable power output P" is output power that is suppliable by the power supply unit 210 as power to be transferred. The wireless power transfer system 10 is configured to perform, as described above, wireless power transfer through magnetic resonant coupling between at least one power transmission coil 220 of the power transmission apparatus 200 and the power reception coil 111 of a mobile object 100. The power supplied from the at least one power transmission coil 220 to the power reception coil 111 of at least one mobile object 100 varies with a relative position between the at least one power transmission coil 220 and the at least one mobile object 100.

The suppliable power output P of the at least one power-transfer path segment 310 is an average of values of power supplied from the power transmission apparatus 200 to the at least one mobile object 100 at respective predetermined portions of the at least one power-transfer path segment 310. The suppliable power output P of the at least one power-transfer path segment 310 is predetermined and information indicative of the suppliable power output P of the at least one power-transfer path segment 310 is stored in a RAM 413 of the power-transfer management unit 400 before wireless power transfer is performed.

The power supply unit 210 is comprised of, for example, a commercial alternating-current (AC) power source, a rectifier circuit, and an inverter. The commercial AC power source is electrically connected to the rectifier circuit. The rectifier circuit is electrically connected to the inverter. The commercial AC power source outputs AC power as the suppliable power output P for charging the battery 120 to the rectifier circuit. The rectifier circuit converts the received AC power into direct-current (DC) power. The inverter converts the DC power output from the rectifier circuit into AC power having a frequency required for power transmission by the one or more transmission coils 220.

Each power transmission coil 220 transmits, to the power reception coil 111, power supplied from the power supply unit 210. Each power transmission coil 220 constitutes a resonant circuit including a capacitor. Each power transmission coil 220 is a resonant circuit designed to have a resonant frequency of 85 kHz in a state magnetically coupled to the reception coil 111.

Each power transmission coil 220 receives 85-kHz AC power from the inverter connected thereto and generates an AC magnetic field.

The reception coil 111 described later is also a resonant circuit having the same resonant frequency as the transmission coil 220 in a state magnetically coupled to at least one transmission coil 220. The reception coil 111 is configured to resonate with the AC magnetic field generated by at least one power transmission coil 220 to accordingly receive the suppliable power output P from the at least one power transmission coil 220. The power transmission coils 220 are provided in a predetermined section of the at least one power-transfer path segment 310. The layout of the one or more power transmission coils 220 will be described in the description of the at least one power-transfer path segment 310.

The traveling-path segments 300 are a route on which the one or more mobile objects 100 can travel. If the one or more mobile objects 100 are automated guided vehicles (AGVs), the traveling-path segments 300 are, more specifically, work routes for the AGVs.

If an optical-guided AGV is used as each mobile object 100, the traveling-path segments 300 are defined by guidance tapes laid on the floor. The route constituted by the guidance tapes is illustrated as an example of a traveling-path segment 300 in Fig. 1. Each traveling-path segment 300 is comprised of the one or more power-transfer path segments 310 that perform power transfer and one or more non-power transfer path segments 320 other than the power-transfer path segments 310.

The wireless power transfer system 10 is configured to perform, based on power supplied from the power transmission apparatus 200, wireless power transfer to at least one mobile object 100 that travels on the power-transfer path segment 310. That is, the one or more power transmission coils 220 are provided on the at least one power-transfer path segment 310. The one or more transmission coils 220 are each disposed so that its center C lies on a corresponding guidance tape, as illustrated at the left middle portion of Fig. 1. The at least one power-transfer path segment 310 serves as a portion of a traveling-path segment 300 on which the power transmission coils 220 are disposed.

Each power-transfer path segment 310 is defined as a corresponding portion of a traveling-path route 300 in which the power transmission coils 220 are disposed at equal intervals on a predetermined portion of a corresponding guidance tape laid on the corresponding portion of the traveling-path segment 300. For each portion of a traveling-path segment 300, the outermost power transmission coils arranged at either end of the power transmission cols 220 have a route connecting therebetween, which has a length L, and the route having the length L of the at least one power-transfer path segment 310 is defined as the corresponding power-transfer path segment 310. More specifically, the length L of each power-transfer path segment 310 of any traveling-path segment 310 denotes the length of the route connecting between power-transfer ranges of the respective outermost power transmission coils thereof along the corresponding portion of the corresponding traveling-path segment 300. In Fig. 1, the power-transfer path segments 310 are provided, each of which is partitioned by broken lines for ease of understanding of the section.

That is, the power-transfer path segments 310 are provided in each traveling-path segment 300. Each power-transfer path segment 310 has the length L. The length L of each power-transfer path segment 310 is set depending on the number of the power transmission coils 220, the intervals between the power transmission coils 220; the number of the power transmission coils 220, the intervals between the power transmission coils 220 are determined based on the area where the power transmission coils 220 can be laid and the traveling speed of the mobile object 100. The length L of each power transmission path segment 310 is previously determined and is stored in the RAM 413 of the power-transfer management unit 400 before wireless power transfer is performed.

For each power-transfer path segment 310, a speed band Vb that limits a traveling speed of the mobile objects 100 are previously set. The speed band Vb for each power-transfer path segment 310 is stored in the RAM 413 before wireless power transfer is performed.

Each non-power transfer path segment 320 is defined as a corresponding portion of any traveling-path segment 300 other than the power-transfer path segments 310. Each non-power transfer path segment 320 may not necessarily be a section that receives no power transfer from the power transmission apparatus 200. At least one non-power transfer path segment 320 located near a power-transfer path segment 310 may fall within a transferable range of the power-transfer path segment 310 due to AC magnetic field leakage from the power-transfer path segment 310.

The mobile object 100 travels on one or more traveling-path segments 300.

More specifically, while traveling on a non-power transfer path segment 320 at a predetermined second traveling speed V2, the mobile object 100 is configured to enter a selected power-transfer path segment 310 and travel thereon upon receiving an instruction based on power transfer information Dc.

The mobile object 100 is configured to travel along a predetermined route constituted by one or more traveling-path segments 300 when receiving no route instruction R as the power transfer information Dc from the power-transfer management unit 400, and travel along a power-transfer route combining the power-transfer path segments 310 and the non-power transfer path segments 320 upon receiving a route instruction R from the power-transfer management unit 400 described later.

The "second traveling speed V2" is a speed set for the mobile objects 100 to travel on the non-power transfer path segments 320. Each mobile object 100 travels at the second traveling speed V2 on the non-power transfer path segments 320 when receiving no commands or no instructions regarding speed of the corresponding mobile object 100. The second traveling speed V2 is stored in a RAM 153 of each mobile object 100 before wireless power transfer is performed. The second traveling speed V2 will also be referred to as a standard speed V2.

The traveling speed of each mobile object 100 on each power-transfer path segment 310 will be referred to as a first traveling speed V1. The power-transfer management unit 400 is configured to set the first traveling speed V1 to a calculated third traveling speed V_com described later. The third traveling speed V_com for each mobile object 100 may be controlled to vary depending on one of the power-transfer path segments 310 on which the corresponding mobile object 100 is traveling.

Each mobile object 100 is, for example, an AGV, which will also be referred to as an unmanned guided vehicle. Each mobile object 100 is, as illustrated in Fig. 1, configured as an optical-guidance AGV that can travel along each of the guidance tapes that constitute one or more traveling-path segments 300. Each mobile object 100 is also configured to perform charging while traveling on the power-transfer path segment 310.

Each mobile object 100 includes, as illustrated in Fig. 2, a power reception unit 110, a battery 120, a battery sensor 130, a first communication unit 140, a first control unit 150, a drive unit 160, and wheels 170. The configuration consisting of the power reception unit 110, the battery 120, the battery sensor 130, the first communication unit 140, and the first control unit 150 will also be referred to as a power reception apparatus.

The power reception unit 110 receives power from the wireless power transfer system 10. The power reception unit 110 wirelessly receives the suppliable power output P transmitted from the transmission coils 220 of one of the power-transfer path segments 310 for charging the battery 120, and charges the battery 120 based on the received suppliable power output P. The power reception unit 110 includes a reception coil 111 and a charging circuit 112.

The reception coil 111 is configured to receive the suppliable power output P from the transmission coils 220 of one of the power-transfer path segments 310. The reception coil 111 constitutes a resonant circuit including a capacitor. The reception coil 111 is a resonant circuit designed to have a resonant frequency of 85 kHz in a state magnetically coupled to at least one of the transmission coils 220, and receives an AC magnetic field from the at least one of the transmission coils 220. The reception coil 111 is connected to the charging circuit 112 and outputs, to the charging circuit 112, AC power generated by an induced electromotive force caused by resonating with the AC magnetic field.

The reception coil 111 is disposed at a bottom portion of the mobile object 100 and is disposed centrally in a width direction of the mobile object 100. When the mobile object 100 is traveling along the guidance tape of each power-transfer path segment 310, the reception coil 111 of the mobile object 100 is disposed to be close to the transmission coils 220 laid on the guidance tape of the corresponding power-transfer path segment 310. In other words, when the mobile object 100 is traveling along the guidance tape of each power-transfer path segment 310, the reception coil 111 of the mobile object 100 is disposed to at least partly face at least one of the transmission coils 220 laid on the guidance tape of the corresponding power-transfer path segment 310.

The charging circuit 112 is configured to charge the battery 120 based on AC power received from the reception coil 111. The charging circuit 112 is electrically connected to the battery 120 and the reception coil 111. The charging circuit 112 is comprised of, for example, a DC/DC converter and a rectifier circuit.

The rectifier circuit of the charging circuit 112 is configured to convert the AC power supplied from the reception coil 111 into DC power, and the DC/DC converter of the charging circuit 112 is configured to convert the DC voltage to a charging voltage for the battery 120, thus outputting the charging voltage to the battery 120.

The charging circuit 112 is also configured to stop the supply of power to the battery 120. The charging circuit 112 is connected to the first control unit 150 via a communication line. The charging circuit 112 is configured to interrupt electrical connection to the battery 120 based on an instruction sent from the first control unit 150 to accordingly stop the supply of power to the battery 120. For example, the charging circuit 112 is capable of deactivating the DC/DC converter to accordingly stop power output to the battery 120. The specific method of stopping power supply depends on the resonant compensation topology (series- or parallel-compensated) of the transmission/receiving coil network, and details of which are not described herein.

The battery 120 is chargeable with the predetermined suppliable power output P when the mobile object 100 is traveling on each power transmission line 310. The battery 120 is a secondary battery, such as a lithium-ion battery. DC power supplied from the charging circuit 112 is received by the battery 120, so that power required for the mobile object 100 to travel is charged in the battery 120.

The drive unit 160 includes a drive circuit 161 and motors 162. The drive circuit 161 is electrically connected to the battery 120 and the motors 162. The drive unit 160 is connected by a communication line to the first control unit 150 and, the drive circuit 161 is configured to drive each motor 162 based on DC power supplied from the battery 120 in response to receiving an instruction from the first control unit 150 to accordingly generate drive power for the mobile object 100.

The drive circuit 161 is comprised of an inverter and a DC/DC converter.

The inverter is configured to convert the DC power supplied from the battery 120 into AC power, and supply the AC power to each motor 162. The DC/DC converter is configured to boost a voltage of the DC power across the battery 120 to be supplied to the inverter. The drive circuit 161 is connected to the first control unit 150 and is configured to change a rotational speed of each motor 162 to change a traveling course of the mobile object 100 based on an instruction sent from the first control unit 150.

Each motor 162 is configured to be driven based on the power stored in the battery 120 as a power source to cause the mobile object 100 to travel. Each motor 162 is configured to receive, from the drive circuit 161, the corresponding AC power required for rotation thereof. The drive power generated by each motor 162 is transmitted to the corresponding one of the wheels 170 via a reduction gear and an axle. As the motor 162, an in-wheel motor provided in each wheel 170 can be used.

The motors 162 are provided independently for the wheels 170 on the right and left sides with respect to the traveling direction. The mobile object 100 is configured to change its traveling course by producing a difference between the rotational speeds of the wheels 170 on the respective sides.

The battery sensor 130 is configured to acquire a remaining capacity Wb of the battery 120 as an electric quantity. The battery sensor 130 is configured to measure and integrate the charging and discharging current over time to detect the remaining capacity Wb, expressed in Ah, of the battery 120. The battery sensor 130 is also configured to measure a terminal voltage V across the battery 120 in addition to the remaining capacity Wb.

The battery sensor 130 is connected via a communication line to the first control unit 150. The battery sensor 130 is configured to transmit the remaining capacity Wb and the terminal voltage V to the first control unit 150 each time of acquiring the remaining capacity Wb and the terminal voltage V. The remaining capacity Wb and the terminal voltage V are transmitted from the first control unit 150 to the power-transfer management unit 400. The rated capacity Wm of the battery 120 is stored in advance in the RAM 413 of the power-transfer management unit 400.

In particular, the battery sensor 130 is configured to periodically acquire the remaining capacity Wb of the mobile object 100 traveling on one or more traveling-path segments 300. That is, the battery sensor 130 is configured to be capable of acquiring the remaining capacity Wb of the mobile object 100 traveling on each power-transfer path segment 310 at predetermined first intervals, and acquiring the remaining capacity Wb of each mobile object 100 traveling on each non-power transfer path segment 320 at predetermined second intervals. For this reason, the first intervals for each power-transfer path segment 310 are set in accordance with the traveling speed of the mobile object 100 and the length L of the corresponding power-transfer path segment 310, and the second intervals for each non-power transfer path segment 320 are set in accordance with the traveling speed of the mobile object 100 and the length of the corresponding

The first communication unit 140 is configured to communicate with the power-transfer management unit 400. The first communication unit 140 is configured to perform communications of information, such as the power transfer information Dc and the remaining capacity Wb, with a second communication unit 420 of the power-transfer management unit 400. The first communication unit 140 is configured as a hardware module, which is comprised of a microcomputer and/or a wireless-communication IC, to perform wireless communications via, for example, Wi-Fi connection.

The first control unit 150 is configured to control each mobile object 100. The first control unit 150 includes a processor 151, a ROM 152, and a RAM 153. The ROM 152 is a read-only semiconductor memory that stores in advance various programs including control programs for controlling each component of the mobile object 100, which is related to wireless power transfer. The RAM 153 includes a main semiconductor memory and an auxiliary storage device, such as a hard disk or solid-state drive, and stores information necessary for controlling each mobile object 100. The first control unit 150 is configured to control each mobile object 100 based on the power transfer information Dc received from the power-transfer management unit 400.

Using the RAM 153 for storing information and the various programs stored in the ROM 152 for execution, the processor 151 is configured to implement functions, i.e., functional units. Specific descriptions of the functional units implemented by the processor 151 will be described later.

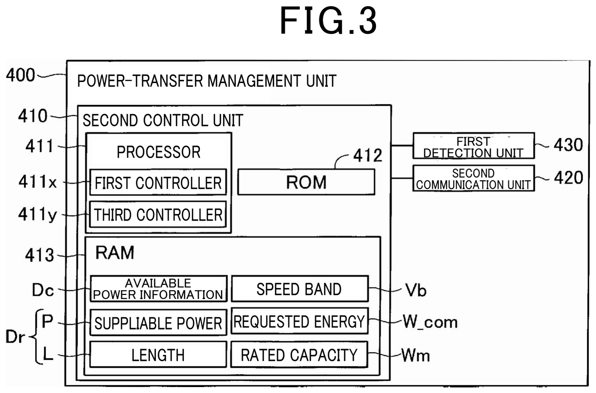

The power-transfer management unit 400 illustrated in Fig. 3 is configured to control the wireless power transfer system 10. The power-transfer management unit 400 is, for example, a general-purpose computer and includes a second control unit 410, the second communication unit 420, and a first detection unit 430.

The second control unit 410 is configured to control operations of the wireless power transfer system 10 related to wireless power transfer to each mobile object 100.

Specifically, the second control unit 410 includes a processor 411, a ROM 412, and the RAM 413.

The ROM 412 is a read-only semiconductor memory that stores in advance various programs including control programs for controlling each component of the wireless power transfer system 10, which is related to wireless power transfer. The RAM 413 includes a main semiconductor memory and an auxiliary storage device, such as a hard disk or solid-state drive, and stores information necessary for controlling each mobile object 100.

Using the RAM 413 for storing information and the various programs stored in the ROM 412 for execution, the processor 411 is configured to implement functions, i.e., functional units that include a first controller 411x and a third controller 411y. The first controller 411x is configured to generate the power transfer information Dc required for the mobile object 100 to travel, and the third controller 411y is configured to calculate requested energy W_com of the battery 120 of the mobile object 100 based on the remaining capacity Wb. The specific functions of the processor 411 will be described later.

The "power transfer information Dc" denotes information used by the first control unit 150 for controlling travel and power receivable, i.e., available, by the mobile object 100 on at least one of the power-transfer path segments 310. The power transfer information Dc includes at least one of (i) a route instruction R and (ii) the first traveling speed V1 on each of the power-transfer path segments 310. The power transfer information Dc further includes a stop instruction S for stopping power reception that is carried out by the power reception unit 110.

The route instruction R denotes a directive included in the power-supply control information Dc that (i) selects, from among multiple candidate power-transfer path segments 310, the segment to which a mobile object 100 is to proceed next, and/or (ii) specifies a composite path including one or more non-power path segments 320 and one or more power-transfer path segments 310 to be traversed thereafter.

The first detection unit 430 is configured to detect, for each power-transfer path segment 310, the number of mobile objects 100 and the first traveling speed V1 of each mobile object 100 traveling on the corresponding power-transfer path segment 310. The first detection unit 430 is comprised of cameras and an image analysis device and functions to detect the number of mobile objects 100 and the first traveling speed V1 on each power-transfer path segment 310.

For example, the cameras are provided for the respective power-transfer path segments 310. The first detection unit 430 is configured to acquire, from the camera provided for each power-transfer path segment 310, captured images of the mobile objects 100 traveling on the corresponding power-transfer path segment 310. Then, the image analysis device is configured to analyze, among the images for each power-transfer path segment 310, a temporal variation in pixel values of the images to accordingly detect the number of mobile objects 100 traveling on the corresponding power-transfer path segment 310.

For example, the image analysis device is configured to store in advance a pixel range corresponding to the size of the mobile object 100, and analyze a temporal variation in pixel values of the images for each power-transfer path segment 310 in comparison with the pixel range corresponding to the size of the mobile object 100 to accordingly detect one or more mobile objects 100 traveling on the corresponding power-transfer path segment 310. The first detection unit 430 is connected to the second control unit 410 of the power-transfer management unit 400 via a communication line, and is configured to notify the second control unit 410 of the number of mobile objects 100 on each power-transfer path segment 310 whenever it changes.

The second communication unit 420 is configured to communicate with the first communication unit 140 of each mobile object 100. The second communication unit 420 is configured to perform communications of information, such as the power transfer information Dc and the remaining capacity Wb , with the first communication unit 140. Like the first communication unit 140, the second communication unit 420 is configured as a hardware module, which is comprised of a microcomputer and/or a wireless-communication IC, to perform wireless communications via, for example, Wi-Fi connection.

*Power-transfer method on one power transfer path*

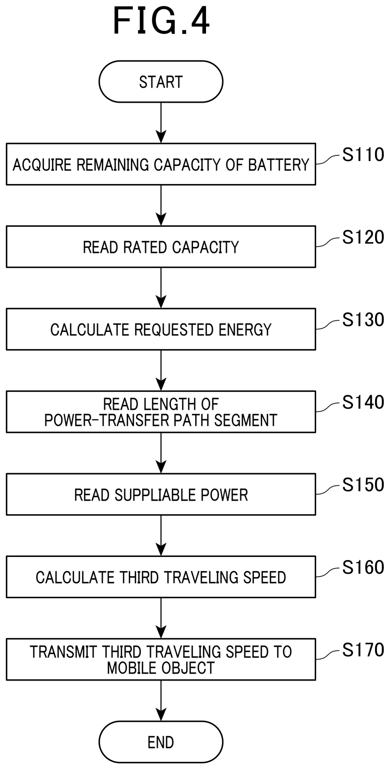

The following describes a control routine with reference to Fig. 4 when the mobile object 100 enters one target power-transfer path segment 310 from a non-power transfer path segment 320. The mobile object 100 is traveling on the non-power transfer path segment 320 before entering the target power-transfer path segment 310. The processor 411 is programmed to start the control routine when acquiring the remaining capacity Wb of the battery 120 and the terminal voltage V across the battery 120 from the mobile object 100.

When starting the control routine, the processor 411 of the power-transfer management unit 400 acquires the remaining capacity Wb of the battery 120 and the terminal voltage V across the battery 120, which are acquired by the battery sensor 130 in step S110 of Fig. 4. Specifically, the processor 411 receives the remaining capacity Wb and the terminal voltage V sent from the processor 151 of the mobile object 100 via the first and second communication units 140 and 420.

The processor 411 reads, from the RAM 413, the rated capacity Wm of the battery 120 in step S120 of Fig. 4.

The processor 411 calculates the requested energy W_com of the battery 120 based on the remaining capacity Wb received from the mobile object 100 in step S130 of Fig. 4. Specifically, the processor 411 calculates the requested energy W_com in watt-seconds (Ws) based on the remaining capacity Wb in ampere-hours (Ah), the rated capacity Wm in Ah, and the terminal voltage V in volts (V) across the battery 120 in accordance with the following formula (1):

$$W\_com = (Wm \times 0.8 - Wb) \times V \dots (1)$$

The processor 411 stores the requested energy W_com in the RAM 413 in step S130. That is, the processor 411 serves as the functional block of the third controller 411y to calculate the requested energy W_com. In the above formula, multiplying the rated capacity Wm by 0.8 calculates the requested energy W_com. This enables the battery 120 to be charged to a target capacity of 80% of its full charge (maximum capacity), and the value 0.8 can be changed is changeable in operation.

The processor 411 sets the requested energy W_com to zero while the right-hand side of the formula (1) becomes negative, for example when the remaining capacity Wb exceeds the target capacity of 80%.

Specifically, the third controller 411y calculates the requested energy W_com based on the difference between the remaining capacity Wb and a first reference capacity C1 based on the rated capacity Wm of the battery 120. The first reference capacity C1 in the formula (1) denotes Wm $\times$ 0.8.

The processor 411 reads, from the RAM 413, the length L of the target power-transfer path segment 310 stored in advance in the RAM 413 in step S140 of Fig. 4.

The processor 411 reads, from the RAM 413, the suppliable power output P of the target power-transfer path segment 310 stored in advance in the RAM 413 in step S150 of Fig. 4.

The processor 411 calculates, based on the length L of the target power-transfer path segment 310, the suppliable power output P, and the requested energy W_com received from the third controller 411y, a third traveling speed V_com required to charge the mobile object 110 up to the requested energy W_com during traveling of the mobile object 100 over the target power-transfer path segment 310 having the length L in step S160 of Fig. 4. Specifically, the processor 411 calculates the third traveling speed V_com in accordance with a formula (2) using the length L in meters, the requested energy W_com in watt-seconds, and the suppliable power output P in watts:

$$V\_com = L / (W\_com / P) \dots (2)$$

The processor 411 stores the third traveling speed V_com for the mobile object 100 in the RAM 413 in step S160. If the target power-transfer path segment 310 has only one power transmission coil 220, the length L of the target power-transfer path segment 310 is short. In this case, the third traveling speed V_com approaches zero when the requested energy W_com is large, resulting in the mobile object 100 being in a substantially stopped state. In this case, the third traveling speed V_com may be regarded to be zero when it falls below a predetermined threshold, so that wireless power transfer for the mobile object 100 traveling at the third traveling speed V_com may be handled as stationary charging (charging in a stopped state of the mobile object 100).

The processor 411 transmits, via the second communication unit 420, the power transfer information Dc that sets the first traveling speed V1 to the calculated third traveling speed V_com in step S170.

The processor 151 of the mobile object 100 sets the first traveling speed V1 to the third traveling speed V_com based on the received power transfer information Dc and, after entering the target power-transfer path segment 310, is controlled to travel on the target power-transfer path segment 310 at the third traveling speed V_com.

In other words, the processor 411 serves as the functional block of the first controller 411x to calculate the third traveling speed V_com in step S160.

After the operation in step S170, the processor 411 terminates the control routine.

The wireless power transfer system 100 configured as set forth above enables the mobile object 100 to change the first traveling speed V1 on a target power-transfer path segment 310 in accordance with the requested energy W_com of the battery 120, the length L of the target power-transfer path segment 310, and the suppliable power output P of the target power-transfer path segment 310. The power transmission coils 220 mounted to the target power-transfer path segment 310 output the predetermined suppliable power output P, and the suppliable power output P supplied to the mobile object 100 depends on the first traveling speed V1 of the mobile object 100 traveling on the target power-transfer path segment 310.

That is, the wireless power transfer system 10 is configured to change the first traveling speed V1 of the mobile object 100 to the third traveling speed V_com to accordingly charge the mobile object 100 to satisfy the requested energy W_com while the mobile object 100 is traveling on the target power-transfer path segment 310. This therefore makes it possible to charge the mobile object 100 without stopping the mobile object 100, thus preventing the operating ratio of the mobile object 100 from decreasing.

The wireless power transfer system 10 configured as set forth above calculates the requested energy W_com as energy consumed for travel of the mobile object 100 with reference to the first reference capacity C1. Additionally, the wireless power transfer system 100 causes the mobile object 100 to travel such that the requested energy W_com is charged to the battery 120. This configuration of the wireless power transfer system 10 makes it possible to prevent a shortage in the remaining capacity Wb of the battery 120 even when the mobile object 100 is equipped with the battery 120 having a relatively small capacity.

*Power-transfer method on selected one of power transfer paths*

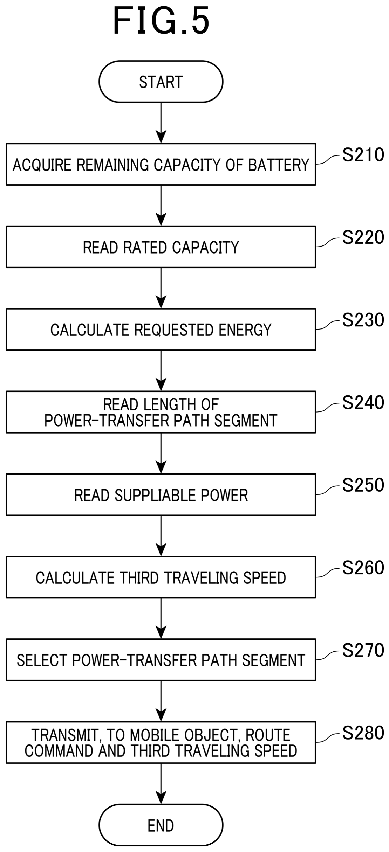

The following describes a control routine with reference to Fig. 5 when each mobile object 100 enters a selected one of the power-transfer path segments 310 from a non-power transfer path segment 320. A selected traveling-path segment 300 includes at least one section branched into plural power-transfer path segments 310.

For example, as illustrated in Fig. 1, the selected traveling-path segment 300 includes plural sections parallel to one another between branch points A and B thereon (see the lower center of Fig. 1), and at least two power-transfer path segments 310 are provided on the corresponding at least two sections of the plural sections.

The processor 411 is programmed to start the control routine acquiring, while each mobile object 100 travels on a non-power transfer path segment 320 located in front of the branch point A and connected to the branch point A toward the branch point B through one of the parallel sections, the remaining capacity Wb of the battery 120 and the terminal voltage V across the battery 120 from the mobile object 100.

The operations in steps S210 to S220 of Fig. 5 are substantially identical to those in steps S110 to S220 of Fig. 4 and therefore descriptions of which are omitted.

Following the operation in step S230, the processor 411 reads, from the RAM 413, the length L of each of the branched power-transfer path segments 310 stored in advance in the RAM 413 in step S240 of Fig. 5. Specifically, the processor 411 reads, from the RAM 413, the respective lengths L for the branched power-transfer path segments 310 (each path segment being denoted 310_n with length L_n).

The processor 411 reads, for each power-transfer path segment 310_n, the corresponding suppliable power output P_n from the RAM 413 in step S250.

The processor 411 calculates, for each power-transfer path segment 310_n, the third traveling speed V_com_n based on the corresponding length L_n, the corresponding suppliable power output P_n, and the corresponding requested energy W_com received from the third controller 411y in step S260.

Next, the processor 411 selects, for each power-transfer path segment 310_n, a corresponding speed band Vb_n from the speed bands Vb stored in the RAM 413 in step S270.

Then, the processor 411 selects, for the mobile object 100, one of the power-transfer path segments 310_n, the corresponding speed band Vb_n of which includes the third traveling speed V_com_n in step S270. Alternatively, the processor 411 selects, for the mobile object 100, one of the power-transfer path segments 310_n; the median of the corresponding speed band Vb_n of the selected power-transfer path segment 310_n is the closest to the third traveling speed V_com_n in step S270.

In step S270, the processor 411 determines the route instruction R instructing the mobile object 100 to travel toward the selected power-transfer path segment 310_n.

Following the operation in step S270, the processor 411 transmits, via the second communication unit 420, the power transfer information Dc to the mobile object 100 in step S280; the power transfer information Dc includes the route instruction R and sets the first traveling speed V1 to the third traveling speed V_com_n.

The processor 151 of the mobile object 100 travels toward the selected power-transfer path segment 310_n having the speed band Vb_n corresponding to the third traveling speed V_com_n based on the power transfer information Dc and, after entering the selected power-transfer path segment 310_n, is controlled to travel on the selected power-transfer path segment 310_n at the third traveling speed V_com_n. In other words, the processor 411 serves as the functional block of the first controller 411x to generate the route instruction R in step S270.

After the operation in step S280, the processor 411 terminates the control routine.

The wireless power transfer system 10 configured as set forth above makes it possible to select one of the power-transfer path segments 310 for each mobile object 100 in accordance with the third traveling speeds V_com_n of the corresponding mobile object 100. That is, the wireless power transfer system 10 enables the mobile objects 100 having different third traveling speeds V_com_n to travel on different power-transfer path segments 310, thereby alleviating congestion of the mobile objects 100 on the power-transfer path segments 310.

*Power-transfer method on the same power transfer paths*

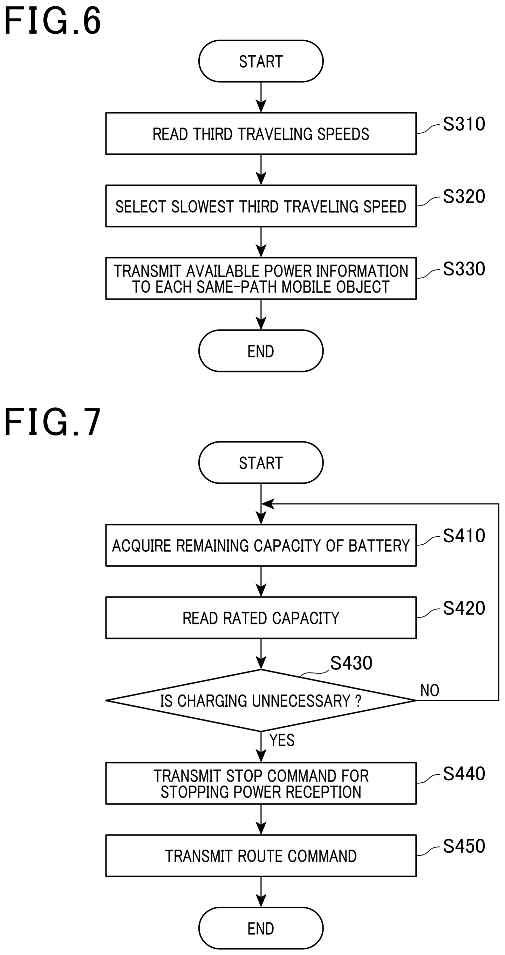

The following describes a control routine with reference to Fig. 6 when plural mobile objects 100 are traveling on the same power transfer line 310. The processor 411 of the power-transfer management unit 400 is programmed to start the control routine when the number of mobile objects 100 on the same power transfer line 310 is changed in response to a notification sent from the first detection unit 430.

When starting the control routine, the processor 411 reads, from the RAM 413, the third traveling speeds V_com of the respective mobile objects 100 traveling on the same power-transfer path segment 310 in step S310 of Fig. 6. The third traveling speeds V_com are stored by the operation in step S160 of Fig. 4. The mobile objects 100 traveling on the same power-transfer path segment 310 will be referred to as same-path mobile objects 100.

Next, the processor 411 selects the slowest third traveling speed, which will be referred to as V_com_m, from among the third traveling speeds V_com of the respective same-path mobile objects 100 in step S320 of Fig. 6.

Following the operation in step S320, the processor 411 transmits the power transfer information Dc including the slowest third traveling speed V_com_m to each of the same-path mobile objects 100 in step S330 of Fig. 6. This enables each of the same-path mobile objects 100 to travel on the same power-transfer path segment 310 at the same slowest third traveling speed V_com_m.

In other words, the processor 411 serves as the functional block of the first controller 411x to calculate the third traveling speeds V_com.

After the operation in step S330, the processor 411 terminates the control routine.

Specifically, when the number of mobile objects 100 traveling on the same power-transfer path segment 310 is changed, the second control unit 410 is configured to change the third traveling speed V_com of each of the same-path mobile objects 100 to the slowest third traveling speed V_com_m.

This configuration of the wireless power transfer system 10 enables the same-path mobile objects 100 having different third traveling speeds V_com to travel at a speed in line with the mobile object 100 having the slowest third traveling speed V_com_m. This therefore enables plural mobile objects 100 having different third traveling speeds V_com to travel on the same power-transfer path segment 310. Each of the mobile objects 100 other than the mobile object 100 having the slowest third traveling speed V_com_m may be charged to reach its target capacity before the end of the same power-transfer path segment 310 because each of the other mobile objects 100 follows the slowest third traveling speed V_com_m of the slowest mobile object 100. If each of the other mobile objects 100 has the target capacity of 80%, each of the other mobile objects 100 may be charged beyond the target capacity of 80%. However, if at least one of the other mobile objects 100 has the target capacity of 100%, stopping wireless power transfer to the at least one of the other mobile objects 100 is required to avoid overcharging.

*Stopping power reception of mobile object on power transfer path*

The following describes a control routine with reference to Fig. 7 when the mobile object 100 travels on a power-transfer path segment 310 with the battery 120 being sufficiently charged. The processor 411 of the power-transfer management unit 400 is programmed to start the control routine when acquiring the remaining capacity Wb of the battery 120 while the mobile object 100 is traveling on the power-transfer path segment 310.

The operations in steps S410 and S420 of Fig. 7 are substantially identical to those in steps S110 and S120 of Fig. 4 and therefore descriptions of which are omitted.

Following the operation in step S420, the processor 411 compares the remaining capacity Wb of the mobile object 100 with predetermined reference energy Wa to accordingly determine whether the remaining capacity Wb of the mobile object 100 exceeds the predetermined reference energy Wa in step S430.

In response to determination that the remaining capacity Wb of the mobile object 100 exceeds the predetermined reference energy Wa, the processor 411 determines that charging of the battery 120 is unnecessary (YES in step S430), the control routine proceeds to step S440. Otherwise, in response to determination that the remaining capacity Wb of the mobile object 100 does not exceed the predetermined reference energy Wa, the processor 411 determines that charging of the battery 120 is necessary (NO in step S430), the control routine returns to step S410.

In step S440, the processor 411 generates a stop instruction S for stopping power reception, and transmits the stop instruction S to the mobile object 100 as the power transfer information Dc in step S440 of Fig. 7. The processor 151 of the mobile object 100 stops power reception by the power reception unit 110 based on the power transfer information Dc. That is, the processor 411 serves as the functional block of the first controller 411x to generate the stop instruction S in step S440.

Following the operation in step S440, the processor 411 transmits the route instruction R to return from the power-transfer path segment 310 to a non-power transfer path segment 320 to the mobile object 100 as the power transfer information Dc in step S450 of Fig. 7.

For example, there may be a branch F existing on the middle of a power-transfer path segment 310a between the branching points A and B at the lower center of Fig. 1. In this example, when the mobile object 100, which has received the stop instruction S, travels on the power-transfer path segment 310a, the route instruction R received by the mobile object 100 before reaching the branch point F causes the mobile object 100 to change a traveling course to the non-power transfer path segment 320 via the non-power transfer path segment 320a. After the operation in step S450, the control routine is terminated.

During power reception of the mobile object 100 being performed on a power-transfer path segment 310, the processor 411 of the mobile object 100 is configured to instruct, to the processor 151 of the mobile object 100 to perform stopping of the power reception in response to determination that the remaining capacity Wb of the battery 120 exceeds the predetermined reference energy Wa. The processor 411 of the mobile object 100 is additionally configured to generate the route instruction R instructing the processor 411 of the mobile object 100 to travel toward any of the non-power transfer path segments 320.

The wireless power transfer system 10 configured as set forth above makes it possible to stop charging of the battery 120 in accordance with the remaining capacity Wb of the battery 120. For example, the wireless power transfer system 10 sets the reference energy Wa to be lower than the full-charge capacity of the battery 120, making is possible to prevent excessive charging of the battery 120.

The mobile object 100 is controlled to leave the power-transfer path segment 310 in accordance with the remaining capacity Wb during charging of the battery 120. The wireless power transfer system 10 therefore makes it possible to reduce the number of mobile objects 100 on the power-transfer path segments 310, thus preventing travel of the mobile objects 100 on the power-transfer path segments 310 from being hindered.

Second embodiment

*Configuration of wireless power transfer system*

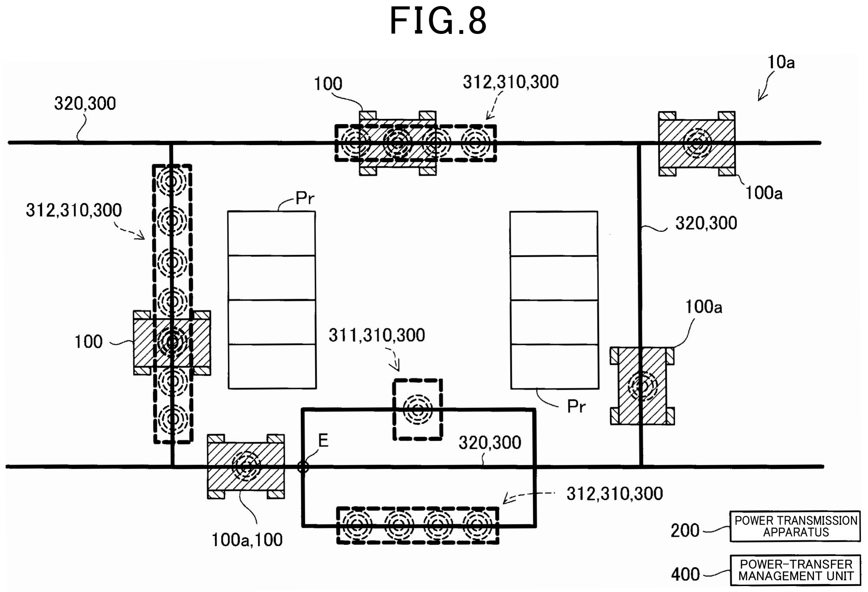

In a wireless power transfer system according to the second embodiment, the power-transfer path segments 310 include, as illustrated in Fig. 8, at least one first power-transfer path segment 311 for charging one or more mobile objects 100a in a stopped state and at least one second power-transfer path segment 312 for charging the mobile objects 100a while the mobile object 100a is traveling.

Specifically, the first power-transfer path segment 311 is, as illustrated at the lower portion of Fig. 8, a power-transfer path segment 310 on which one transmission coil 220 is provided. The second power-transfer path segment 312 is a power-transfer path segment 310 on which two or more transmission coils 220 are provided. The length L of the first power-transfer path segment 311 is defined to be zero because only one transmission coil 220 is provided. The sections of the power-transfer path segments 310 therefore include a degenerate section with L = 0.

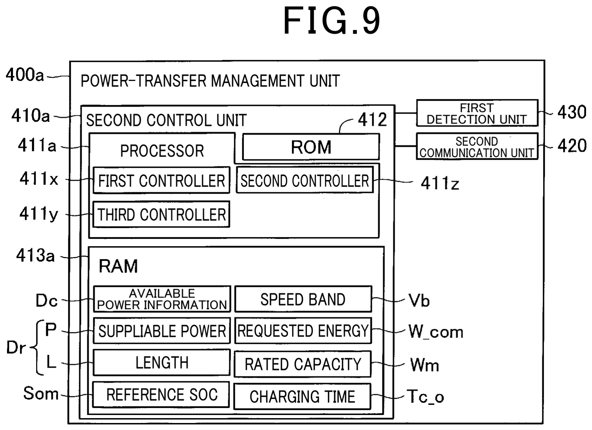

A processor 411a of a power-transfer management unit 400a according to the second embodiment includes, as illustrated in Fig. 9, a second controller 411z that generates time information T for the mobile object 100a based on the power-transfer feeding information Dc. Specific functions of the second controller 411z will be described later.

A RAM 413a of the power-transfer management unit 400a stores, before wireless power transfer is performed, a predetermined charging time Tc_o for each power-transfer path segment 310. The charging time Tc_o denotes, for example, when the mobile object 100 is an AGV, a limit time acceptable as a process delay caused by battery charging. The RAM 413a of the power-transfer management unit 400a also stores a reference state of charge (SOC) S_om described later.

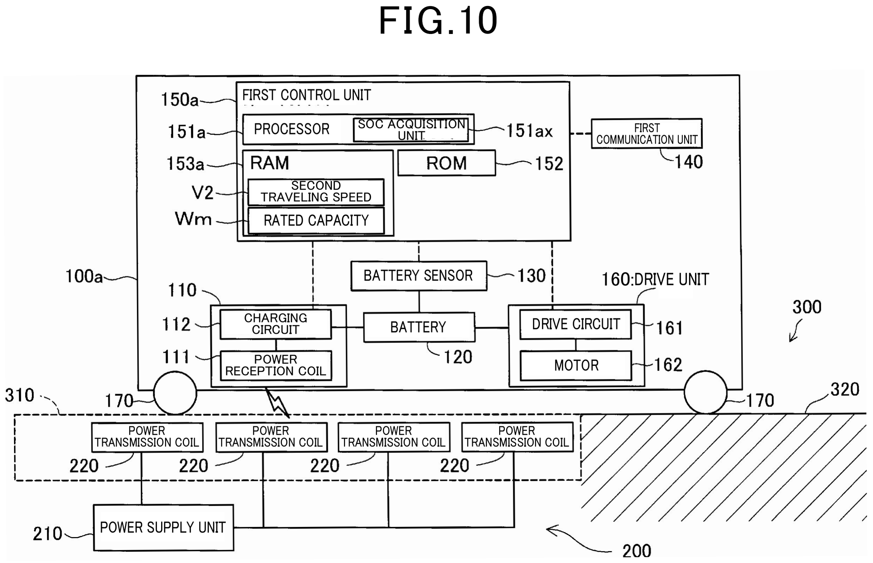

A processor 151a of the mobile object 100a illustrated in Fig. 10 includes an SOC acquisition unit 151ax that acquires a SOC S_o of the battery 120. The SOC acquisition unit 151ax calculates the SOC S_o from the ratio of the remaining capacity W_b to the rated capacity W_m of the battery 120. The RAM 153a of the mobile object 100a therefore stores the rated capacity W_m in advance. The acquisition interval of the SOC S_o is substantially the same as the acquisition interval of the remaining capacity W_b by the battery sensor 130.

The reference SOC Som is a predetermined SOC S_o used as a reference to determine whether charging is required for the battery 120. The reference SOC Som is, for example, when the mobile object 100 is an AGV, a lower limit of the SOC So that allows the AGV 100 to operate up to a predetermined operating time. The other configuration of the wireless power transfer system 10a according to the second embodiment is substantially the same as that of the wireless power transfer system 10 according to the first embodiment.

*Traveling course determination based on predicted charging time and SOC*

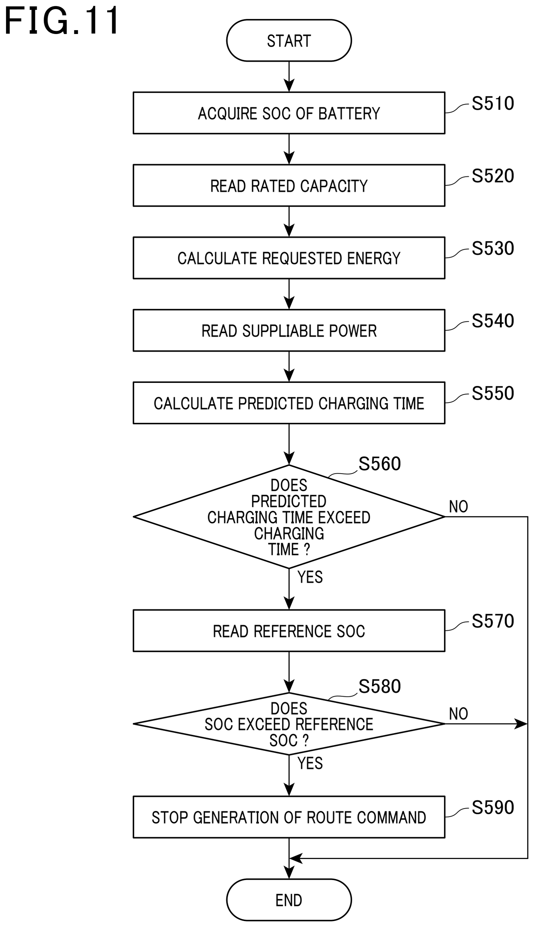

The wireless power transfer system 10a of the second embodiment performs wireless power transfer with respect to the mobile object 100 based on the SOC S_o of the battery 120 and a predicted charging time Tc as illustrated in Fig. 11. The mobile object 100a is traveling on a non-power transfer path segment 320 before generation of the power transfer information Dc as the route instruction R toward a power-transfer path segment 310. The processor 411a of the power-transfer management unit 411a is programmed to execute a control routine illustrated in Fig. 11 before execution of the control routine illustrated in Fig. 5. That is, the processor 411a of the power-transfer management unit 411a is programmed to execute the control routine under condition that no route instruction R has been generated.

The processor 411a of the power-transfer management unit 411a is programmed to start the control routine upon acquisition of the remaining capacity W_b measured by the battery sensor 130 of the mobile object 100.

The processor 411a of the power-transfer management unit 400a acquires the SOC S_o in step S510. That is, the processor 411a receives, through the first communication unit 140 and the second communication unit 420, the SOC S_o generated by the SOC acquisition unit 151ax of the mobile object 100a.

The operations in steps S520, S530, and S540 in Fig. 11 are substantially identical to those in steps S120, S130, and S150 in Fig. 4, respectively.

Following the operation in step S540, the processor 411a calculates, based on the suppliable power output P and the requested energy W_com, the predicted charging time Tc for each power-transfer path segment 310 in step S550. Specifically, the processor 411a calculates the predicted charging time Tc in accordance with the following formula (3):

$$Tc = W\_com / P \dots (3)$$

The processor 411a serves as the functional block of the second controller 411z illustrated in Fig. 9 to calculate the predicted charging time Tc is the second controller 411z.

Next, the processor 411a compares the predetermined charging time Tc_o with the predicted charging time Tc to accordingly determine whether the predicted charging time Tc exceed the predetermined charging time Tc_o in step S560.

Specifically, in response to determination that the predicted charging time Tc exceeds the predetermined charging time Tc_o (YES in step S560), the control routine proceeds to step S570. Otherwise, in response to determination that the predicted charging time Tc does not exceed the predetermined charging time Tc_o (NO in step S560), the control routine is terminated.

In step S570, the processor 411a reads the reference SOC Som from the RAM 413.

Following the operation in step S570, the processor 411a compares the SOC So with the predetermined reference SOC Som to determine whether the SOC So exceeds the predetermined reference SOC Som in step S580.

In response to determination that the SOC So is lower than or equal to the predetermined reference SOC Som (NO in step S580), the processor 411a terminates the control routine.

Otherwise, in response to determination that the SOC So exceeds the predetermined reference SOC Som (YES in step S580), the control routine proceeds to step S590.

In response to the negative determination in step S580, the processor 411a generates a route instruction R when the remaining capacity Wb is next acquired. That is, in response to reception of the route instruction R and the power supply information Dc of the third traveling speed V_com, the mobile object 100a is charged while traveling on the power transmission path 310.

In step S590, the processor 411a stops generation of the power transfer information Dc. That is, the processor 411a does not transmit the third traveling speed V_com or the route instruction R to the mobile object 100a.

More specifically, the processor 411a stops generation of the power transfer information Dc for a certain time period. The mobile object 100a thus proceeds, for the certain time period, toward the non-power transfer path segment 320 at a branching point E between the power-transfer path segment 310 and the non-power transfer path segment 320. The certain time period is, for example, set to be shorter than a time required for the mobile object 100a to travel the interval between adjacent power-transfer path segments 310. The certain time period is used to enable the power transfer information Dc to be generated again on the non-power transfer path segment 320 in the control routine illustrated in Fig. 11 before the mobile object 100a moves from the power-transfer path segment 310 passed after the operation in step S590 to a next power-transfer path segment 310.

The processor 411a thus cancels determination of the route instruction R when the predicted charging time Tc is longer than the predetermined charging time Tc_o and the SOC So is higher than the predetermined reference SOC Som.

The mobile object 100a therefore travels on a power-transfer path segment 310 when the predicted charging time Tc is shorter than the predetermined charging time Tc_o or when the SOC S_o is lower than the reference SOC Som. This enables the mobile object 100a to selectably travel between the power-transfer path segment 310 and the non-power transfer path segment 320 in accordance with the predicted charging time Tc and the SOC So.

*Selection between stationary-charging and in-motion charging*

The wireless power transfer system 10a of the second embodiment is configured to select between stationary-charging and in-motion charging based on the predicted charging time Tc. The mobile object 100a is traveling on the non-power transfer path segment 320 before generation of the power transfer information Dc as a route instruction R toward a power-transfer path segment 310, as illustrated at the lower center of Fig. 8. The processor 411a is programmed to start a control routine when acquiring the remaining capacity W_b from the battery sensor 130 of the mobile object 100.

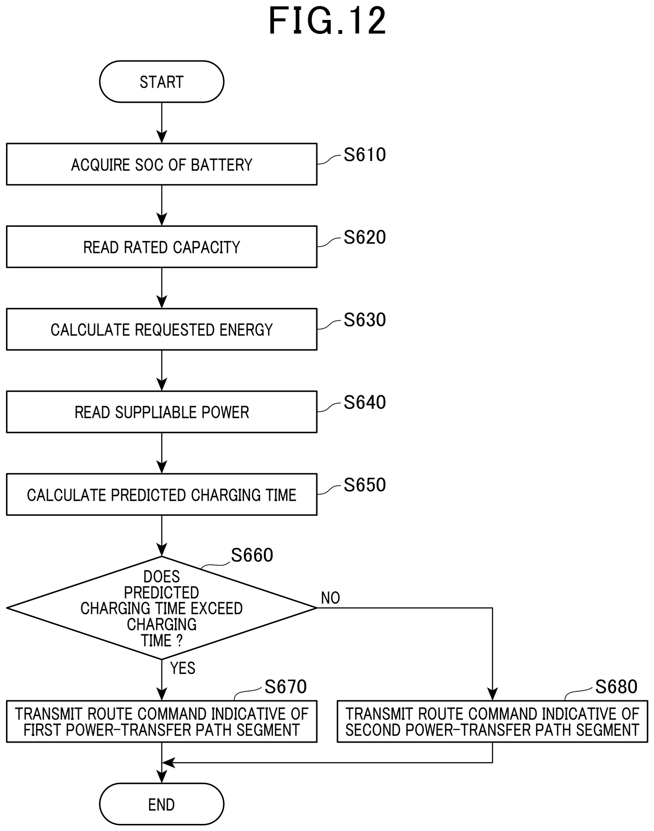

The operations in steps S610 to S650 in Fig. 12 are substantially the same as those in steps S510 to S550 in Fig. 11.

The processor 411a compares the predicted charging time Tc with the predetermined charging time Tc_o to determine whether the predicted charging time Tc exceeds the predetermined charging time Tc_o in step S660.

In response to determination that the predicted charging time Tc exceeds the predetermined charging time Tc_o (YES in step S660), the control routine proceeds to step S670. Otherwise, in response to determination that the predicted charging time Tc is less than or equal to the charging time Tc_o (NO in step S660), the control routine proceeds to step S680.

In step S670, the processor 411a transmits, to the mobile object 100a, the route instruction R as the power transfer information Dc; the route instruction R leads the mobile object 100a to the first power-transfer path segment 311. Based on the route instruction R, the mobile object 100a is controlled to travel toward the first power-transfer path segment 311. After the operation in step S670, the control routine is terminated.

In step S680, the processor 411a transmits, to the mobile object 100a, the route instruction R as the power transfer information Dc; the route instruction R leads the mobile object 100a to the second power-transfer path segment 312. The mobile object 100a is therefore controlled to travel toward the second power-transfer path segment 312. After the operation in step S680, the control routine is terminated.

The control routine illustrated in Fig. 4 or Fig. 5 is programmed to be executed on condition that the remaining capacity W_b of the battery 120 of the mobile object 100a is acquired after the operation in step S680. This results in the third traveling speed V_com being determined or one of the branched power-transfer path segments 310 being selected.

The processor 411a of the power-transfer management unit 400a according to the second embodiment is configured to calculate, for each power-transfer path segment 310, the predicted charging time Tc based on the suppliable power output P and the requested energy W_com on condition that the remaining capacity W_b is acquired before determination of the route instruction R. The second control unit 410a of the power-transfer management unit 400a is configured to determine the route instruction R to lead the mobile object 100a to the at least one first power-transfer path segment 311 when the predicted charging time Tc is longer than the predetermined charging time Tc_o determined for each power-transfer path segment 310.

The wireless power transfer system 10a of the second embodiment therefore makes it possible to perform charging of the mobile object 100a in a stopped state when the predicted charging time Tc cannot be secured during traveling of the mobile object 100a.

Third embodiment

*Configuration of wireless power transfer system*

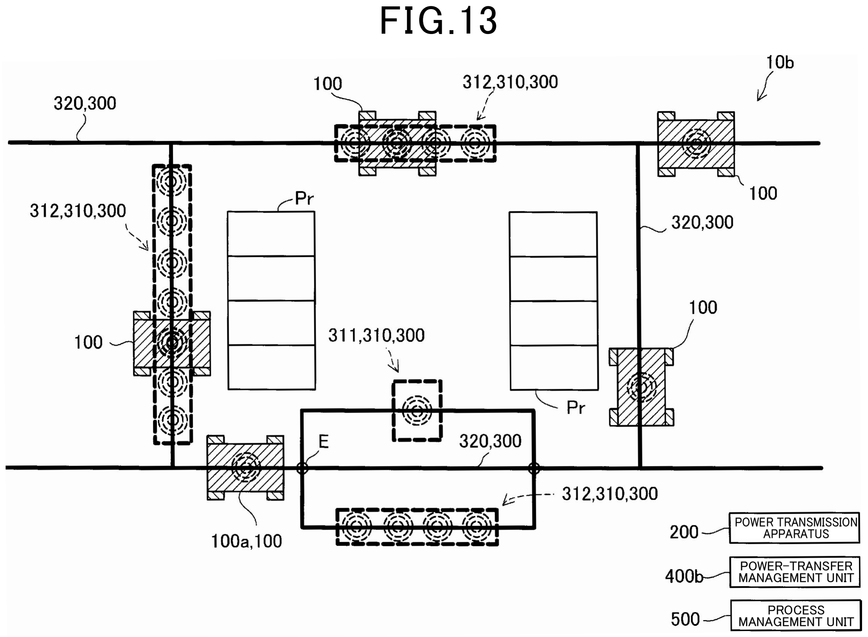

A wireless power transfer system 10b of the third embodiment includes, as illustrated in Fig. 13, a mobile object 100b, a power-transfer management unit 400b, and a process management unit 500. The mobile object 100b and the power-transfer management unit 400b respectively correspond to the mobile object 100a and the power-transfer management unit 400a of the second embodiment. The wireless power transfer system 10b is configured to perform wireless power transfer to the mobile object 100b in accordance with a situation of a work process of the mobile object 100.

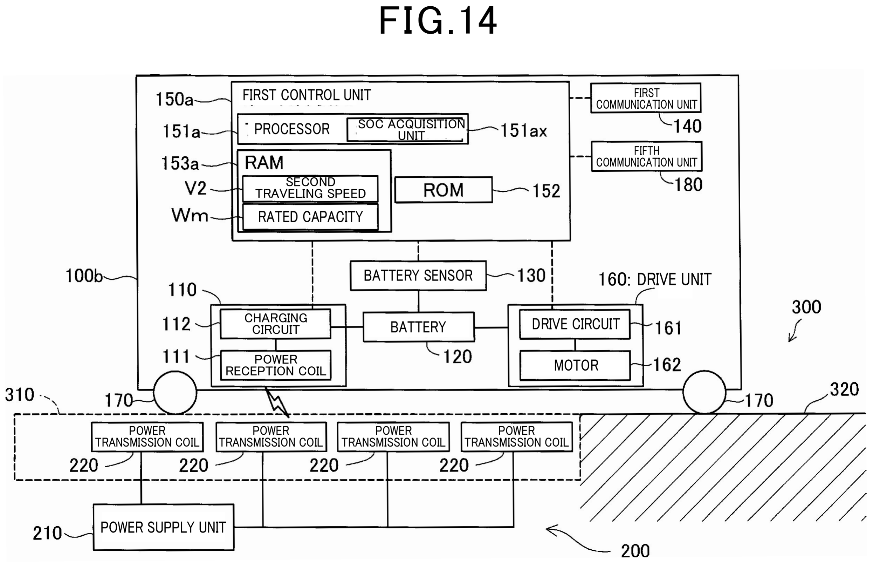

The mobile object 100b includes, as illustrated in Fig. 14, a fifth communication unit 180. The fifth communication unit 180 communicates with the process management unit 500. The configuration of the fifth communication unit 180 is substantially the same as that of the first communication unit 140.

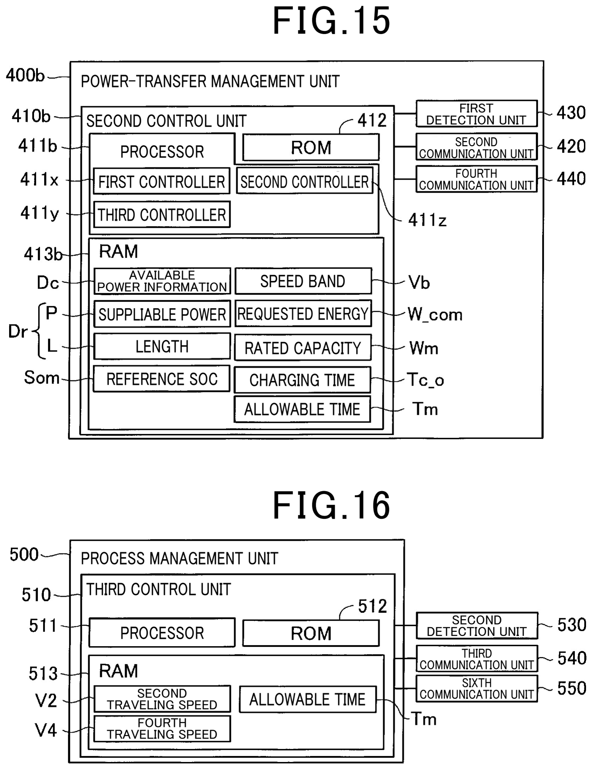

The power-transfer management unit 400b includes a fourth communication unit 440 as illustrated in Fig. 15. The fourth communication unit 440 communicates with the process management unit 500. The configuration of the fourth communication unit 440 is substantially the same as that of the second communication unit 420.

The process management unit 500 manages operations of the mobile object 100b on one or more traveling-path segments 300 as illustrated in Fig. 16.

Specifically, the process management unit 500 is configured to measure a segment traveling time Td for the mobile object 100b on each of previously selected power-transfer path segments 310. The process management unit 500 is configured to determine whether the segment traveling time Td is acceptable as a process. The process management unit 500 is also configured to control traveling of the mobile object 100b on the one or more traveling-path segments 300 according to the situation of the process.

The process is defined as a work process of the mobile object 100b. For example, if the mobile object 100b is an AGV, the process denotes a process of a conveyance work of the mobile object 100b. Accordingly, the determination of whether the segment traveling time Td is acceptable as a process represents a determination as to whether a delay in the mobile object's travel time Td is likely to result in a delay in a subsequent process. The delay in the travel time Td is determined based on a preset allowable time Tm. The allowable time Tm denotes a predetermined duration and is previously stored in both a RAM 513 of the process management unit 500 described later and the RAM 413 of the power supply management unit 400 prior to the wireless power transfer.

The process management unit 500 is, for example, a general-purpose computer. The process management unit 500 includes a third control unit 510, a second detection unit 530, a third communication unit 540, and a sixth communication unit 550.

The third control unit 510 controls the process management unit 500. The third control unit 510 specifically determines a standard speed V2 of the mobile object 100b on each non-power transfer path segment 320. The third control unit 510 includes a processor 511, a ROM 512, and the RAM 513. The configurations of the RAM 513 and the ROM 512 are substantially the same as those of the respective RAM 413 and ROM 412.

Using the RAM 513 for storing information and various programs stored in the ROM 512 for execution, the processor 511 is configured to implement functions, i.e., functional units. Specific descriptions of the functional units implemented by the processor 511 will be described later.

The third communication unit 540 communicates with the fifth communication unit 180 of the mobile object 100b. The sixth communication unit 550 communicates with the fourth communication unit 440 of the power-transfer management unit 400. Like the fist communication unit 140, each of the fifth and sixth communication units 540 and 550 is configured as a hardware module to perform wireless communications via, for example, Wi-Fi connection.

The second detection unit 530 is configured to measure the segment traveling time Td for the mobile object 100b on each transfer path segment 310. The second detection unit 530 is also configured to detect departure of the mobile object 100 from each power-transfer path segment 310. The configuration of the second detection unit 530 is substantially the same as that of the first detection unit 430.

Specifically, the second detection unit 530 is configured to detect entry of the mobile object 100b to or exit of the mobile object 100b from each power-transfer path segment 310 to accordingly detect departure of the mobile object 100b from the corresponding power-transfer path segment 310. The second detection unit 530 is configured to measure the segment traveling time Td for the mobile object 100b on each power-transfer path segment 310 based on (i) an entry time at which the mobile object 100b enters the corresponding power-transfer path segment 310 and (ii) an exit time at which the mobile object 100b exits the corresponding power-transfer path segment 310. The second detection unit 530 is connected to the third control unit 510 via a communication line.

Each time the mobile object 100b departures each power transmission line 310, the second detection unit 530 is configured to send, to the third control unit 510, (i) the segment traveling time Td for the mobile object 100b on the corresponding power-transfer path segment 310 and (ii) a notification of the departure of the mobile object 100b from the corresponding power-transfer path segment 310.

The other configuration of the wireless power transfer system 10b according to the third embodiment is substantially the same as that of the wireless power transfer system 10a according to the second embodiment.

*Notification to the process management unit*

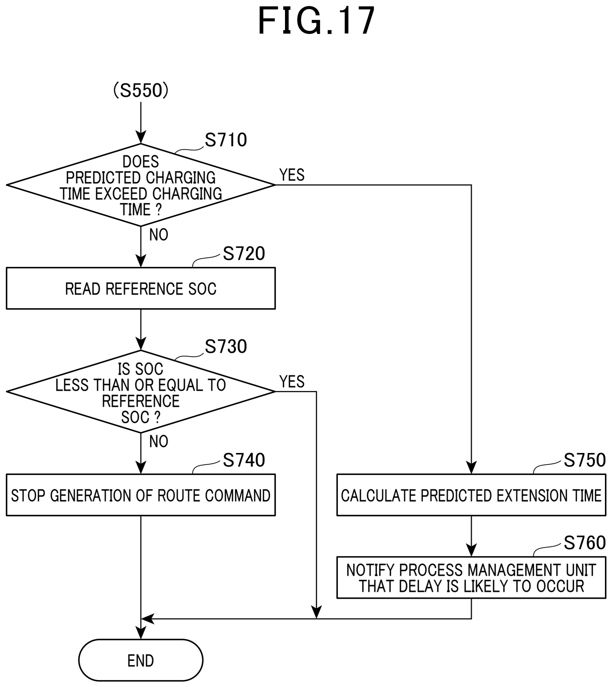

The operation in step S710 of Fig. 17 denotes an operation subsequent to the operation in step S550 of Fig. 11.

Specifically, following the operation in step S550 of Fig. 11, the processor 411b compares the predetermined charging time Tc_o with the predicted charging time Tc to determine whether the predicted charging time Tc exceeds the predetermined charging time Tc_o in step S710.

In response to determination that the predicted charging time Tc exceeds the predetermined charging time Tc_o (YES in step S710), the control routine proceeds to step S750. Otherwise, the predicted charging time Tc is less than or equal to the predetermined charging time Tc_o (NO in step S710), the control routine proceeds to step S720.

In step S720, the processor 411b reads the reference SOC Som from the RAM 413.

Following the operation in step S720, the processor 411b compares the SOC So with the predetermined reference SOC Som to determine whether the SOC So is less than or equal to the predetermined reference SOC Som in step S730.

In response to determination that the SOC S_o is less than or equal to the predetermined reference SOC Som (YES in step S730), the control routine is terminated. Otherwise, in response to determination that the SOC So exceeds the predetermined reference SOC Som (NO in step S730), the control routine proceeds to step S740 in which generation of the route instruction R is stopped.

Following the affirmative determination in step S710, the second controller 411z illustrated in Fig. 15 calculates, based on the predicted charging time Tc and the allowable time Tm, a predicted extension time Te in accordance with the following formula (4) in step S750:

$$Tc - Tm = Te \ ... \ (4)$$

The predicted extension time Te is, if the mobile object 100b is an AGV, defined as a predicted delay time caused by charging of the AGV 100b, which affects the process related to the AGV 100b.

Following the operation in step S750, the second control unit 410b transmits the predicted charging time Tc to the process management unit 500 through the fourth communication unit 440 and the third communication unit 540 in step S760. That is, the processor 411a of the power-transfer management unit 400a notifies the process management unit 500 that a delay is likely to occur due to charging of the mobile object 100b.

The control routine illustrated in Fig. 4 or Fig. 5 is programmed to be executed on condition that the remaining capacity W_b of the battery 120 of the mobile object 100a is acquired after the operation in step S760. This results in the third traveling speed V_com being determined or one of the branched power-transfer path segments 310 being selected.

The second control unit 410b of the power-transfer management unit 400b is configured to determine the route instruction R when (i) the predicted charging time Tc is longer than the predetermined charging time Tc_o for each power-transfer path segment 310 and (ii) the SOC S_o is lower than the predetermined reference SOC Som.

The second control unit 410b of the power-transfer management unit 400b is additionally configured to calculate, as the time information T, the predicted extension time Te that represents the result of subtracting the predetermined allowable time Tm from the predicted charging time Tc for the power-transfer path segment 310, and notify the process management unit 500 of the calculated predicted extension time Te.

This enables the process management unit 500 to confirm the predicted extension time Te due to charging of the mobile object 100b. The process management unit 500 therefore makes it possible to start consideration of a countermeasure against a delay of the mobile object 100b based on the notification of the predicted extension time Te.

*Change of traveling speed of the mobile object on non-power transfer path*

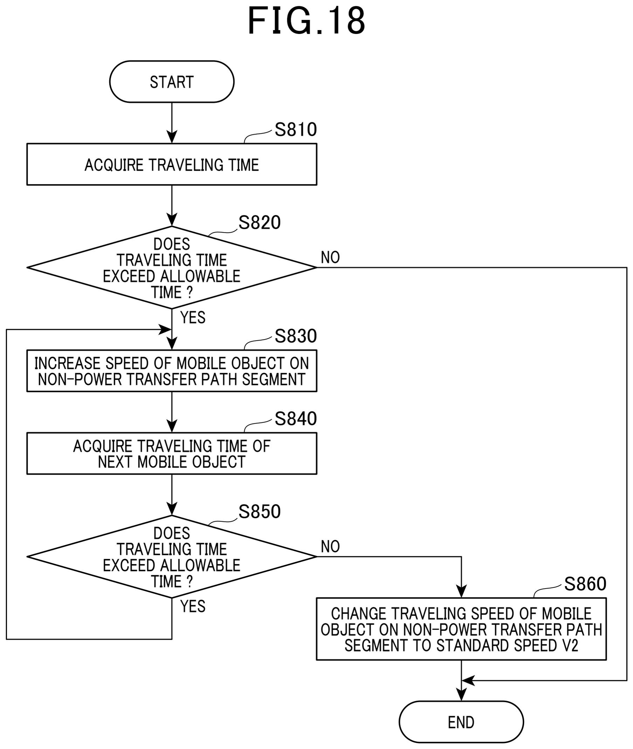

The process management unit 500 is configured to change the standard speed V2 of the mobile object 100b based on the segment traveling time Td for the mobile object 100b on a power-transfer path segment 310. The third control unit 510 of the process management unit 500 is programmed to start a control routine illustrated in Fig. 18 when the second detection unit 530 detects that the mobile object 100b has departed from a power-transfer path segment 310. In particular, the process management unit 500 has determined the standard speed V2 of the mobile object 100b prior to execution of the control routine illustrated in Fig. 18.

When starting the control routine illustrated in Fig. 18, the third control unit 510 acquires, from the second detection unit 530, the segment traveling time Td for the mobile object 100b on the power-transfer path segment 310 when the mobile object 100b has departed from the power-transfer path segment 310 in step S810.

The third control unit 510 compares the segment traveling time Td with the allowable time Tm to determine whether the segment traveling time Td exceeds the allowable time Tm in step S820.

In response to determination that the segment traveling time Td exceeds the allowable time Tm (YES in step S820), the control routine proceeds to step S830. That is, the fact that the segment traveling time Td exceeds the allowable time Tm is likely to cause a delay in a subsequent process. Otherwise, in response to determination that the segment traveling time Td is equal to or less than the allowable time Tm (NO in step S820), the control routine is terminated.

In step S830, the third control unit 510 changes the traveling speed of the detected mobile object 100b to a fifth traveling speed V5 higher than the standard speed V2. That is, the third control unit 510 increases the traveling speed of the mobile object 100b on the non-power transfer path segment 320 after departure from the power-transfer path segment 310. The fifth traveling speed V5 is stored, for example, in the RAM 513 of the process management unit 500 in advance before traveling on the non-power transfer path segment 320 is performed.

Following the operation in step S830, the third control unit 510 acquires the segment traveling time Td of a next mobile object 100b that has departed from the power-transfer path segment 310 after the mobile object 100b whose segment traveling time Td was acquired in step S810 in step S840.

Following the operation in step S840, the third control unit 510 determines whether the segment traveling time Td acquired in step S840 exceeds the allowable time Tm in step S850. The control routine returns to step S830 in response to determination that the segment traveling time Td acquired in step S840 exceeds the allowable time Tm (YES in step S850). Otherwise, in response to determination that the segment traveling time Td acquired in step S840 is less than or equal to the allowable time Tm (NO in step S850), the control routine proceeds to step S860.

In step S860, the third control unit 510 changes the traveling speed of the mobile object 100b determined in step S830 from the fifth traveling speed V5 back to the standard speed V2 in step S860. Thereafter, the control routine is terminated.

Specifically, the third control unit 510 is configured to change the traveling speed of a mobile object 100b to the fifth traveling speed V5 higher than the standard speed V2 when the segment traveling time Td for the mobile object 100b on a power-transfer path segment 310 is longer than the predetermined allowable time Tm previously determined for each power-transfer path segment 310.

This configuration therefore enables the traveling speed of the mobile object 100b, whose segment traveling time Td on the power-transfer path segment 310 exceeds the predetermined allowable time Tm, to increase. This therefore makes it possible to reduce the overall traveling time for the mobile objects 100b on the one or more traveling-path segments 300 including the power-transfer path segments 310 as compared with a case where the traveling speed for the mobile objects 100b on each power-transfer path segment 310 is unchanged. The wireless power transfer system 10b therefore makes it possible to reduce a delay of a subsequent process caused by wireless power transfer to the mobile object 100b.

*Modifications of third embodiment*

The process management unit 500 according to the third embodiment may transmit, based on the predicted charging time Tc, an estimated arrival time of the mobile object 100b to a management device that performs a subsequent process. The third control unit 510 of the process management unit 500 may, for example, store a time at which the mobile object 100b has entered the power-transfer path segment 310 measured by the second detection unit 530 to accordingly calculate an estimated exit time of the mobile object 100b based on the predicted charging time Tc and the stored time. The third control unit 510 of the process management unit 500 may transmit the estimated arrival time of the mobile object 100 to a communication device installed in the management device that performs the subsequent process, which is capable of communicating with the third communication unit 540. Even if charging of the mobile object 100b is likely to affect the subsequent process, the wireless power transfer system 10b according to this modification makes it possible to ensure time for the plan change as compared with a case where the estimated arrival time of the mobile object 100b is not transmitted to the management device that performs the subsequent process.

Fourth embodiment

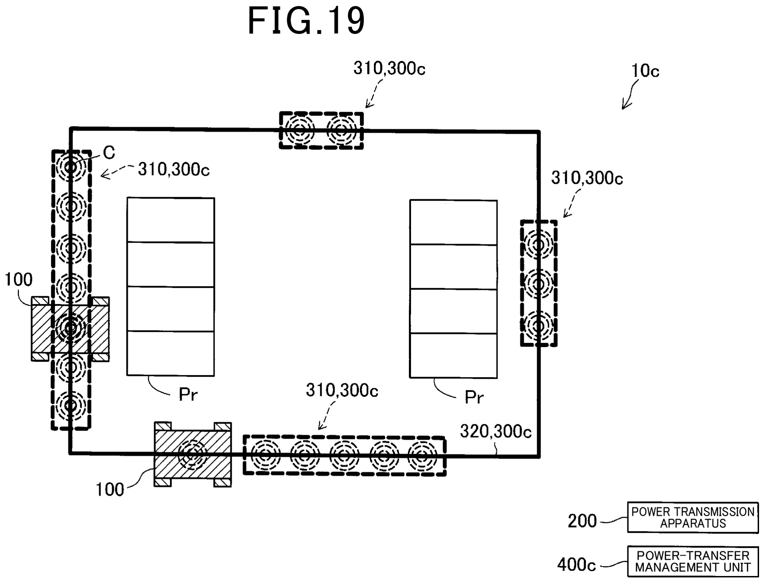

A wireless power transfer system 10c according to the fourth embodiment includes a traveling path 300c constituted by traveling-path segments 300. The traveling path 300c constituted by the traveling-path segments 30 is configured as a looped course along which the mobile objects 100 circulate (see Fig. 19). Fig. 19 illustrates mobile objects 100, each of which is configured to travel along four power-transfer path segments 310 and four non-power-transfer path segments 320. The other features of the traveling path 300c are substantially the same as those of a traveling path constituted by one or more traveling-path segments 300 according to the first embodiment. The elements that differ from the first embodiment are denoted by reference numerals suffixed with "c". The reference signs of elements according to the fourth embodiment modified from those according to the first embodiment are also suffixed with "c".

The first detection unit 430c of the fourth embodiment has the same configuration as the first detection unit 430 of the first embodiment. The first detection unit 430c need not detect, for each power-transfer path segment 310, both the number of mobile objects 100 traveling on the corresponding power-transfer path segment 310 and the first traveling speed V1 of each mobile object 100, which is different from the first embodiment. The first detection unit 430c detects departure of each mobile object 100 from each power-transfer path segment 310 of the looped course.

The power transfer information Dc of the fourth embodiment need not include a route instruction R that is included in the power transfer information Dc of each of the other first to third embodiments. The mobile object 100 circulates along the looped traveling path 300c according to the fourth embodiment and therefore does not require any route instruction R. The processor 411c of the power-transfer management unit 400c therefore need not determine such a route instruction R that designates a traveling course that includes a combination of any of the non-power-transfer path segments 320 and any of the power-transfer path segments 310.

The power transfer information Dc need not include, for each power-transfer path segment 310, the first traveling speed V1 as in the foregoing embodiments. The power transfer information Dc includes the first traveling speed V1 for the circulating route that is comprised of the non-power-transfer path segments 320 and the power-transfer path segments 310.

The first controller 411x_c is configured to calculate, as the first traveling speed V1, a third traveling speed V_com required to charge the mobile object 110 up to requested energy W_com over one complete circuit of the mobile body 100 along the looped traveling path 300c.

More specifically, the first controller 411x_c is configured to calculate the third traveling speed V_com based on (i) predetermined available power information Dr related to the power delivery capability of each of the four power-transfer path segments 310 and (ii) the requested energy W_com. The details of calculating the third traveling speed V_com by the first controller 411x_c will be described later.

The available power information Dr for each power-transfer path segment 310 according to the fourth embodiment includes the suppliable power output P and the length L for the corresponding power-transfer path segment 310. The available power information Dr for each power-transfer path segment 310 is stored in the RAM 413c of the power-transfer management unit 400c before wireless power transfer is started. The control of calculating the third traveling speed V_com based on the available power information Dr that represents the power delivery capability of each power-transfer path segment 310 included in the looped traveling path 300c will be referred to herein as feedforward control or FF control.

The first controller 411x according to the each of the first to third embodiments is configured to control the speed of the mobile object 100 to the third traveling speed V_com each time of acquiring the remaining capacity Wb.

In contrast, the first controller 411x_c according to the fourth embodiment is configured to control the recalculation of the third traveling speed V_com as the speed of the mobile object 100 based on the counted number of departures, such that the third traveling speed V_com is recalculated once for every set of four power-transfer path segments 310 along the looped traveling path. The control is therefore performed once per control interval (i.e., once per complete circuit of the traveling path 300c).

The other components of the wireless power transfer system 10c according to the fourth embodiment are substantially the same as those of the wireless power transfer system 10 according to the first embodiment.

The following describes a control routine based on a wireless power-transfer method performed by the wireless power transfer system 10c of the fourth embodiment.

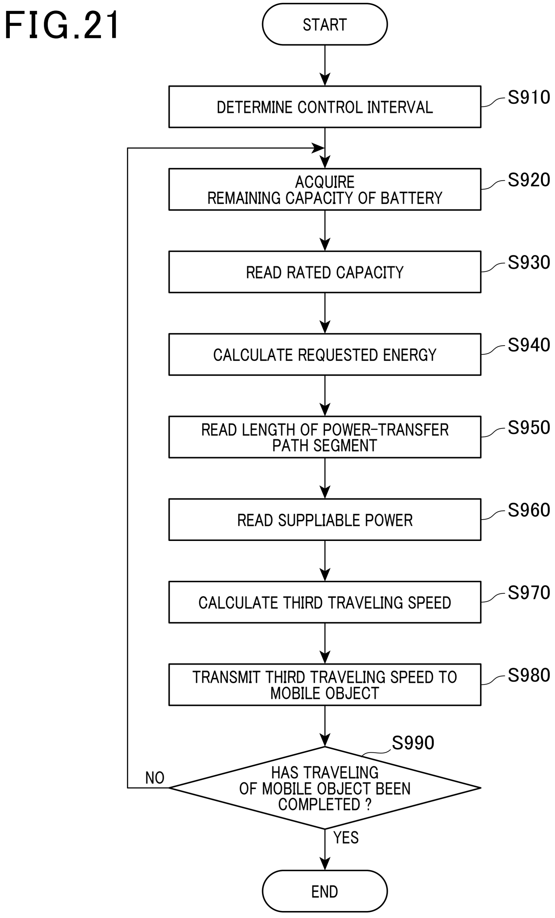

When starting the control routine illustrated in Fig. 21, the processor 411c of the power-transfer management unit 400 determines, before the mobile object 100 starts traveling, the control interval of the calculation of the third traveling speed V_com in accordance with information set by an administrator of the power-transfer management unit 400c in step S910 of Fig. 21. That is, the control interval is set such that the third traveling speed V_com is recalculated once for every set of four power-transfer path segments 310 along the looped traveling path.

The operations in steps S920 to S960 in Fig. 21 are substantially the same as those in steps S110 to S150 in Fig. 4 performed by the wireless power transfer system 10 of the first embodiment except that the processor 411c reads, for each of the four power-transfer path segments 310, the length L and the suppliable power output P of the corresponding one of the four power-transfer path segments 310 from the RAM 413.

Following the operation in step S960, the processor 411c calculates, based on the available power information Dr of each power-transfer path segment 310 and the requested energy W_com, the third traveling speed V_com as the first traveling speed V1 of the mobile object 100 required to charge the battery 120 of the mobile object 100 up to the requested energy W_com throughout the four power-transfer path segments 310 in step S970.

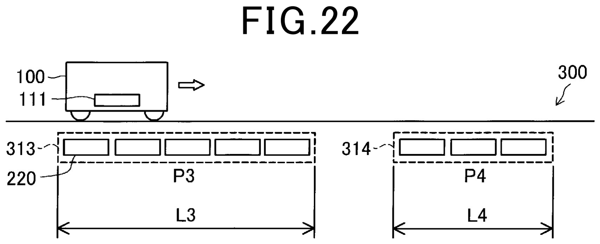

The following describes a method of calculating the third traveling speed V_com according to the fourth embodiment with reference to Fig. 22.

For ease of understanding, it is assumed that the control interval in this explanatory description is set to an interval during which two power-transfer path segments 310 are passed rather than four power-transfer path segments 310. The two power-transfer path segments 310 used in the following description include a third power-transfer path segment 313 having a length L3 and suppliable power output P3, and a fourth power-transfer path segment 314 having a length L4 and suppliable power output P4.

The method calculates the passage time T3 over the third power-transfer path segment 313 in accordance with the following formula (5):

$$T3 = L3\ /\ V\_com\ \dots\ (5)$$

The method multiplies the equation (5) by the suppliable power output P3 to thereby calculate requested segment energy W_com3 to be charged on the third power-transfer path segment 313 in accordance with the following formula (6):

$$W\_com3 = P3 \times L3 / V\_com \ ... \ (6)$$

The method calculate requested segment energy W_com4 to be charged on the fourth power-transfer path segment 314 in the same manner as the requested segment energy W_com3.

Then, the method calculates the sum of the requested segment energy W_com3 and the requested segment energy W_com4, which denotes the requested energy W_com required for the sum of the third and fourth segments 313 and 314, which will be referred to as (W_com3 + W_com4), in accordance with the following formula (7):

$$W\_com = (W\_com3 + W\_com4) = P3 \times L3 / V\_com + P4 \times L4 / V\_com \ ... \ (7)$$

This enables the method to calculate the third traveling speed V_com for the two power-transfer path segments 313 and 314 in accordance with the following formula (8):

$$V\_com = (P3 \times L3 + P4 \times L4) / (W\_com3 + W\_com4) \ ... \ (8)$$

The processor 411c of the fourth embodiment calculates the third traveling speed V_com for the four power-transfer path segments 310 using a method similar to the above method based on the formulas (5) to (8).

The operation in step S980 of Fig. 21 is substantially the same as the operation in step S170 of Fig. 4.

Following the operation in step S980, the processor 411c determines whether traveling of the mobile object 100 has been completed in step S990. The processor 411c, for example, terminates traveling of the mobile object 100 in response to determination that a preset number of laps, i.e., circulations, of the mobile object 100 over the looped traveling path 300c has been completed so that traveling of the mobile object 100 has been completed (YES in step S990).

Otherwise, in response to determination that traveling of the mobile object 100 has not been completed (NO in step S990), the control routine returns to step S920.

This configuration of the wireless power transfer system 10c causes the mobile object 100 to travel along the looped traveling path 300c at the third traveling speed V_com that reflects changes in the requested energy W_com of the battery 120 and in the available power information Dr through the looped traveling path 300c. The available power information Dr includes, for example, the suppliable power output P and the length L of each power-transfer path segment 310, so that the electric power received by the mobile object 100 depends on its traveling speed.

Accordingly, the configuration of the wireless power transfer system 10c,. which causes the mobile object 100 to travel along the looped traveling path 300c at the third traveling speed V_com, enables the mobile object 100 to receive the requested energy W_com corresponding to the changes in the remaining capacity Wb of the battery 120 and charge the battery 120 based on the received requested energy.

The wireless power transfer system 10c therefore makes it possible to prevent stoppage of the mobile object 100 due to shortage of the remaining capacity Wb, thus preventing reduction in the operating rate of the mobile object 100.

This configuration of the wireless power transfer system 10c makes it possible to control the mobile object 100 more simply than a configuration that performs feedback control described later.

This configuration of the wireless power transfer system 10c additionally makes it possible to stabilize the traveling speed of the mobile object 100 in comparison with a configuration that changes the traveling speed for each individual power-transfer path segment 310. This configuration of the wireless power transfer system 10c therefore facilitates the management of the traveling status of the mobile object 100.

Fifth embodiment

The third traveling speed V_com according to the fourth embodiment is calculated as a function of the available power information Dr on each power-transfer path segment 310, i.e., the length L and the suppliable power output P thereof on the traveling path 300c. The third traveling speed V_com may alternatively be calculated based on, as the available power information Dr, a received-power record of the mobile object 100 for the traveling path 300c acquired when the mobile object 100 has already traveled over the traveling path 300c prior to the next calculation of the third traveling speed V_com .

The received-power record of the mobile object 100 for the traveling path 300c includes, for example,

(I) The charged energy level of each power-transfer path segment 310 recorded for at least one past traveling of the mobile object 100 on the corresponding power-transfer path segment 310; and

(II) The traveling speed recorded for past traveling of the mobile object 100 along the traveling path 300c.

The charged energy level of the mobile object 100 for each power-transfer path segment 310 represents the energy charged in the battery 120 of the mobile object 100 during at least one past traveling of the mobile object on the corresponding power-transfer path segment 310.

In other words, the available power information Dr according to the fifth embodiment includes a received-power record related to the power delivery capability of the traveling path 300c prior to calculation of the third traveling speed V_com, and includes information related to the charged energy level of the mobile object 100 on each power-transfer path segment 310.

Accordingly, the third traveling speed V_com according to the fifth embodiment is calculated based on the received-power record of the mobile object 100 and the requested energy W_com.

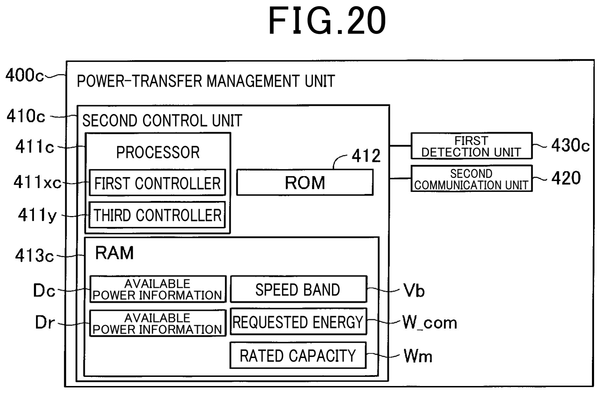

The power-transfer management unit 400c of the fifth embodiment has substantially the same configuration as the power-transfer management unit 400c of the fourth embodiment illustrated in Fig. 20 except that the RAM 413c of the power-transfer management unit 400c stores, as the available power information Dr, the received-power record of the mobile object 100 for each power-transfer path segment 310.

The control of calculating the third traveling speed V_com based on the received-power record of the mobile object 100 for each power-transfer path segment 310 as the available power information Dr will be referred to herein as feedback control or FB control.

The mobile object 100 of the fifth embodiment further includes a power sensor in addition to the configuration of the mobile object 100 of the fourth embodiment. The power sensor of the fifth embodiment is configured to acquire the charged energy level in the battery 120 of the mobile object 100. Like the battery sensor 130, the power sensor of the fifth embodiment is configured to, for example, measure an input voltage and input current to the battery 120 during traveling of the mobile object 100 on each power-transfer path segment 310 to accordingly calculate the charged energy level in the battery 120 during traveling of the mobile object 100 on each power-transfer path segment 310.

The other components of the fifth embodiment are substantially the same as those of the wireless power transfer system 10c of the fourth embodiment.

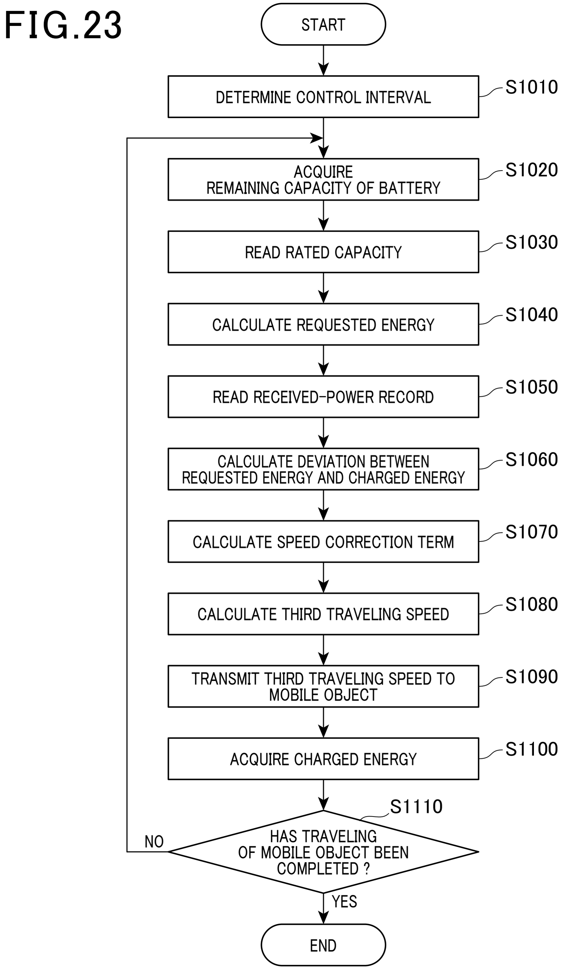

The following describes a control routine based on a wireless power-transfer method performed by the wireless power transfer system 10c of the fifth embodiment with reference to Fig. 23.

The operations in steps S1010 to S1040 in Fig. 23 are substantially the same as the operations in steps S910 to S940 in Fig. 21 performed by the wireless power transfer system 10c of the fourth embodiment.

The processor 411c reads, from the RAM 413c, the received-power record of the mobile object 100 for the traveling path 300c in step S1050 of Fig. 23. More specifically, the processor 411c reads the charged energy level for each power-transfer path segment 310 and the traveling speed from the RAM 413c.

For example, the processor 411c reads the charged energy level and traveling speed recorded for the previous traveling of the mobile object 100 over the traveling path 300c from the RAM 413.

As another example, let us assume that the mobile object 100 has no received-power record stored in the RAM 413. In this case, the processor 411c reads the received-power record of one of other mobile objects 100 whose specifications are the same as the mobile object 100; the received-power record of each of the other mobile objects 100 has been prepared by an administrator and stored in the RAM 413.

Following the operation in step S1050, the processor 411c calculates the deviation between the requested energy W_com, which denotes the energy to be charged over one complete circuit of the mobile body 100 along the looped traveling path 300c, and the past total charged energy obtained over the four power-transfer path segments 310 of the traveling path 300c; the total charged energy is the sum of the charged energy levels of all the four power-transfer path segments 310 in step S1060.

Next, the processor 411c calculates a speed correction term based on the deviation between the requested energy W_com and the sum of the charged energy levels of all the four power-transfer path segments 310 in step S1070 of Fig. 23. The speed correction term may be, for example, the proportional and/or integral term in Proportional-Integral (PI) control.

Following the operation in step S1070, the processor 411c calculates the third traveling speed V_com based on the traveling speed included in the received-power record and the speed correction term in step S1080 of Fig. 23.

For example, the processor 411c adds the speed correction term to the traveling speed included in the received-power record, which indicates a past third traveling speed V_com recorded by past circuit of the mobile object 100 over the traveling path 300c, to accordingly calculate the third traveling speed V_com.

The operation in step S1090 in Fig. 23 is substantially the same as the operation in step S980 in Fig. 21.

The processor 411c acquires, during traveling of the mobile object 100 along the traveling path 300c, the charged energy level for each power-transfer path segment 310 measured by the power sensor in step S1100 of Fig. 23.

Then, the processor 411c stores the third traveling speed V_com and the acquired charged energy level for each power-transfer path segment 310 as a new received-power record in the RAM 413c. The stored received-power record can be used as available power information Dr for a subsequent traveling of the same mobile object 100 or another mobile object on the traveling path 300c

The operation in step S1110 in Fig. 23 is substantially the same as the operation in step S990 in Fig. 21.

The wireless power transfer system 10 of the fifth embodiment is configured to calculate the third traveling speed V_com based on the received-power record of a mobile object 100 for the traveling path 300c that includes, for example,

(I) The past charged energy level of each power-transfer path segment 310 recorded for at least one past traveling of the mobile object 100 on the corresponding power-transfer path segment 310; and
(II) The traveling speed recorded for the at least one past traveling of the mobile object 100 along the traveling path 300c.

More specifically, the wireless power transfer system 10 is configured to calculate, as the third traveling speed V_com, correct the recorded traveling speed included in the received-power record based on the deviation between the requested energy W_com and the total charged energy obtained over the four power-transfer path segments 310 included in the received-power record.

This configuration of the wireless power transfer system 10 therefore makes it possible to charge the battery 120 more efficiently as compared with a case of calculating the third traveling speed V_com using feedforward control when there is a deviation between the requested energy W_com and the total charged energy acquired during actual traveling of the mobile object 100 along the traveling path 300c.

Sixth embodiment

The third traveling speed V_com may be calculated by a control that combines the FF control of the fourth embodiment and the FB control of the fifth embodiment. The combined control will be referred to as (FF + FB) control. The wireless power transfer system 10c of the sixth embodiment has the same configuration as the wireless power transfer system 10c of the fifth embodiment.

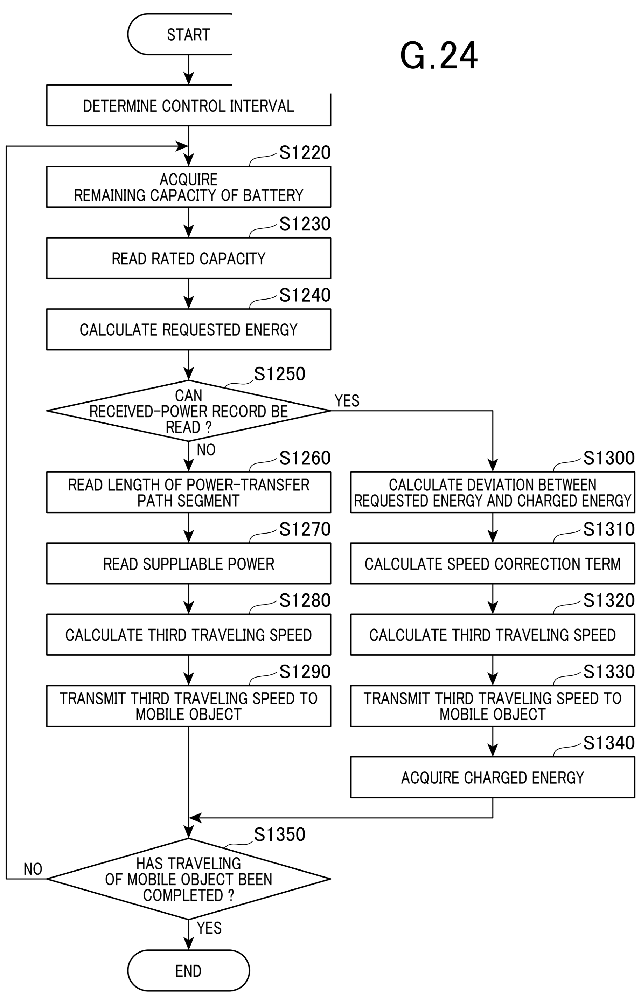

The following describes a control routine based on a wireless power-transfer method performed by the wireless power transfer system 10c of the sixth embodiment with reference to Fig. 24.

The operations in steps S1210 to S1240 of Fig. 24 are substantially the same as those in steps S910 to S940 of Fig. 21 according to the fourth embodiment.

Following the operation in step S1240, the processor 411c of the power-transfer management unit 400c determines whether a received-power record of the mobile object 100 or another mobile object 100 for the traveling path 300c can be read from the RAM 413c in step S1250 of Fig. 24.

In response to determination that no received-power record is stored in the RAM 413 so that no received-power record can be read (NO in step S1250), the control routine proceeds toe step S1260. For example, when executing the calculation of the third traveling speed V_com at the first time, i.e., at the start of the control interval, the first processor 411c has no received-power record, that is, no charged energy level and no traveling speed recorded for the previous traveling of the mobile object 100 over the traveling path 300c. Then, the control routine proceeds to step S1260 for execution of the FF control.

Otherwise, in response to determination that a received-power record of the mobile object 100 or another mobile object 100 for the traveling path 300c is stored in the RAM 413 so that the received-power record can be read (YES in step S1250), the control routine proceeds to step S1300 for execution of the FB control.

The operations in steps S1260 to S1290 of Fig. 24 are substantially the same as those in steps S950 to S980 of Fig. 21 of the fourth embodiment.

The operations in steps S1300 to S1350 in Fig. 24 are substantially the same as those in steps S1060 to S1110 of Fig. 23 of the fifth embodiment.

When executing calculation of the third traveling speed V_com at the first time, i.e., at the start of the control interval, the first controller 411x is configured to use the available power information Dr related to the power delivery capability of each of the four power-transfer path segments 310 to calculate the third traveling speed V_com.

When executing calculation of the third traveling speed V_com at each of the subsequent times determined by the control intervals, the first controller 411x is configured to adopt, as the available power information Dr, the received-power record that includes the charged energy level of each power-transfer path segment 310 recorded for at least one past traveling of the mobile object 100 on the corresponding power-transfer path segment 310.

The wireless power transfer system 10c according to the sixth embodiment therefore makes it possible to determine the third traveling speed V_com based on the suppliable power output P of each power-transfer path segment 310 when no received-power record as the available power information Dr is stored in the RAM 413c.

Additionally, the wireless power transfer system 10 makes it possible to determine the third traveling speed V_com based on the deviation between the requested energy W_com and the past total charged energy obtained over the four power-transfer path segments 310 of the traveling path 300c. That is, the wireless power transfer system 10 of the sixth embodiment performs the combination of the feedback control and feedforward control for calculating the third traveling speed V_com, making it possible to charge the battery 120 more efficiently as compared with a configuration that performs only one of the feedback control and the feedforward control.

Seventh embodiment

In each of the fourth to sixth embodiments, the first control unit 411x_c controls the calculation of the third traveling speed V_com each time the mobile body 100 traverses a predetermined number ($\geq 2$) of power-transfer path segments 310 along the traveling path 300c. For example, in the fourth embodiment, the predetermined number is four, and the first detection unit 430c detects departures from the power-transfer path segments 310 and counts them, so that the first control unit 411x_c executes the calculation of the third traveling speed V_com for each complete circuit of the mobile body 410 along the looped traveling path 300c.

In contrast, the first controller 411xc may alternatively execute recalculation of the third traveling speed V_com at predetermined time intervals, i.e., control intervals. The wireless power transfer system 10c of the seventh embodiment has substantially the same configuration as the wireless power transfer system 10c of the fourth embodiment.

In particular, the mobile object 100 travels at least at a fourth traveling speed V4 on the traveling path 300c. The power-transfer management unit 400 stores, in the RAM 413c, a fourth traveling speed V4, the length L of each power-transfer path segment 310, the length Ln of each non-power-transfer path segment 320, and the suppliable power output P of each power-transfer path segment 310.

The first controller 411x_c of the seventh embodiment is configured to execute the calculation of the third traveling speed V_com at predetermined time intervals, i.e., control intervals, t_in, each interval t_in corresponding to a time during which the mobile object 100, when traveling at the fourth traveling speed V4, traverses at least two power-transfer path segments 310.

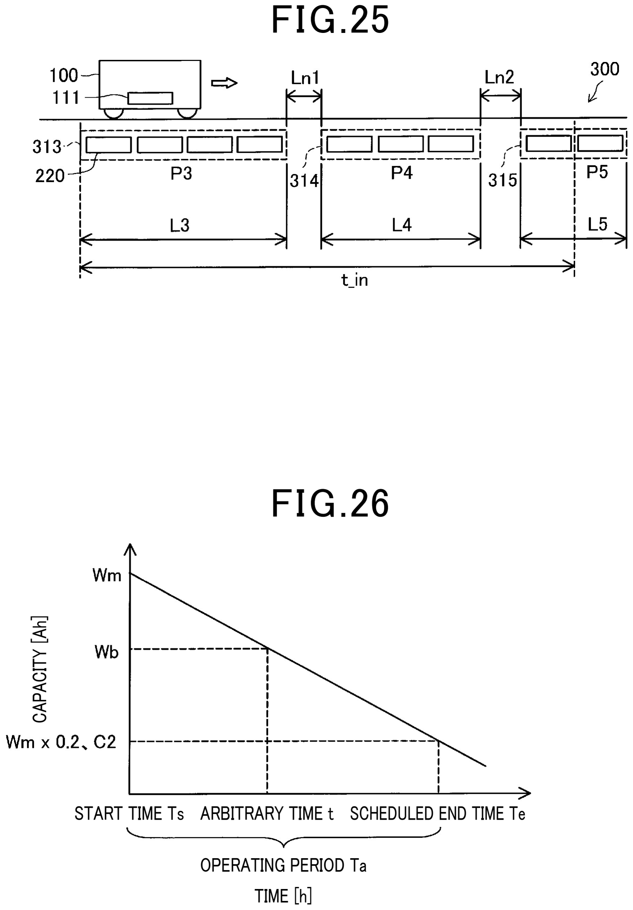

The following describes the control intervals tin with reference to Fig. 25.

Fig. 25 illustrates three power-transfer path segments 310: a third power-transfer path segment 313 having a length L3 and suppliable power output P3, a fourth power-transfer path segment 314 having a length L4 and suppliable power output P4, and a fifth power-transfer path segment 315 having a length L5 and suppliable power output P5.

A first non-power transfer path segment having a length Ln1 is present between the third power-transfer path segment 313 and the fourth power-transfer path segment 314, and a second non-power transfer path segment having a length Ln2 is present between the fourth power-transfer path segment 314 and the fifth power-transfer path segment 315.

The first controller 411xc of the seventh embodiment is configured to determine, based on the fourth traveling speed V4 and the lengths L3 to L5 and Ln1 and Ln2 included in the traveling path 300c, which of power-transfer line segments 310 through which the mobile object 100 is able to pass within the control interval t_in.

As shown in Fig. 25, when traveling at the fourth traveling speed V4, the mobile body 100 enters the third power-transfer path segment 313 and, after the control interval t_in elapses, reaches a point within the fifth power-transfer path segment 315. Accordingly, the power-transfer path segments completely traversed within the control interval t_in are the third power-transfer path segment 313 and the fourth power-transfer path segment 314. The power-supply management unit 400c therefore determines the receivable-power information Dr using the length L3 of the suppliable power output P3 of the segment 313 and the length L4 and the suppliable power output P4 of the segment 314. This therefore enables the third traveling speed V_com to be calculated in the same manner as the calculation method using the formulas (5) to (8).

Specifically, the first controller 411xc executes calculation of the third traveling speed V_com at the predetermined time intervals during each of which the mobile object 100 traverses at least two power-transfer path segments 310. The power-transfer management unit 400c determines, as the available power information Dr, information including the lengths L and the suppliable power outputs P of one or more power-transfer path segments 310 through which the mobile object 100 traverses during the control internal tin.

The above configuration of the wireless power transfer system 10c according to the seventh embodiment, which periodically controls the traveling speed of the mobile object 100, enables the control to be simpler as compared with a configuration that controls the traveling speed of the mobile object 100 for each power-transfer path segment 310.

Eighth embodiment

The third controller 411y according to the foregoing embodiments is configured to compute the requested energy W_com based on the difference between the remaining capacity Wb and the first reference capacity C1.

Other methods may be used to calculate the requested energy W_com.

The third controller 411y according to the eighth embodiment is configured to calculate the requested energy W_com based on a predetermined first relationship between an elapsed operating time of the mobile object 100 and the remaining capacity Wb assuming that a second reference capacity C2 smaller than the rated capacity Wm of the battery 120 is set as the lower limit of the remaining capacity Wb at an end time Te of a predetermined operating period Ta of the mobile object 100.

Fig. 26 illustrates an example of the relationship between the capacity of the battery 120 and the elapsed operating time of the mobile object 100. The horizontal axis of Fig. 26 represents time from the start time Ts indicative of the start of traveling of the mobile object 10 to an end time Te indicative of a scheduled end time of traveling of the mobile object 100, that is, indicative of the of the operating period Ta.

The predetermined operating period Ta of the mobile object 100 represents, for example, a daily operating period of a factory in which the mobile object 100 is used. An administrator may stop operation of the mobile object 100 at night or during breaks when no operator is present. The operating period Ta is therefore predetermined as a period during which the mobile object 100 can operate.

That is, the mobile object 100 does not stop during the operating period Ta as long as the remaining capacity Wb of the battery 120 is sufficient for the mobile object 100 to travel within the operating period Ta. The mobile object 100 can be charged efficiently after the operating period Ta by stationary charging, making it possible to prevent reduction in operating rate of the mobile object 100.

The remaining capacity Wb of the battery 120 at the start time Ts may be predetermined, for example, such that the remaining capacity Wb at the start time Ts is set to the rated capacity Wm. The remaining capacity Wb of the battery 120 at the end time Te may be predetermined as twenty percent of the rated capacity Wm. The capacity of the battery 120 at the end time Te of the operating period Ta corresponds to the second reference capacity C2. The remaining capacity Wb of the battery 120 at an arbitrary time t during the operating period Ta can be therefor expressed in accordance with the following formula (9):

$$Wb = Wm - (Wm \times 0.8 \, / \, Te) \times t \ldots (9)$$

This therefore enables the requested energy W_com of the the eighth embodiment to be expressed in accordance with the following formula (10):

$$W\_com = (Wm - (Wm \times 0.8 \, / \, Te \times t - Wb) \times V \ldots (10)$$

Specifically, the third controller 411y is configured to set, for the predetermined operating period Ta of the mobile object 100, the second reference capacity C2, which is smaller than the rated capacity Wm of the battery 120, to the lower limit of the remaining capacity Wb at the end time Te. The third controller 411y is additionally configured to calculate the requested energy W_com based on the predetermined first relationship between the elapsed operating time of the mobile object 100 and the remaining capacity Wb.

That is, the wireless power transfer system 10c is configured to charge the battery 120 of the mobile object 100 by only electric power required for the mobile object 100 to travel within the operating period Ta that is determined by the second reference capacity C2. This therefore enables a mobile object 100, which travels with a large-capacity battery 120, to have reduced opportunities to reduce the traveling speed for battery charging; the large-capacity battery 120 is less likely to suffer shortage of the remaining capacity Wb than a small-capacity battery 120. This therefore makes it possible to increase the operating rate of the mobile object 100.

Ninth embodiment

The available power information Dr according to the corresponding embodiments includes multiple types of information, such as the length L and the suppliable power output P of each power-transfer path segment 310. If the received-power record is used as the available power information Dr, the received-power record includes multiple types of information, such as (i) the charged energy level of each power-transfer path segment 310 recorded for at least one past traveling of the mobile object 100 on the corresponding power-transfer path segment 310 and (ii) the traveling speed recorded for past traveling of the mobile object 100 along the traveling path 300c.

Alternatively, the available power information Dr may include a single type of information. Specifically, the available power information Dr may include a constant for each power-transfer path segment 310 based on the product of the length L and the suppliable power output P of the corresponding power-transfer path segment 310. The wireless power transfer system 10c of the ninth embodiment therefore need not store the separate values of the length L and the suppliable power output P of each power-transfer path segment 310 like the power-transfer management unit 400c of the fourth embodiment.

The third traveling speed V_com for a power-transfer path segment 32 is determined once the requested energy W_com is set when the product L × P is constant, as indicated by the formula (2). For this reason, if the power-transfer path segments 310 have the same length L and the same suppliable power output P, it is unnecessary to change the available power information Dr for each power-transfer path segment 310.

The wireless power transfer system 10c of the ninth embodiment is configured to determine, as the available power information Dr, the constant for each power-transfer path segment 310 based on the product of the length L and the suppliable power output P of the corresponding power-transfer path segment 310. This therefore makes it possible to simplify calculation of the third traveling speed V_com for each power-transfer path segment 32.

Tenth embodiment

The available power information Dr is a single constant for each power-transfer path segment 310 according to the ninth embodiment. The available power information Dr may include a plurality of constants defined based on the operating status of the mobile object 100 according to the tenth embodiment. T

The following describes an example of the available power information Dr according to the tenth embodiment.

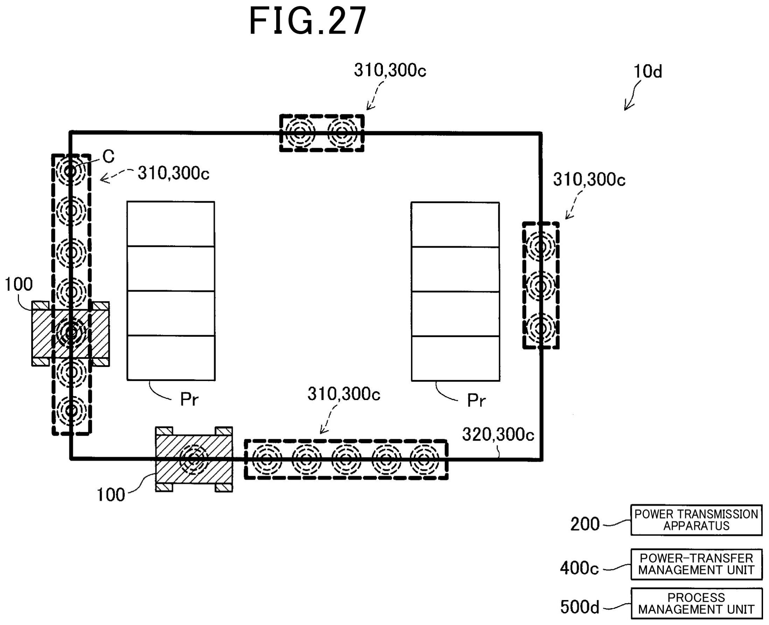

Fig. 27 illustrates a wireless power transfer system 10d of the tenth embodiment, which is a modification of the wireless power transfer system 10c of the fourth embodiment. The wireless power transfer system 10d includes a process management unit 500d. The components that differ from those of the fourth embodiment are denoted by reference numerals suffixed with "d".

In particular, the following describes different points of process management unit 500d of the tenth embodiment from the process management unit 500 of the third embodiment illustrated in Fig. 13. The components that differ from those of the process management unit 500c of the third embodiment are denoted by reference numerals suffixed with "d".

The process management unit 500d of the tenth embodiment manages operations of mobile objects 100b and checks an available power budget that can be allocated to the mobile objects 100b. The process management unit 500d monitors the operating status of each of the mobile objects 100b on the traveling path 300c.

The process management unit 500d determines, as the power situation of each process, a fraction of the rated power of the corresponding process that can be allocated to supplying power to the mobile bodies 100b (i.e., the available power budget for WPT to the mobile bodies 100b).

The process management unit 500d need not include the fourth traveling speed V4, the allowable time Tm, and the third communication unit 540 that are included in the process management unit 500 of the third embodiment.

The third control unit 510d of the process management unit 500d holds a plurality of items of available power information Dr.

The plurality of items of available power information Dr are, for example, a plurality of constants; each of the constants is based on the product of the length L and the suppliable power output P of the corresponding one of power-transfer path segments 310, selected from all the power-transfer path segments 310 in accordance with the operating status of the mobile objects 100b on the traveling path 300c and the process-power status.

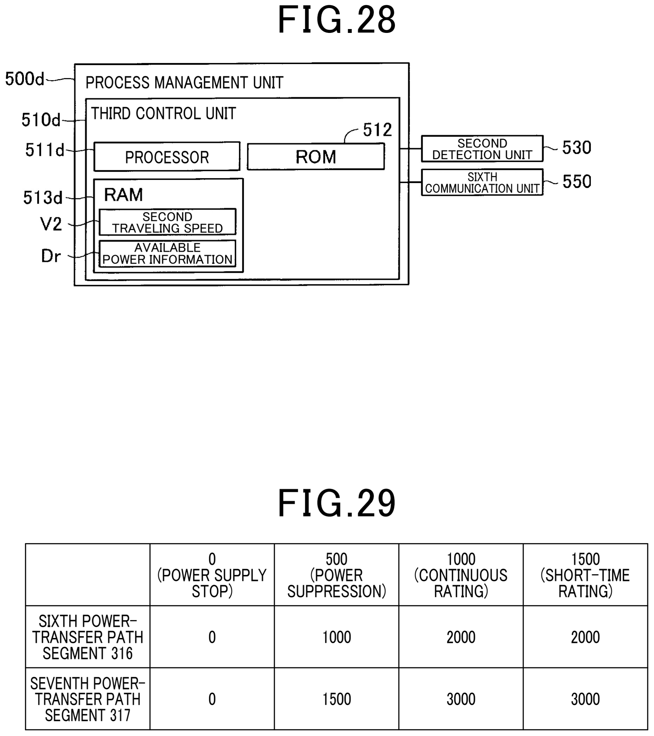

The following describes the plurality of items of available power information Dr specifically with reference to Fig. 29.

The table of Fig. 29 uses columns for four averaged transfer-power modes ("POWER SUPPLY STOP," "POWER SUPPRESSION," "CONTINUOUS RATING," and "SHORT-TIME RATING") and rows for path segments (e.g., the sixth path segment 316 and the seventh path segment 317).

The cell at each row-column intersection presents a Dr constant for that path segment under that mode; this constant is the item of the available-power information Dr.

The sixth path segment 316 has Dr constants of 0, 1000, 2000, and 2000 for the four modes, respectively; the seventh path segment 317 has the same Dr constants.

The third control unit 510 is configured to select, for the current mode, the Dr constant for each path segment 316, 317 from the corresponding column and uses it as the available-power information Dr for the corresponding path segment 316, 317.

The third controller 510d monitors the operating status of the fleet of mobile objects 100b, which will be referred to as "fleet", and the process-power status and, when the fleet load is high while surplus process power is available, selects larger Dr constants.

The averaged available-power output Pa may be switched to 1500 W; the third controller 510d then sets the available-power information Dr for the sixth power-transfer path segment 316 to 2000 and the available-power information Dr for the seventh power-transfer path segment 317 to 3000. The higher Dr constants make the computed third traveling speed V_com faster, thereby reducing schedule delay even under high fleet load.

The third controller 510d includes the items of available-power information Dr. The third controller 510d instructs the first controller 411x, in accordance with the operating status of the mobile objects 100b and the process-power status, to select one item of available-power information Dr from the items of available-power information Dr for each power-transfer path segment 310. The first controller 411x calculates the third traveling speed V_com based on the selected item of available-power information D_r for each power-transfer path segment 310.

The wireless power-transfer system 10d of the tenth embodiment is configured to control the third traveling speed V_com of each of the mobile objects 100b in accordance with the operating status of the mobile objects 100b.

Specifically, the wireless power-transfer system 10d is configured to increase the suppliable power output P on each power-transfer path segment 310 when the fleet load is high and process-power margin is present, enabling the third traveling speed V_com to be faster. The wireless power-transfer system 10d therefore enables efficient battery charging in accordance with the fleet operating status and the process-power status.

Eleventh embodiment

The first controller 411x_c controls recalculation of the third traveling speed V_com at a control interval defined by a preset count N of segment-exit events detected by the first detection unit 430c; in the fourth embodiment, N is set to four, so the third traveling speed V_com is recalculated once per circuit of the looped traveling path 300c.

The first control unit 411x_c may alternatively perform recalculation of the third traveling speed V_com for each power-transfer path segment 310 upon detection of departure from the preceding segment; the recalculated third traveling speed V_com is applied to the next segment to be entered.

The wireless power transfer system 10c detects departure of the mobile object 100 from each power-transfer path segment 310 to accordingly change the traveling speed of the mobile object 100 for each power-transfer path segment 310. This therefore enables finer-grained speed control as compared with a configuration that calculates a traveling speed of the mobile object 100 for a combination of multiple power-transfer path segments 310.

Twelfth embodiment

The power transfer information Dc according to the fourth to tenth embodiments does not include a route instruction R. The power transfer information Dc may, however, include a route instruction R that designates a route combining any one of the non-power-transfer path segments 320 with any one of the power-transfer path segments 310. The one or more power-transfer path segments 310 may be power-transfer path segments 310, each of which has a predetermined speed band Vb for limiting the first traveling speed V1 on the corresponding one of the segments. The first controller 411x may determine a route instruction R that directs the mobile object 100 to any one of the plurality of power-transfer path segments 310 having a predetermined speed band Vb that limits the third traveling speed V_com based on the determination of the first traveling speed V1. One of the control routines illustrated in Figs. 5 to 7 for the wireless power transfer system 10 may also be performed in each of the fourth to tenth embodiments.

The twelfth embodiment, which is the above modification of each of the fourth to tenth embodiment, makes it possible to achieve the advantageous effects that are the same as those achieved by the first embodiment.

Thirteenth embodiment

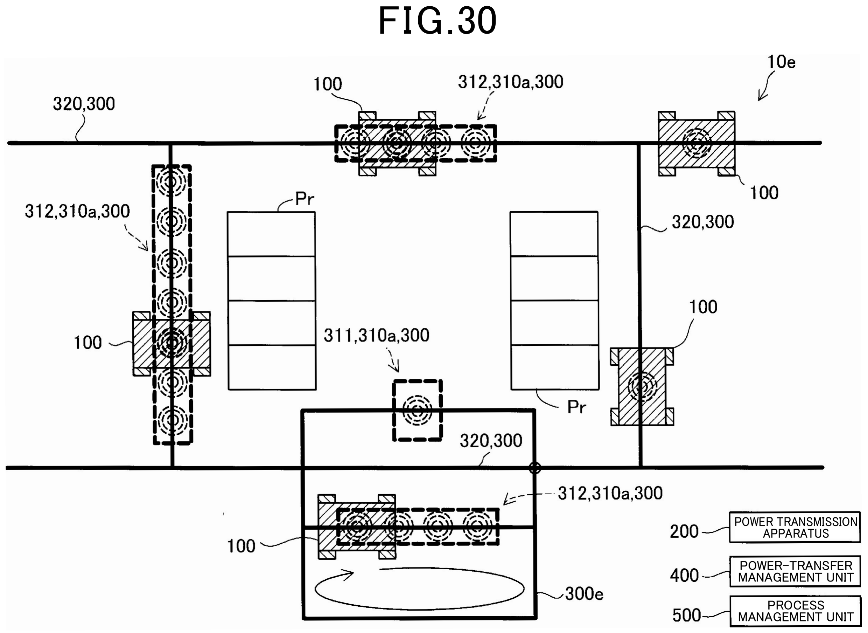

A wireless power transfer system 10e of the thirteenth embodiment further includes a looped traveling path 300e, which includes the second power-transfer path segment 312, constituted by selected traveling path segments 300 as compared with the wireless power transfer system 10b of the third embodiment. The first controller 411x determines, after notification of the predicted extension time Te, a route instruction R directing the mobile object 100 toward the looped traveling path 300e when the traveling path segments 300 constitute the looped traveling path 300e. The wireless power transfer system 10e, for example, causes a mobile object 100a to circulate through the second power-transfer path segment 312 after notifying the process management unit 500 of the predicted extension time Te, as shown at the lower part of Fig. 30.

The mobile object 100a therefore repeatedly travels along the same power-transfer path segment 312 until charging of the battery 120 is completed. This prevents the traveling of the mobile object 100a from interrupting the traveling of another mobile object 100 following the mobile object 100a.

Fourteenth embodiment

The third control unit 510 of the third embodiment may be modified to establish a fourteenth embodiment.

Specifically, the third control unit 510 of the fourteenth embodiment is configured to cause, after notifying the process management unit 500 of the predicted extension time Te, another mobile object 100 other than the mobile object 100a related to the notification to travel along the route of the mobile object 100a related to the notification.

The work to be performed by the mobile object 100a can therefore be substituted by another mobile object 100.

Modifications

The mobile objects 100 according to the above embodiments have been described as an optically guided AGV. However, any mobile object that performs wireless power transfer may be used. For example, the mobile object 100 may be an AGV of an image-recognition guidance type, magnetic-guidance type, or laser-guidance type, or may be an autonomous mobile robot (AMR). The mobile objects 100 are not limited to unmanned vehicles; they may manned vehicles or even aircrafts. Typical types of vehicles, electric vehicles or plug-in hybrid electric vehicles, may also be used as mobile objects 100 in addition to AGVs. The mobile objects 100 may be vehicles, the traveling speed of each of which is controlled by autonomous-driving control, auto-cruise control, or control by a fleet-management center that manages multiple vehicles. The mobile objects 100 may also be manually driven vehicles in each of which a speed command value are displayed near the driver's seat and the driver operates the corresponding vehicle to match that speed command value.

Multiple power-transfer path segments 310 and multiple non-power transfer path segments 320 are present in the wireless power transfer system 10, 10a, 10b, 10c, 10d, 10e according to the above embodiments.

However, there may be only one power-transfer path segment 310 and only one non-power transfer path segment 320. It is sufficient that the wireless power transfer system 10, 10a, 10b, 10c, 10d, 10e includes at least one power-transfer path segment 310 and at least one non-power transfer path segment 320.

The first detection unit 430 and the second detection unit 530 detect the mobile object 100 using cameras according to the above embodiments. The detection method is not limited to such cameras. For example, the mobile object 100 may be detected by an infrared sensor. In such a case, infrared light is emitted toward the power-transfer path segments 300, and the mobile object 100 is detected based on infrared light reflected from the mobile object 100 while it passes through the irradiation region of the infrared sensor.

The battery sensor 130 periodically acquires the remaining capacity Wb of the battery 120 along a selected traveling-path segment 300 according to the above embodiments. However, the battery sensor 130 may acquire the remaining capacity Wb only at each of specific locations on a selected traveling-path segment 300. For example, the battery sensor 130 may acquire the remaining capacity Wb at the entry/exit of a power-transfer path segment 310. The acquisition of the remaining capacity Wb may be triggered in response to, for example, a change in charging voltage as a mobile object 100 passes the entry/exit of the power-transfer path segment 310, or in response to a notification based on detection by the first detection unit 430. The first detection unit 430 may be configured to monitor locations other than the entry/exit of a power-transfer path segment 310, so that the remaining capacity Wb may be acquired at one of the locations other than the entrance/exit of the power-transfer path segment 310.

The wireless power transfer system 10, 10a, 10b, 10c, 10d, 10e stops reception of power by the mobile object 100 on a power-transfer path segment 310 in accordance with the remaining capacity Wb according to the above embodiments. However, the system 10, 10a, 10b, 10c, 10d, 10e need not stop reception of power by the mobile object 100.

In accordance with the remaining capacity Wb, the wireless power transfer system 10, 10a, 10b, 10c, 10d, 10e transmits, as the power transfer information Dc, a route instruction R that returns the mobile object 100 from a power-transfer path segment 310 to a non-power transfer path segment 320 according to the above embodiments. However, the wireless power transfer system need not transmit such a route instruction R in accordance with the remaining capacity Wb. Specifically, even when the remaining capacity Wb exceeds the predetermined reference energy Wa (e.g., 80% of the rated capacity Wm, the wireless power transfer system 10, 10a, 10b, 10c, 10d, 10e need not change the route of the mobile object 100 to return from the power-transfer path segment 310 to the non-power transfer path segment 320.

The route instruction R may be suspended under the first condition that the both the predicted charging time Tc is longer than the predetermined charging time TC_o and the SOC So of the battery 120 is higher than the reference SOC Som or the second condition that only the SOC So of the battery 120 is higher than the reference SOC Som according to the above embodiments. Alternatively, the route instruction R may be suspended in accordance with the remaining capacity Wb. For example, the route instruction R may be suspended only when the remaining capacity Wb exceeds the reference energy Wa.

Notification to the process management unit 500 is performed when, for each power-transfer path segment 310, the predicted charging time Tc is longer than the predetermined charging time Tc_o and, in addition, the SOC So of the battery 120 is lower than the reference SOC Som according to the above embodiments. However, notification to the process management unit 500 may instead be performed only when, for each power-transfer path segment 310, the predicted charging time Tc is longer than the predetermined charging time Tc_o.

The power-transfer management unit 400 and the process management unit 500 according to the above embodiments may be implemented by a single computer. They may alternatively be implemented as servers on a network.

Communications between the power-transfer management unit 400 and the process management unit 500 according to the above embodiments are not limited to wireless communication and may be wired.

The power-supply management unit 400 according to the above embodiments includes the first controller 411x that calculates the requested energy W_com for the battery 120. Alternatively, the mobile object 100 may include the first controller 411x that calculates the requested energy W_com.

Wireless power transfer is performed at a resonance frequency of 85 kHz according to the above embodiments. The resonance frequency is not limited to 85 kHz; for example, 80 kHz or 90 kHz may be used.

The first reference capacity C1 is calculated in accordance with Wm × 0.8 according to the above embodiments, but the first reference capacity C1 is not limited to Wm × 0.8; for example, the first reference capacity C1 may be calculated in accordance with Wm × 0.9 or Wm × 0.7.

The traveling path 300c is configured as a looped path according to the above embodiment. However, the traveling path 300c may be a linear or curved path. In this modification, the mobile object 100 travels back and forth along the linear or curved path.

The first detection unit 430c of the fourth embodiment is provided in the power-transfer management unit 400c. Alternatively, the first detection unit 430c may be provided in the mobile object 100. For example, the first detection unit 430c provided in the mobile object 100 may detect departure from a power-transfer path segment 310 based on the power reception (charging) condition.

The mobile object 100 of the fifth embodiment is provided with a power sensor. However, the mobile object 100 of the fifth embodiment need not include a power sensor; the charged energy level of each power-transfer path segment 310 may be obtained by the battery sensor 130.

The FB control and the (FF + FB) control according to the corresponding embodiments are implemented by PI control, but they are not limited to PI control; various control methods such as model-based modern control or bang-bang control may be used.

The items of available-power information Dr include a plurality of constants according to the tenth embodiment. Alternatively, the items of available-power information Dr may be calculated by a function that takes the averaged available power output Pa as an argument.

The first controller 411xc executes calculation of the third traveling speed V_com every predetermined control interval during which the mobile object 100 traverses two power-transfer path segments 310 according to the seventh embodiment. However, the predetermined control interval may be determined to allow the mobile object 100 is able to pass through at least two power-transfer path segments 310. For example, the first controller 411xc may execute calculation of the third traveling speed V_com every predetermined control interval during which the mobile object 100 traverses at least three or four power-transfer path segments 310.

The power-transfer management unit 400c performs FB control based on the received-power record of the mobile object 100 for the traveling path 300c including, for example, (i) the charged energy level of each power-transfer path segment 310 recorded for at least one past traveling of the mobile object 100 on the corresponding power-transfer path segment 310 and (ii) the traveling speed recorded for past traveling of the mobile object 100 along the traveling path 300c according to the corresponding embodiments. In the FB control, the power-transfer management unit 400c may additionally impose restrictions (data screening).

For example, when the mobile object 100 performs a task, the mobile object 100 may stop even though the third traveling speed V_com is commanded. In such an example, more energy is charged in the battery 120 than would be obtained by traveling continuously at the third traveling speed V_com, and the measured charged energy deviates from the value intended to be charged by traveling at the third traveling speed V_com. From this viewpoint, the power-supply management unit 400 may, for example, measure the traveling time of the mobile object 100 and, when the traveling time is relatively longer than in past runs, exclude the corresponding received-power record. This makes it possible to eliminate such received-power records that are unsuitable for calculating the third traveling speed V_com.

The above embodiments are also applicable to charging of autonomous mobile robots (AMRs) for which the non-power transfer path segment(s) 320 may include paths other than the predetermined traveling path segment(s) 300, i.e., the AMR can travel along ad-hoc paths outside the prescribed traveling path segments 300.

The present disclosure is not limited to the above embodiments, and can be implemented by various configurations within the scope of the present disclosure. For example, technical features included in the embodiments, which correspond to technical features included in the exemplary aspects described in the SUMMARY of the present disclosure, can be freely combined with each other or can be freely replaced with another feature in order to solve a part or all of the above issue and/or achieve a part or all of the above advantageous benefits. One or more of the technical features included in the above exemplary embodiments, which are not described as essential elements in the specification, can be omitted as necessity arises.

The following describes features of the present disclosure.

[First feature]

A wireless power transfer system (10, 10a, 10b, 10c, 10d, 10e) for wireless power transfer to at least one mobile object (100, 100a, 100b) according to a first feature includes a power transmission apparatus (200) configured to perform power transmission, and a plurality of traveling-path segments (300, 300c) that includes (i) one or more power-transfer path segments (310) through which the power transmission is performed, and (ii) one or more non-power transfer path segments (320) other than the one or more power-transfer path segments. The wireless power transfer system includes a power-transfer management unit (400, 400a, 400b, 400c) configured to control the wireless power transfer system.

The at least one mobile object is configured to travel on the one or more power-transfer path segments.

The at least one mobile object includes a power reception unit (110) configured to perform reception of the power transmitted from the power transmission apparatus, a battery (120) configured to be chargeable by a predetermined suppliable power output (P) as the power, a battery sensor (130) configured to measure a remaining capacity (Wb) of the battery, a first communication unit (140) configured to communicate with the power-transfer management unit, and a first control unit (150) configured to control the at least one mobile object.

The power transmission apparatus includes at least one power transmission coil (220) provided on each of the one or more power-transfer path segments, and a power supply unit (210) configured to output, to the at least one mobile object through the at least one power transmission coil, the suppliable power output (P).

The power-transfer management unit includes a first controller (411x, 411xc) configured to generate power transfer information (Dc), and a second communication unit (420) configured to communicate with the first communication unit.

One of the at least one mobile object and the power-transfer management unit includes a third controller (411y) configured to calculate, based on the remaining capacity of the battery, requested energy (W_com) of the battery. The power transfer information is information used by the first control unit for controlling travel and the reception of the power of the at least one mobile object. The power transfer information includes a first traveling speed (V1) for a predetermined route that includes at least one selected power-transfer path segment included in the one or more power-transfer path segments, or a combination of at least one selected non-power transfer path segment included in the one or more non-power transfer path segments and the at least one selected power-transfer path segment.

The at least one mobile object, which travels at a second traveling speed (V2) on the at least one non-power transfer path segment, is controlled to travel at the first traveling speed on the at least one power-transfer path segment.

The first controller is configured to calculate, as the first traveling speed, a third traveling speed required to charge the battery of the at least one mobile object traveling on the route up to the requested energy in accordance with available power information (Dr) and the requested energy, the available power information being predetermined related to a power delivery capability of the at least one power-transfer path segment. The first controller is configured to transmit, through the second communication unit, the third traveling speed to the at least one mobile object.

[Second feature]

In the wireless power transfer system according to a second feature, which depends from the first feature, the first controller is configured to determine the available power information based on the power delivery capability of the at least one selected power-transfer path segment included in the route.

[Third feature]

In the wireless power transfer system according to a third feature, which depends from the first feature, the at least one mobile object further includes a power sensor configured to acquire a charged energy level by the reception of the power. The available power information includes a received-power record of the at least one mobile object. The received-power record includes information on the power delivery capability related to the route before calculation of the third traveling speed, the received-power record being related to the charged energy level.

[Fourth feature]

In the wireless power transfer system according to a fourth feature, which depends from the first feature, the at least one mobile object further includes a power sensor configured to acquire a charged energy level by the reception of the power. The first controller is configured to determine, at one of plural control cycles of the route, the available power information based on the power delivery capability of the at least one selected power-transfer path segment included in the route. The first controller is configured to determine, at a next one of the control cycles of the route after the first control cycle, a received-power record of the at least one mobile object as the available power information. The received-power record includes information on the power delivery capability related to the route acquired in a past one of the control cycles, the received-power record being related to the charged energy level.

[Fifth feature]

In the wireless power transfer system according to a fifth feature, which depends from the first feature, the third control unit is configured to calculate the requested energy in accordance with a difference between the remaining capacity and a first reference capacity (C1) based on a rated capacity of the battery.

[Sixth feature]

In the wireless power transfer system according to a sixth feature, which depends from the first feature, the third control unit is configured to calculate the requested energy based on a predetermined relationship between an elapsed operating time of the at least one mobile body and the remaining capacity assuming that a second reference capacity (C2) smaller than a rated capacity (Wm) of the battery is set as a lower limit of the remaining capacity at an end time (Te) of a predetermined operating period (Ta) of the at least one mobile object.

[Seventh feature]

In the wireless power transfer system according to a seventh feature, which depends from any one of the first to sixth features, the at least one selected power-transfer path segments included in the path includes multiple power-transfer path segments. One of the at least one mobile object and the power-transfer management unit further includes a first detection unit (430c) configured to detect a departure of the at least one mobile object from one of the multiple power-transfer path segments included in the path. The first control unit is configured to control calculation of the third traveling speed for each of the multiple power-transfer path segments in response to detection of the departure by the first detection unit.

[Eighth feature]

In the wireless power transfer system according to an eighth feature, which depends from any one of the first to sixth features, the at least one selected power-transfer path segments included in the path comprises multiple power-transfer path segments. One of the at least one mobile object and the power-transfer management unit further includes a first detection unit (430c) configured to detect a departure of the at least one mobile object from one of the multiple power-transfer path segments included in the path. The first control unit is configured to control calculation of the third traveling speed for each of at least predetermined two or more ones of the multiple power-transfer path segments in accordance with the number of detected departures by the first detection unit.

[Ninth feature]

In the wireless power transfer system according to a ninth feature, which depends from any one of the first to sixth features, the at least one selected power-transfer path segments included in the path includes multiple power-transfer path segments. The at least one mobile object is controlled to travel on the route at the third traveling speed that is higher than or equal to a fourth traveling speed. The first controller is configured to control calculation of the third traveling speed every control interval that enables the at least one mobile object to traverse at least two power-transfer path segments of the multiple power-transfer path segments included in the path. The power-transfer management unit is configured to store the fourth traveling speed, a length of each of the one or more power-transfer path segments, a length of each of the one or more non-power transfer path segments, and the suppliable power output. The power-transfer management unit is configured to determine, based on the fourth traveling speed, the length of each of the one or more power-transfer path segments, the length of each of the one or more non-power transfer path segments, the length of each of the at least two power-transfer path segments and the suppliable power output as the available power information.

[Tenth feature]

The wireless power transfer system according to a tenth feature, which depends from the first feature, further includes a process management unit (500) configured to manage an operating status of each of plural mobile objects, each of which corresponds to the at least one mobile object, and check an available power budget allocable to the plural mobile objects.
The process management unit includes a sixth communication unit (550) configured to communicate with the power-transfer management unit, and a third control unit (510) configured to control the process management unit.
The power-transfer management unit further includes a fourth communication unit configured to communicate with the process management unit. The available power information includes a plurality of items of available power information. The third control unit is configured to store the plurality of items of available power information, and notify, to the first control unit, a determination of one of the items of available power information in accordance with the operating status of each of the plural mobile objects. The first control unit is configured to calculate the third traveling speed based on the one of the items of available power information.

[Eleventh feature]

In the wireless power transfer system according to an eleventh feature, which depends from the first feature, the power transfer information further includes a route instruction (R) including, as the route, the combination of the at least one selected non-power transfer path segment and the at least one selected power-transfer path segment. The at least one selected power-transfer path segment includes multiple power-transfer path segments, a predetermined speed band (Vb) being set to each of the multiple power-transfer path segments to limit the first traveling speed. the first control unit is configured to determine, based on determination of the first traveling speed, the route instruction indicating the at least one mobile object toward one of the multiple power-transfer path segments to each of which the predetermined speed band is set.

[Twelfth feature]

In the wireless power transfer system according to a twelfth feature, which depends from the eleventh feature, the at least one mobile object includes plural mobile objects. The power-transfer management unit includes a first detection unit (430) configured to detect, for each of the multiple power-transfer path segments, (i) the first traveling speed and (ii) the number of detected mobile objects included in the plural mobile objects, the detected mobile objects being located on the corresponding one of the multiple power-transfer path segments. The first control unit is configured to select one of the detected mobile objects, the third traveling speed of the selected one of the detected mobile objects being slowest as a slowest third traveling speed, and change the third traveling speed of each of the detected mobile objects to the slowest third traveling speed.

[Thirteenth feature]

In the wireless power transfer system according to a thirteenth feature, which depends from the twelfth feature, the power transfer information includes an stop instruction for stopping the reception of the power. The first control unit is configured to determine, during the reception of the power by the at least one mobile object being performed, stop of the reception of the power by the at least one mobile object in response to determination that the remaining capacity of the at least one mobile object exceeds reference energy (Wa).

[Fourteenth feature]

In the wireless power transfer system according to fourteenth feature, which depends from the thirteenth feature, the first control unit is configured to determine the route instruction indicating the at least one mobile object toward any one of the one or more non-power transfer path segments in response to determination that the remaining capacity of the at least one mobile object exceeds the reference energy.

[Fifteenth feature]

In the wireless power transfer system according to a fifteenth feature, which depends from the first feature, the power transfer information further includes a route instruction (R) including, as the route, the combination of the at least one selected non-power transfer path segment and the at least one selected power-transfer path segment. The first traveling speed is a traveling speed of the at least one selected power-transfer path segment. The at least one mobile object is controlled to travel, when traveling at the second traveling speed, the at least one selected power-transfer path segment in response to reception of an instruction based on the power transfer information.

The first controller is configured to control acquisition of the remaining capacity of the at least one mobile object, and calculate, based on a length and the suppliable power output of the at least one selected power-transfer path segment included in the route, the third traveling speed.

[Sixteenth feature]

In the wireless power transfer system according to a sixteenth feature, which depends from the fifteenth feature, the at least one selected power-transfer path segment includes multiple power-transfer path segments, a predetermined speed band (Vb) being set to each of the multiple power-transfer path segments to limit the first traveling speed. The first control unit is configured to determine, based on determination of the first traveling speed, the route instruction indicating the at least one mobile object toward one of the multiple power-transfer path segments to each of which the predetermined speed band is set.

[Seventeenth feature]

In the wireless power transfer system according to a seventeenth feature, which depends from the sixteenth feature, the at least one mobile object comprises plural mobile objects. The power-transfer management unit includes a first detection unit (430) configured to detect, for each of the multiple power-transfer path segments, (i) the first traveling speed and (ii) the number of detected mobile objects included in the plural mobile objects, the detected mobile objects being located on the corresponding one of the multiple power-transfer path segments. The first control unit is configured to select one of the detected mobile objects, the third traveling speed of the selected one of the detected mobile objects being slowest as a slowest third traveling speed, and change the third traveling speed of each of the detected mobile objects to the slowest third traveling speed.

[Eighteenth feature]

In the wireless power transfer system according to an eighteenth feature, which depends from the seventeenth feature, the power transfer information includes an stop instruction for stopping the reception of the power. The first control unit is configured to determine, during the reception of the power by the at least one mobile object being performed, stop of the reception of the power by the at least one mobile object in response to determination that the remaining capacity of the at least one mobile object exceeds reference energy (Wa).

[Nineteenth feature]

In the wireless power transfer system according to a nineteenth feature, which depends from the eighteenth feature, the first control unit is configured to determine, during the reception of the power by the at least one mobile object being performed, the route instruction indicating the at least one mobile object toward any one of the one or more non-power transfer path segments in response to determination that the remaining capacity of the at least one mobile object exceeds the reference energy.

[Twentieth feature]

In the wireless power transfer system according to a twentieth feature, which depends from any one of the eleventh feature, twelfth feature, thirteenth feature, seventeenth feature, eighteenth feature, and nineteenth feature, the at least one mobile object includes an SOC acquisition unit (151ax) configured to acquire an SOC (So) of the battery. The power-transfer management unit comprises a second controller (411z) configured to generate time information (T) on the at least one mobile object based on the power transfer information, and calculate, on condition that the remaining capacity is acquired before determination of the route instruction, a predicted charging time (Tc) of each of the multiple power-transfer path segments as the time information in accordance with the suppliable power output and the requested energy. The first controller is configured to cancel the determination of the route instruction in response to determination that the predicted charging time (Tc) is longer than a predetermined charging time and the SOC of the battery is higher than a predetermined reference SOC (Som).

[Twenty-first feature]

In the wireless power transfer system according to a twenty-first feature, which depends from any one of the eleventh feature, twelfth feature, thirteenth feature, seventeenth feature, eighteenth feature, and nineteenth feature, the at least one mobile object includes an SOC acquisition unit (151ax) configured to acquire an SOC (So) of the battery. The first controller is configured to cancel, on condition that the remaining capacity is acquired before determination of the route instruction, the determination of the route instruction in response to determination that the SOC of the battery is higher than a predetermined reference SOC (Som).

[Twenty-second feature]

The wireless power transfer system according to a twenty-second feature, which depends from any one of the eleventh feature, twelfth feature, thirteenth feature, seventeenth feature, eighteenth feature, and nineteenth feature, further includes a process management unit (500) for managing an operation of each of plural mobile objects on the plurality of traveling-path segments, each of which corresponds to the at least one mobile object, the process management unit comprising a third communication unit (540) configured to communicate with the power-transfer management unit.
The power-transfer management unit includes a second controller (411z) configured to generate time information (T) on each of the plural mobile objects based on the power transfer information, and a fourth communication unit configured to communicate with the process management unit.
the second controller is configured to

(I) Calculate, on condition that the remaining capacity is acquired before determination of the route instruction, a predicted charging time (Tc) of each of the multiple power-transmission path segments as the time information in accordance with the suppliable power output and the requested energy;

(II) Calculate, in response to determination that a predicted charging time (Tc) of each of the multiple power-transmission path segments is longer than a predetermined charging time of the corresponding one of the multiple power-transmission path segments by the first controller, a predicted extension time (Te) for each of the multiple power-transmission path segments as the time information, the predicted extension time (Te) for each of the multiple power-transmission path segments representing a result of subtracting a predetermined allowable time for the corresponding one of the multiple power-transmission path segments from the predicted charging time (Tc) of the corresponding one of the multiple power-transmission path segments

(III) Notify the process management unit of the time information therefrom

The first controller is configured to determine the route instruction after notification of the time information.

[Twenty-third feature]

The wireless power transfer system according to a twenty-third feature, which depends from any one of the eleventh feature, twelfth feature, thirteenth feature, seventeenth feature, eighteenth feature, and nineteenth feature, further includes a process management unit (500) for managing an operation of the at least one mobile object on the one or more traveling-path segments.

The at least one mobile object includes a fifth communication unit (180) configured to communicate with the power-transfer management unit.

The process management unit includes a second detection unit configured to perform detection of a traveling time of the at least one mobile object on each of the multiple power-transmission path segments, and departure of the at least one mobile object from each of the multiple power-transmission path segments.

The process management unit includes a third control unit configured to control the process management unit, and a sixth communication unit configured to communicate with the at least one mobile object.

The third control unit is configured to

(I) Determine the second traveling speed before the at least one mobile object travels at least one of the traveling-path segments

(II) Determine, on condition that the detection of the second detection unit is completed, whether the traveling time of the at least one mobile object on each of the multiple power-transmission path segments is longer than a predetermined allowable time (Tm)

(III) Change the second speed detected by the second detection unit to a fifth traveling speed that is faster than the second traveling speed in response to determination that the traveling time of the at least one mobile object on each of the multiple power-transmission path segments is longer than the predetermined allowable time

[Twenty-fourth feature]

In the wireless power transfer system according to a twenty-fourth feature, which depends from any one of the eleventh feature, twelfth feature, thirteenth feature, seventeenth feature, eighteenth feature, and nineteenth feature, the multiple power-transfer path segments include at least one first power-transfer path segment for charging the at least one mobile object in a stopped state, and at least one second power-transfer path segment for charging the at least one mobile object while the at least one mobile object is traveling.

The power-transfer management unit includes a second controller configured to generate time information (T) on the at least one mobile object based on the power transfer information, and calculate, on condition that the remaining capacity is acquired before determination of the route instruction, a predicted charging time (Tc) of each of the multiple power-transfer path segments as the time information in accordance with the suppliable power output and the requested energy.

The first controller is configured to determine whether the predicted charging time of each of the multiple power-transmission path segments is longer than a predetermined charging time of the corresponding one of the multiple power-transmission path segments, and determine the route instruction indicating the at least one first power-transfer path segment in response to determination that the predicted charging time of each of the multiple power-transmission path segments is longer than the predetermined charging time of the corresponding one of the multiple power-transmission path segments.

[Twenty-fifth feature]

In the wireless power transfer system according to a twenty-fifth feature, which depends from the twenty-second feature, the multiple power-transfer path segments include a looped power-transfer segment, and the first controller is configured to determine, as the route instruction after the notification, an instruction toward the looped power-transfer path segment.

[Twenty-sixth feature]

In the wireless power transfer system according to a twenty-fifth feature, which depends from the twenty-second feature, the process management unit comprises a third control unit configured to cause another mobile object other than the at least one mobile object related to the notification to travel along the route of the at least one mobile object.

[Twenty-seventh feature]

A power transmission apparatus according to a twenty-seventh feature for performing power transmission to be used in a wireless power transfer system for wireless power transfer to at least one mobile object is provided. The wireless power transfer system includes a plurality of traveling-path segments that includes (i) one or more power-transfer path segments through which the power transmission is performed, and (ii) one or more non-power transfer path segments other than the one or more power-transfer path segments. The wireless power transfer system includes a power-transfer management unit configured to control the wireless power transfer system. The at least one mobile object is configured to travel on the one or more power-transfer path segments.

The at least one mobile object includes a power reception unit configured to perform reception of the power transmitted from the power transmission apparatus, a battery configured to be chargeable by a predetermined suppliable power output as the power, a battery sensor configured to measure a remaining capacity of the battery, a first communication unit configured to communicate with the power-transfer management unit, and a first control unit configured to control the at least one mobile object.

The power transmission apparatus includes at least one power transmission coil provided on each of the one or more power-transfer path segments, and a power supply unit configured to output, to the at least one mobile object through the at least one power transmission coil, the suppliable power output.

The power-transfer management unit includes a first controller configured to generate power transfer information, and a second communication unit configured to communicate with the first communication unit.

One of the at least one mobile object and the power-transfer management unit includes a third controller configured to calculate, based on the remaining capacity of the battery, requested energy of the battery. The power transfer information is information used by the first control unit for controlling travel and the reception of the power of the at least one mobile object. The power transfer information includes a first traveling speed for a predetermined route that includes at least one selected power-transfer path segment included in the one or more power-transfer path segments, or a combination of at least one selected non-power transfer path segment included in the one or more non-power transfer path segments and the at least one selected power-transfer path segment.

The at least one mobile object, which travels at a second traveling speed on the at least one non-power transfer path segment, is controlled to travel at the first traveling speed on the at least one power-transfer path segment. The first controller is configured to calculate, as the first traveling speed, a third traveling speed required to charge the battery of the at least one mobile object traveling on the route up to the requested energy in accordance with available power information and the requested energy, the available power information being predetermined related to a power delivery capability of the at least one power-transfer path segment. The first controller is configured to transmit, through the second communication unit, the third traveling speed to the at least one mobile object.

[Twenty-eighth feature]

In the power transmission apparatus according to a twenty-eighth feature, which depends from the twenty-seventh feature, the at least one selected power-transfer path segment comprises multiple power-transfer path segments, a predetermined speed band being set to each of the multiple power-transfer path segments to limit the first traveling speed. The power transfer information further includes a route instruction including, as the route, the combination of the at least one selected non-power transfer path segment and the at least one selected power-transfer path segment. the first control unit is configured to determine, based on determination of the first traveling speed, the route instruction indicating the at least one mobile object toward one of the multiple power-transfer path segments to each of which the predetermined speed band is set.

[Twenty-ninth feature]

A power reception apparatus according to a twenty-ninth feature is provided at least one mobile object for power reception. The power reception apparatus is usable in a wireless power transfer system for wireless power transfer to the at least one mobile object. The wireless power transfer system includes a power transmission apparatus configured to perform power transmission, and a plurality of traveling-path segments that includes (i) one or more power-transfer path segments through which the power transmission is performed, and (ii) one or more non-power transfer path segments other than the one or more power-transfer path segments. The wireless power transfer system includes a power-transfer management unit configured to control the wireless power transfer system.

The at least one mobile object is configured to travel on the one or more power-transfer path segments.

The power reception apparatus includes a power reception unit configured to perform reception of the power transmitted from the power transmission apparatus, a battery configured to be chargeable by a predetermined suppliable power output as the power, a battery sensor configured to measure a remaining capacity of the battery, a first communication unit configured to communicate with the power-transfer management unit, and a first control unit configured to control the at least one mobile object.

The power transmission apparatus includes at least one power transmission coil provided on each of the one or more power-transfer path segments, and a power supply unit configured to output, to the at least one mobile object through the at least one power transmission coil, the suppliable power output.

The power-transfer management unit includes a first controller configured to generate power transfer information, and a second communication unit configured to communicate with the first communication unit.

One of the at least one mobile object and the power-transfer management unit includes a third controller configured to calculate, based on the remaining capacity of the battery, requested energy of the battery.

The power transfer information is information used by the first control unit for controlling travel and the reception of the power of the at least one mobile object. The power transfer information includes a first traveling speed for a predetermined route that includes at least one selected power-transfer path segment included in the one or more power-transfer path segments, or a combination of at least one selected non-power transfer path segment included in the one or more non-power transfer path segments and the at least one selected power-transfer path segment.

The at least one mobile object, which travels at a second traveling speed on the at least one non-power transfer path segment, is controlled to travel at the first traveling speed on the at least one power-transfer path segment.

The first controller is configured to calculate, as the first traveling speed, a third traveling speed required to charge the battery of the at least one mobile object traveling on the route up to the requested energy in accordance with available power information and the requested energy, the available power information being predetermined related to a power delivery capability of the at least one power-transfer path segment. The first controller is configured to transmit, through the second communication unit, the third traveling speed to the at least one mobile object.

[Thirtieth feature]

In the power transmission apparatus according to a thirtieth feature, which depends from the twenty-ninth feature, the at least one selected power-transfer path segment includes multiple power-transfer path segments, a predetermined speed band being set to each of the multiple power-transfer path segments to limit the first traveling speed. The power transfer information further includes a route instruction including, as the route, the combination of the at least one selected non-power transfer path segment and the at least one selected power-transfer path segment. The first control unit is configured to determine, based on determination of the first traveling speed, the route instruction indicating the at least one mobile object toward one of the multiple power-transfer path segments to each of which the predetermined speed band is set.

**Claims**

1. A wireless power transfer system (10, 10a, 10b, 10c, 10d, 10e) for wireless power transfer to at least one mobile object (100, 100a, 100b), the wireless power transfer system comprising:

   a power transmission apparatus (200) configured to perform power transmission;
   a plurality of traveling-path segments (300, 300c) including:

   one or more power-transfer path segments (310) through which the power transmission is performed; and

one or more non-power transfer path segments (320) other than the one or more power-transfer path segments;

a power-transfer management unit (400, 400a, 400b, 400c) configured to control the wireless power transfer system,
the at least one mobile object being configured to travel on the one or more power-transfer path segments, the at least one mobile object comprising:

a power reception unit (110) configured to perform reception of the power transmitted from the power transmission apparatus;
a battery (120) configured to be chargeable by a predetermined suppliable power output (P) as the power;
a battery sensor (130) configured to measure a remaining capacity (Wb) of the battery;
a first communication unit (140) configured to communicate with the power-transfer management unit; and
a first control unit (150) configured to control the at least one mobile object,

the power transmission apparatus comprising:

at least one power transmission coil (220) provided on each of the one or more power-transfer path segments; and
a power supply unit (210) configured to output, to the at least one mobile object through the at least one power transmission coil, the suppliable power output (P), wherein:

the power-transfer management unit comprises:

a first controller (411x, 411xc) configured to generate power transfer information (Dc); and
a second communication unit (420) configured to communicate with the first communication unit;

one of the at least one mobile object and the power-transfer management unit comprises a third controller (411y) configured to calculate, based on the remaining capacity of the battery, requested energy (W_com) of the battery, the power transfer information being information used by the first control unit for controlling travel and the reception of the power of the at least one mobile object;
the power transfer information including a first traveling speed (V1) for a predetermined route that includes:

at least one selected power-transfer path segment included in the one or more power-transfer path segments; or
a combination of at least one selected non-power transfer path segment included in the one or more non-power transfer path segments and the at least one selected power-transfer path segment,

the at least one mobile object, which travels at a second traveling speed (V2) on the at least one non-power transfer path segment, being controlled to travel at the first traveling speed on the at least one power-transfer path segment; and
the first controller is configured to:

calculate, as the first traveling speed, a third traveling speed required to charge the battery of the at least one mobile object traveling on the route up to the requested energy in accordance with available power information (Dr) and the requested energy, the available power information being predetermined related to a power delivery capability of the at least one power-transfer path segment; and
transmit, through the second communication unit, the third traveling speed to the at least one mobile object.

2. The wireless power transfer system according to claim 1, wherein:
the first controller is configured to determine the available power information based on the power delivery capability of the at least one selected power-transfer path segment included in the route.

3. The wireless power transfer system according to claim 1, wherein:

the at least one mobile object further comprises a power sensor configured to acquire a charged energy level by the reception of the power;
the available power information including a received-power record of the at least one mobile object,

the received-power record including information on the power delivery capability related to the route before calculation of the third traveling speed, the received-power record being related to the charged energy level.

4. The wireless power transfer system according to claim 1, wherein:

the at least one mobile object further comprises a power sensor configured to acquire a charged energy level by the reception of the power; and
the first controller is configured to:

determine, at one of plural control cycles of the route, the available power information based on the power delivery capability of the at least one selected power-transfer path segment included in the route; and
determine, at a next one of the control cycles of the route after the first control cycle, a received-power record of the at least one mobile object as the available power information,

the received-power record including information on the power delivery capability related to the route acquired in a past one of the control cycles, the received-power record being related to the charged energy level.

5. The wireless power transfer system according to claim 1, wherein:
the third control unit is configured to calculate the requested energy in accordance with a difference between the remaining capacity and a first reference capacity (C1) based on a rated capacity of the battery.

6. The wireless power transfer system according to claim 1, wherein:
the third control unit is configured to calculate the requested energy based on a predetermined relationship between an elapsed operating time of the at least one mobile body and the remaining capacity assuming that a second reference capacity (C2) smaller than a rated capacity (Wm) of the battery is set as a lower limit of the remaining capacity at an end time (Te) of a predetermined operating period (Ta) of the at least one mobile object.

7. The wireless power transfer system according to any one of claims 1 to 6, wherein:

the at least one selected power-transfer path segments included in the path comprises multiple power-transfer path segments;
one of the at least one mobile object and the power-transfer management unit further comprises a first detection unit (430c) configured to detect a departure of the at least one mobile object from one of the multiple power-transfer path segments included in the path; and
the first control unit is configured to control calculation of the third traveling speed for each of the multiple power-transfer path segments in response to detection of the departure by the first detection unit.

8. The wireless power transfer system according to any one of claims 1 to 6, wherein:

the at least one selected power-transfer path segments included in the path comprises multiple power-transfer path segments;
one of the at least one mobile object and the power-transfer management unit further comprises a first detection unit (430c) configured to detect a departure of the at least one mobile object from one of the multiple power-transfer path segments included in the path; and
the first control unit is configured to control calculation of the third traveling speed for each of at least predetermined two or more ones of the multiple power-transfer path segments in accordance with the number of detected departures by the first detection unit.

9. The wireless power transfer system according to any one of claims 1 to 6, wherein:

the at least one selected power-transfer path segments included in the path comprises multiple power-transfer path segments;
the at least one mobile object is controlled to travel on the route at the third traveling speed that is higher than or equal to a fourth traveling speed; and
the first controller is configured to control calculation of the third traveling speed every control interval that enables the at least one mobile object to traverse at least two power-transfer path segments of the multiple power-transfer path segments included in the path; and
the power-transfer management unit is configured to:

store the fourth traveling speed, a length of each of the one or more power-transfer path segments, a length of each of the one or more non-power transfer path segments, and the suppliable power output; and determine, based on the fourth traveling speed, the length of each of the one or more power-transfer path segments, the length of each of the one or more non-power transfer path segments, the length of each of the at least two power-transfer path segments and the suppliable power output as the available power information.

10. The wireless power transfer system according to claim 1, further comprising:

a process management unit (500) configured to:

manage an operating status of each of plural mobile objects, each of which corresponds to the at least one mobile object; and
check an available power budget allocable to the plural mobile objects, wherein:

the process management unit comprises:

a sixth communication unit (550) configured to communicate with the power-transfer management unit; and
a third control unit (510) configured to control the process management unit;

the power-transfer management unit further comprises a fourth communication unit configured to communicate with the process management unit;
the available power information comprise a plurality of items of available power information;
the third control unit is configured to:

store the plurality of items of available power information; and
notify, to the first control unit, a determination of one of the items of available power information in accordance with the operating status of each of the plural mobile objects; and

the first control unit is configured to calculate the third traveling speed based on the one of the items of available power information.

11. The wireless power transfer system according to claim 1, wherein:

the power transfer information further includes a route instruction (R) including, as the route, the combination of the at least one selected non-power transfer path segment and the at least one selected power-transfer path segment;
the at least one selected power-transfer path segment comprises multiple power-transfer path segments, a predetermined speed band (Vb) being set to each of the multiple power-transfer path segments to limit the first traveling speed; and
the first control unit is configured to:
determine, based on determination of the first traveling speed, the route instruction indicating the at least one mobile object toward one of the multiple power-transfer path segments to each of which the predetermined speed band is set.

12. The wireless power transfer system according to claim 11, wherein:

the at least one mobile object comprises plural mobile objects; and
the power-transfer management unit comprises:
a first detection unit (430) configured to detect, for each of the multiple power-transfer path segments, (i) the first traveling speed and (ii) the number of detected mobile objects included in the plural mobile objects, the detected mobile objects being located on the corresponding one of the multiple power-transfer path segments; and
the first control unit is configured to:

select one of the detected mobile objects, the third traveling speed of the selected one of the detected mobile objects being slowest as a slowest third traveling speed; and
change the third traveling speed of each of the detected mobile objects to the slowest third traveling speed.

13. The wireless power transfer system according to claim 12, wherein:

the power transfer information includes an stop instruction for stopping the reception of the power; and
the first control unit is configured to determine, during the reception of the power by the at least one mobile object being performed, stop of the reception of the power by the at least one mobile object in response to determination that the remaining capacity of the at least one mobile object exceeds reference energy (Wa).

14. The wireless power transfer system according to claim 13, wherein:
the first control unit is configured to determine the route instruction indicating the at least one mobile object toward any one of the one or more non-power transfer path segments in response to determination that the remaining capacity of the at least one mobile object exceeds the reference energy.

15. The wireless power transfer system according to claim 1, wherein:

the power transfer information further includes a route instruction (R) including, as the route, the combination of the at least one selected non-power transfer path segment and the at least one selected power-transfer path segment;
the first traveling speed is a traveling speed of the at least one selected power-transfer path segment;
the at least one mobile object is controlled to travel, when traveling at the second traveling speed, the at least one selected power-transfer path segment in response to reception of an instruction based on the power transfer information; and
the first controller is configured to:

control acquisition of the remaining capacity of the at least one mobile object; and
calculate, based on a length and the suppliable power output of the at least one selected power-transfer path segment included in the route, the third traveling speed.

16. The wireless power transfer system according to claim 15, wherein:

the at least one selected power-transfer path segment comprises multiple power-transfer path segments, a predetermined speed band (Vb) being set to each of the multiple power-transfer path segments to limit the first traveling speed; and
the first control unit is configured to:
determine, based on determination of the first traveling speed, the route instruction indicating the at least one mobile object toward one of the multiple power-transfer path segments to each of which the predetermined speed band is set.

17. The wireless power transfer system according to claim 16, wherein:

the at least one mobile object comprises plural mobile objects; and
the power-transfer management unit comprises:
a first detection unit (430) configured to detect, for each of the multiple power-transfer path segments, (i) the first traveling speed and (ii) the number of detected mobile objects included in the plural mobile objects, the detected mobile objects being located on the corresponding one of the multiple power-transfer path segments; and
the first control unit is configured to:

select one of the detected mobile objects, the third traveling speed of the selected one of the detected mobile objects being slowest as a slowest third traveling speed; and
change the third traveling speed of each of the detected mobile objects to the slowest third traveling speed.

18. The wireless power transfer system according to claim 17, wherein:

the power transfer information includes an stop instruction for stopping the reception of the power; and
the first control unit is configured to determine, during the reception of the power by the at least one mobile object being performed, stop of the reception of the power by the at least one mobile object in response to determination that the remaining capacity of the at least one mobile object exceeds reference energy (Wa).

19. The wireless power transfer system according to claim 18, wherein:

the first control unit is configured to determine, during the reception of the power by the at least one mobile object being performed, the route instruction indicating the at least one mobile object toward any one of the one or more non-power transfer path segments in response to determination that the remaining capacity of the at least one mobile object exceeds the reference energy.

20. The wireless power transfer system according to any one of claims 11, 12, 13, 17, 18, and 19, wherein:

the at least one mobile object comprises an SOC acquisition unit (151ax) configured to acquire an SOC (So) of the battery;
the power-transfer management unit comprises a second controller (411z) configured to:

generate time information (T) on the at least one mobile object based on the power transfer information; and
calculate, on condition that the remaining capacity is acquired before determination of the route instruction, a predicted charging time (Tc) of each of the multiple power-transfer path segments as the time information in accordance with the suppliable power output and the requested energy; and

the first controller is configured to cancel the determination of the route instruction in response to determination that the predicted charging time (Tc) is longer than a predetermined charging time and the SOC of the battery is higher than a predetermined reference SOC (Som).

21. The wireless power transfer system according to any one of claims 11, 12, 13, 17, 18, and 19, wherein:

the at least one mobile object comprises an SOC acquisition unit (151ax) configured to acquire an SOC (So) of the battery; and
the first controller is configured to cancel, on condition that the remaining capacity is acquired before determination of the route instruction, the determination of the route instruction in response to determination that the SOC of the battery is higher than a predetermined reference SOC (Som).

22. The wireless power transfer system according to any one of claims 11, 12, 13, 17, 18, and 19, further comprising:
a process management unit (500) for managing an operation of each of plural mobile objects on the plurality of traveling-path segments, each of which corresponds to the at least one mobile object, the process management unit comprising a third communication unit (540) configured to communicate with the power-transfer management unit, wherein:

the power-transfer management unit comprises:

a second controller (411z) configured to generate time information (T) on each of the plural mobile objects based on the power transfer information; and
a fourth communication unit configured to communicate with the process management unit;

the second controller is configured to:

calculate, on condition that the remaining capacity is acquired before determination of the route instruction, a predicted charging time (Tc) of each of the multiple power-transmission path segments as the time information in accordance with the suppliable power output and the requested energy;
calculate, in response to determination that a predicted charging time (Tc) of each of the multiple power-transmission path segments is longer than a predetermined charging time of the corresponding one of the multiple power-transmission path segments by the first controller, a predicted extension time (Te) for each of the multiple power-transmission path segments as the time information, the predicted extension time (Te) for each of the multiple power-transmission path segments representing a result of subtracting a predetermined allowable time for the corresponding one of the multiple power-transmission path segments from the predicted charging time (Tc) of the corresponding one of the multiple power-transmission path segments; and
notify the process management unit of the time information therefrom; and

the first controller is configured to determine the route instruction after notification of the time information.

23. The wireless power transfer system according to any one of claims 11, 12, 13, 17, 18, and 19, further comprising:

a process management unit (500) for managing an operation of the at least one mobile object on the one or more traveling-path segments,
wherein:

the at least one mobile object comprises a fifth communication unit (180) configured to communicate with the power-transfer management unit;
the process management unit comprises:

a second detection unit configured to perform:

detection of a traveling time of the at least one mobile object on each of the multiple power-transmission path segments; and
departure of the at least one mobile object from each of the multiple power-transmission path segments;

a third control unit configured to control the process management unit; and
a sixth communication unit configured to communicate with the at least one mobile object; and

the third control unit is configured to:

determine the second traveling speed before the at least one mobile object travels at least one of the traveling-path segments;
determine, on condition that the detection of the second detection unit is completed, whether the traveling time of the at least one mobile object on each of the multiple power-transmission path segments is longer than a predetermined allowable time (Tm); and
change the second speed detected by the second detection unit to a fifth traveling speed that is faster than the second traveling speed in response to determination that the traveling time of the at least one mobile object on each of the multiple power-transmission path segments is longer than the predetermined allowable time.

24. The wireless power transfer system according to any one of claims 11, 12, 13, 17, 18, and 19, wherein:

the multiple power-transfer path segments include:

at least one first power-transfer path segment for charging the at least one mobile object in a stopped state; and
at least one second power-transfer path segment for charging the at least one mobile object while the at least one mobile object is traveling;

the power-transfer management unit comprises:
a second controller configured to:

generate time information (T) on the at least one mobile object based on the power transfer information; and
calculate, on condition that the remaining capacity is acquired before determination of the route instruction, a predicted charging time (Tc) of each of the multiple power-transfer path segments as the time information in accordance with the suppliable power output and the requested energy; and

the first controller is configured to:

determine whether the predicted charging time of each of the multiple power-transmission path segments is longer than a predetermined charging time of the corresponding one of the multiple power-transmission path segments; and
determine the route instruction indicating the at least one first power-transfer path segment in response to determination that the predicted charging time of each of the multiple power-transmission path segments is longer than the predetermined charging time of the corresponding one of the multiple power-transmission path segments.

25. The wireless power transfer system according to claim 22, wherein:

**EP 4 697 561 A1**

the multiple power-transfer path segments include a looped power-transfer segment; and
the first controller is configured to determine, as the route instruction after the notification, an instruction toward the looped power-transfer path segment.

26. The wireless power transfer system according to claim 22, wherein:
the process management unit comprises a third control unit configured to:
cause another mobile object other than the at least one mobile object related to the notification to travel along the route of the at least one mobile object.

27. A power transmission apparatus for performing power transmission to be used in a wireless power transfer system for wireless power transfer to at least one mobile object,
the wireless power transfer system comprising:

a plurality of traveling-path segments including:

one or more power-transfer path segments through which the power transmission is performed; and
one or more non-power transfer path segments other than the one or more power-transfer path segments;

a power-transfer management unit configured to control the wireless power transfer system,
the at least one mobile object being configured to travel on the one or more power-transfer path segments, the at least one mobile object comprising:

a power reception unit configured to perform reception of the power transmitted from the power transmission apparatus;
a battery configured to be chargeable by a predetermined suppliable power output as the power;
a battery sensor configured to measure a remaining capacity of the battery;
a first communication unit configured to communicate with the power-transfer management unit; and
a first control unit configured to control the at least one mobile object,

the power transmission apparatus comprising:

at least one power transmission coil provided on each of the one or more power-transfer path segments; and
a power supply unit configured to output, to the at least one mobile object through the at least one power transmission coil, the suppliable power output, wherein:

the power-transfer management unit comprises:

a first controller configured to generate power transfer information; and
a second communication unit configured to communicate with the first communication unit; and

one of the at least one mobile object and the power-transfer management unit comprises a third controller configured to calculate, based on the remaining capacity of the battery, requested energy of the battery,
the power transfer information being information used by the first control unit for controlling travel and the reception of the power of the at least one mobile object;
the power transfer information including a first traveling speed for a predetermined route that includes:

at least one selected power-transfer path segment included in the one or more power-transfer path segments; or
a combination of at least one selected non-power transfer path segment included in the one or more non-power transfer path segments and the at least one selected power-transfer path segment,

the at least one mobile object, which travels at a second traveling speed on the at least one non-power transfer path segment, being controlled to travel at the first traveling speed on the at least one power-transfer path segment; and
the first controller is configured to:

calculate, as the first traveling speed, a third traveling speed required to charge the battery of the at

43

least one mobile object traveling on the route up to the requested energy in accordance with available power information and the requested energy, the available power information being predetermined related to a power delivery capability of the at least one power-transfer path segment; and

transmit, through the second communication unit, the third traveling speed to the at least one mobile object.

28. The power transmission apparatus according to claim 27, wherein:

the at least one selected power-transfer path segment comprises multiple power-transfer path segments, a predetermined speed band being set to each of the multiple power-transfer path segments to limit the first traveling speed;

the power transfer information further includes a route instruction including, as the route, the combination of the at least one selected non-power transfer path segment and the at least one selected power-transfer path segment; and

the first control unit is configured to:

determine, based on determination of the first traveling speed, the route instruction indicating the at least one mobile object toward one of the multiple power-transfer path segments to each of which the predetermined speed band is set.

29. A power reception apparatus provided at least one mobile object for power reception, the power reception apparatus being usable in a wireless power transfer system for wireless power transfer to the at least one mobile object, the wireless power transfer system comprising:

a power transmission apparatus configured to perform power transmission;

a plurality of traveling-path segments including:

one or more power-transfer path segments through which the power transmission is performed; and

one or more non-power transfer path segments other than the one or more power-transfer path segments;

a power-transfer management unit configured to control the wireless power transfer system,

the at least one mobile object being configured to travel on the one or more power-transfer path segments,

the power reception apparatus comprising:

a power reception unit configured to perform reception of the power transmitted from the power transmission apparatus;

a battery configured to be chargeable by a predetermined suppliable power output as the power;

a battery sensor configured to measure a remaining capacity of the battery;

a first communication unit configured to communicate with the power-transfer management unit; and

a first control unit configured to control the at least one mobile object,

the power transmission apparatus comprising:

at least one power transmission coil provided on each of the one or more power-transfer path segments; and

a power supply unit configured to output, to the at least one mobile object through the at least one power transmission coil, the suppliable power output, wherein:

the power-transfer management unit comprises:

a first controller configured to generate power transfer information; and

a second communication unit configured to communicate with the first communication unit;

one of the at least one mobile object and the power-transfer management unit comprises a third controller configured to calculate, based on the remaining capacity of the battery, requested energy of the battery,

the power transfer information being information used by the first control unit for controlling travel and the reception of the power of the at least one mobile object;

the power transfer information including a first traveling speed for a predetermined route that includes:

at least one selected power-transfer path segment included in the one or more power-transfer path segments; or

a combination of at least one selected non-power transfer path segment included in the one or more non-power transfer path segments and the at least one selected power-transfer path segment,

the at least one mobile object, which travels at a second traveling speed on the at least one non-power transfer path segment, being controlled to travel at the first traveling speed on the at least one power-transfer path segment; and

the first controller is configured to:

calculate, as the first traveling speed, a third traveling speed required to charge the battery of the at least one mobile object traveling on the route up to the requested energy in accordance with available power information and the requested energy, the available power information being predetermined related to a power delivery capability of the at least one power-transfer path segment; and

transmit, through the second communication unit, the third traveling speed to the at least one mobile object.

30. The power reception apparatus according to claim 29, wherein:

the at least one selected power-transfer path segment comprises multiple power-transfer path segments, a predetermined speed band being set to each of the multiple power-transfer path segments to limit the first traveling speed;

the power transfer information further includes a route instruction including, as the route, the combination of the at least one selected non-power transfer path segment and the at least one selected power-transfer path segment; and

the first control unit is configured to:

determine, based on determination of the first traveling speed, the route instruction indicating the at least one mobile object toward one of the multiple power-transfer path segments to each of which the predetermined speed band is set.

# FIG.1

EP 4 697 561 A1

POWER TRANSMISSION APPARATUS

POWER-TRANSFER MANAGEMENT UNIT

# FIG.2

# FIG.3

# FIG.4

```
          ┌─────────────┐
          │    START    │
          └──────┬──────┘
                 ↓
  ┌──────────────────────────────────┐   S110
  │ ACQUIRE REMAINING CAPACITY OF    │
  │           BATTERY                │
  └──────────────┬───────────────────┘
                 ↓
  ┌──────────────────────────────────┐   S120
  │        READ RATED CAPACITY       │
  └──────────────┬───────────────────┘
                 ↓
  ┌──────────────────────────────────┐   S130
  │     CALCULATE REQUESTED ENERGY   │
  └──────────────┬───────────────────┘
                 ↓
  ┌──────────────────────────────────┐   S140
  │          READ LENGTH OF          │
  │   POWER-TRANSFER PATH SEGMENT    │
  └──────────────┬───────────────────┘
                 ↓
  ┌──────────────────────────────────┐   S150
  │       READ SUPPLIABLE POWER      │
  └──────────────┬───────────────────┘
                 ↓
  ┌──────────────────────────────────┐   S160
  │   CALCULATE THIRD TRAVELING SPEED│
  └──────────────┬───────────────────┘
                 ↓
  ┌──────────────────────────────────┐   S170
  │ TRANSMIT THIRD TRAVELING SPEED TO│
  │           MOBILE OBJECT          │
  └──────────────┬───────────────────┘
                 ↓
          ┌─────────────┐
          │     END     │
          └─────────────┘
```

# FIG.5

```
            ┌─────────────┐
            │    START    │
            └──────┬──────┘
                   │
                   ▼
   ┌───────────────────────────────────┐  ── S210
   │ ACQUIRE REMAINING CAPACITY OF BATTERY │
   └───────────────┬───────────────────┘
                   │
                   ▼
   ┌───────────────────────────────────┐  ── S220
   │          READ RATED CAPACITY       │
   └───────────────┬───────────────────┘
                   │
                   ▼
   ┌───────────────────────────────────┐  ── S230
   │       CALCULATE REQUESTED ENERGY   │
   └───────────────┬───────────────────┘
                   │
                   ▼
   ┌───────────────────────────────────┐  ── S240
   │            READ LENGTH OF          │
   │    POWER-TRANSFER PATH SEGMENT     │
   └───────────────┬───────────────────┘
                   │
                   ▼
   ┌───────────────────────────────────┐  ── S250
   │        READ SUPPLIABLE POWER       │
   └───────────────┬───────────────────┘
                   │
                   ▼
   ┌───────────────────────────────────┐  ── S260
   │    CALCULATE THIRD TRAVELING SPEED │
   └───────────────┬───────────────────┘
                   │
                   ▼
   ┌───────────────────────────────────┐  ── S270
   │   SELECT POWER-TRANSFER PATH SEGMENT │
   └───────────────┬───────────────────┘
                   │
                   ▼
   ┌───────────────────────────────────┐  ── S280
   │  TRANSMIT, TO MOBILE OBJECT, ROUTE │
   │  COMMAND AND THIRD TRAVELING SPEED │
   └───────────────┬───────────────────┘
                   │
                   ▼
            ┌─────────────┐
            │     END     │
            └─────────────┘
```

# FIG.6

```
           ┌─────────────┐
           │    START    │
           └──────┬──────┘
                  ↓
    ┌──────────────────────────────┐
    │  READ THIRD TRAVELING SPEEDS │──── S310
    └──────────────┬───────────────┘
                   ↓
    ┌──────────────────────────────────┐
    │ SELECT SLOWEST THIRD TRAVELING   │──── S320
    │            SPEED                 │
    └──────────────┬───────────────────┘
                   ↓
    ┌──────────────────────────────────┐
    │ TRANSMIT AVAILABLE POWER         │──── S330
    │ INFORMATION TO EACH SAME-PATH    │
    │ MOBILE OBJECT                    │
    └──────────────┬───────────────────┘
                   ↓
           ┌─────────────┐
           │     END     │
           └─────────────┘
```

# FIG.7

```
           ┌─────────────┐
           │    START    │
           └──────┬──────┘
                  ↓
    ┌──────────────────────────────────┐
    │ ACQUIRE REMAINING CAPACITY OF    │──── S410
    │ BATTERY                          │
    └──────────────┬───────────────────┘
                   ↓
    ┌──────────────────────────────────┐
    │      READ RATED CAPACITY         │──── S420
    └──────────────┬───────────────────┘
                   ↓       S430
              ◇─────────────────◇
              │ IS CHARGING     │────── NO
              │ UNNECESSARY ?   │
              ◇────────┬────────◇
                   YES │
                       ↓
    ┌──────────────────────────────────┐
    │ TRANSMIT STOP COMMAND FOR        │──── S440
    │ STOPPING POWER RECEPTION         │
    └──────────────┬───────────────────┘
                   ↓
    ┌──────────────────────────────────┐
    │     TRANSMIT ROUTE COMMAND       │──── S450
    └──────────────┬───────────────────┘
                   ↓
           ┌─────────────┐
           │     END     │
           └─────────────┘
```

FIG.8

# FIG.9

400a — POWER-TRANSFER MANAGEMENT UNIT

410a — SECOND CONTROL UNIT 412

411a — PROCESSOR

ROM

FIRST DETECTION UNIT — 430

SECOND COMMUNICATION UNIT — 420

411x — FIRST CONTROLLER | SECOND CONTROLLER — 411z

411y — THIRD CONTROLLER

413a — RAM

Dc — AVAILABLE POWER INFORMATION | SPEED BAND — Vb

Dr { P — SUPPLIABLE POWER | REQUESTED ENERGY — W_com

Dr { L — LENGTH | RATED CAPACITY — Wm

Som — REFERENCE SOC | CHARGING TIME — Tc_o

# FIG.10

EP 4 697 561 A1

# FIG.11

```
              ┌───────────┐
              │   START   │
              └───────────┘
                    │
                    ▼
    ┌────────────────────────────────┐
    │     ACQUIRE SOC OF BATTERY     │──── S510
    └────────────────────────────────┘
                    │
                    ▼
    ┌────────────────────────────────┐
    │       READ RATED CAPACITY      │──── S520
    └────────────────────────────────┘
                    │
                    ▼
    ┌────────────────────────────────┐
    │    CALCULATE REQUESTED ENERGY  │──── S530
    └────────────────────────────────┘
                    │
                    ▼
    ┌────────────────────────────────┐
    │      READ SUPPLIABLE POWER     │──── S540
    └────────────────────────────────┘
                    │
                    ▼
    ┌────────────────────────────────┐
    │  CALCULATE PREDICTED CHARGING TIME │──── S550
    └────────────────────────────────┘
                    │
                    ▼
            S560
         ╱────────────╲
        ╱  DOES        ╲
       ╱   PREDICTED    ╲      NO
      ⟨ CHARGING TIME EXCEED ⟩─────────────┐
       ╲   CHARGING     ╱                  │
        ╲   TIME ?     ╱                   │
         ╲────────────╱                    │
              │ YES                        │
              ▼                            │
    ┌────────────────────────────────┐     │
    │       READ REFERENCE SOC       │──── S570
    └────────────────────────────────┘     │
                    │                      │
                    ▼                      │
            S580                           │
         ╱────────────╲                    │
        ╱    DOES      ╲        NO         │
       ⟨ SOC EXCEED REFERENCE ⟩────────────┤
        ╲     SOC ?    ╱                    │
         ╲────────────╱                     │
              │ YES                         │
              ▼                             │
    ┌────────────────────────────────┐      │
    │ STOP GENERATION OF ROUTE COMMAND │──── S590
    └────────────────────────────────┘      │
                    │                       │
                    ▼◄──────────────────────┘
              ┌───────────┐
              │    END    │
              └───────────┘
```

# FIG.12

START

ACQUIRE SOC OF BATTERY — S610

READ RATED CAPACITY — S620

CALCULATE REQUESTED ENERGY — S630

READ SUPPLIABLE POWER — S640

CALCULATE PREDICTED CHARGING TIME — S650

S660
DOES PREDICTED CHARGING TIME EXCEED CHARGING TIME ?

NO

YES

S670
TRANSMIT ROUTE COMMAND INDICATIVE OF FIRST POWER-TRANSFER PATH SEGMENT

S680
TRANSMIT ROUTE COMMAND INDICATIVE OF SECOND POWER-TRANSFER PATH SEGMENT

END

# FIG.13

EP 4 697 561 A1

| | |
|---|---|
| 200 | POWER TRANSMISSION APPARATUS |
| 400b | POWER-TRANSFER MANAGEMENT UNIT |
| 500 | PROCESS MANAGEMENT UNIT |

# FIG.14

EP 4 697 561 A1

# FIG.15

| 400b | POWER-TRANSFER MANAGEMENT UNIT | | | |
|---|---|---|---|---|

410b — SECOND CONTROL UNIT ⌐412

| | FIRST DETECTION UNIT | ~ 430 |
|---|---|---|

411b — PROCESSOR | ROM

| | SECOND COMMUNICATION UNIT | ~ 420 |
|---|---|---|

411x — FIRST CONTROLLER | SECOND CONTROLLER

| | FOURTH COMMUNICATION UNIT | ~ 440 |
|---|---|---|

411y — THIRD CONTROLLER

~ 411z

413b — RAM

Dc — AVAILABLE POWER INFORMATION | SPEED BAND ~ Vb

Dr { P — SUPPLIABLE POWER | REQUESTED ENERGY ~ W_com

Dr { L — LENGTH | RATED CAPACITY ~ Wm

Som — REFERENCE SOC | CHARGING TIME ~ Tc_o

| ALLOWABLE TIME ~ Tm

# FIG.16

| 500 | PROCESS MANAGEMENT UNIT | | |
|---|---|---|---|

510 — THIRD CONTROL UNIT

511 — PROCESSOR | ROM ⌐512

| | SECOND DETECTION UNIT | ~ 530 |
|---|---|---|

| | THIRD COMMUNICATION UNIT | ~ 540 |
|---|---|---|

513 — RAM

V2 — SECOND TRAVELING SPEED | ALLOWABLE TIME

| | SIXTH COMMUNICATION UNIT | ~ 550 |
|---|---|---|

V4 — FOURTH TRAVELING SPEED

~ Tm

# FIG.17

(S550)

S710
DOES PREDICTED CHARGING TIME EXCEED CHARGING TIME ?

YES →

NO ↓

S720
READ REFERENCE SOC

S730
IS SOC LESS THAN OR EQUAL TO REFERENCE SOC ?

YES →

NO ↓

S740
STOP GENERATION OF ROUTE COMMAND

S750
CALCULATE PREDICTED EXTENSION TIME

S760
NOTIFY PROCESS MANAGEMENT UNIT THAT DELAY IS LIKELY TO OCCUR

END

# FIG.18

```
         ┌──────────────┐
         │    START     │
         └──────┬───────┘
                │           ╭─ S810
         ┌──────▼────────────────┐
         │ ACQUIRE TRAVELING TIME │
         └──────┬─────────────────┘
                │           ╭─ S820
             ╱──▼──╲
            ╱ DOES  ╲
           ╱TRAVELING╲  NO
          ╱ TIME EXCEED╲──────────────────────┐
          ╲ ALLOWABLE  ╱                       │
           ╲  TIME ?  ╱                        │
            ╲───┬───╱                          │
             YES│                              │
      ┌─────────▼─────────────────┐            │
      │                  ╭─ S830   │           │
  ┌───▼──────────────────────────┐│           │
  │INCREASE SPEED OF MOBILE OBJECT││           │
  │NON-POWER TRANSFER PATH SEGMENT││           │
  └───┬──────────────────────────┘│           │
      │           ╭─ S840          │           │
  ┌───▼──────────────────────────┐│           │
  │ACQUIRE TRAVELING TIME OF      ││           │
  │    NEXT MOBILE OBJECT         ││           │
  └───┬──────────────────────────┘│           │
      │           ╭─ S850          │           │
   ╱──▼──╲                         │           │
  ╱ DOES  ╲                        │           │
 ╱TRAVELING╲  NO                   │           │
╱ TIME EXCEED╲─────────┐           │           │
╲ ALLOWABLE  ╱         │           │           │
 ╲  TIME ?  ╱          │           │           │
  ╲───┬───╱            ▼   ╭─ S860 │           │
   YES│      ┌──────────────────────┐         │
      └──────│CHANGE TRAVELING SPEED │         │
             │OF MOBILE OBJECT ON    │         │
             │NON-POWER TRANSFER PATH│         │
             │SEGMENT TO STANDARD    │         │
             │SPEED V2               │         │
             └──────────┬────────────┘         │
                        ▼◄──────────────────────┘
                  ┌──────────┐
                  │   END    │
                  └──────────┘
```

61

# FIG.19

EP 4 697 561 A1

# FIG.20

400c — POWER-TRANSFER MANAGEMENT UNIT

410c — SECOND CONTROL UNIT

411c — PROCESSOR

411xc — FIRST CONTROLLER

411y — THIRD CONTROLLER

412 — ROM

FIRST DETECTION UNIT — 430c

SECOND COMMUNICATION UNIT — 420

413c — RAM

Dc — AVAILABLE POWER INFORMATION

Dr — AVAILABLE POWER INFORMATION

SPEED BAND — Vb

REQUESTED ENERGY — W_com

RATED CAPACITY — Wm

# FIG.21

```
              ┌─────────────┐
              │    START    │
              └─────────────┘
                     │
                     ▼
        ┌──────────────────────────────┐
        │  DETERMINE CONTROL INTERVAL  │────── S910
        └──────────────────────────────┘
                     │
                     ▼
        ┌──────────────────────────────┐
        │           ACQUIRE            │────── S920
        │  REMAINING CAPACITY OF BATTERY │
        └──────────────────────────────┘
                     │
                     ▼
        ┌──────────────────────────────┐
        │       READ RATED CAPACITY    │────── S930
        └──────────────────────────────┘
                     │
                     ▼
        ┌──────────────────────────────┐
        │   CALCULATE REQUESTED ENERGY │────── S940
        └──────────────────────────────┘
                     │
                     ▼
        ┌──────────────────────────────┐
        │  READ LENGTH OF POWER-TRANSFER │────── S950
        │         PATH SEGMENT         │
        └──────────────────────────────┘
                     │
                     ▼
        ┌──────────────────────────────┐
        │     READ SUPPLIABLE POWER    │────── S960
        └──────────────────────────────┘
                     │
                     ▼
        ┌──────────────────────────────┐
        │  CALCULATE THIRD TRAVELING SPEED │────── S970
        └──────────────────────────────┘
                     │
                     ▼
        ┌──────────────────────────────┐
        │ TRANSMIT THIRD TRAVELING SPEED TO │────── S980
        │         MOBILE OBJECT        │
        └──────────────────────────────┘
                     │                    S990
                     ▼
     NO      ╱─────────────────────╲
    ◄────────┤    HAS TRAVELING     │
             │ OF MOBILE OBJECT BEEN │
             ╲     COMPLETED ?      ╱
              ╲───────────────────╱
                     │ YES
                     ▼
              ┌─────────────┐
              │     END     │
              └─────────────┘
```

# FIG.22

# FIG.23

START

DETERMINE CONTROL INTERVAL — S1010

ACQUIRE
REMAINING CAPACITY OF BATTERY — S1020

READ RATED CAPACITY — S1030

CALCULATE REQUESTED ENERGY — S1040

READ RECEIVED-POWER RECORD — S1050

CALCULATE DEVIATION BETWEEN
REQUESTED ENERGY AND CHARGED ENERGY — S1060

CALCULATE SPEED CORRECTION TERM — S1070

CALCULATE THIRD TRAVELING SPEED — S1080

TRANSMIT THIRD TRAVELING SPEED TO
MOBILE OBJECT — S1090

ACQUIRE CHARGED ENERGY — S1100

S1110

HAS TRAVELING
OF MOBILE OBJECT BEEN
COMPLETED ?

NO

YES

END

# G.24

START

DETERMINE CONTROL INTERVAL

S1220
ACQUIRE
REMAINING CAPACITY OF BATTERY

S1230
READ RATED CAPACITY

S1240
CALCULATE REQUESTED ENERGY

S1250
CAN
RECEIVED-POWER RECORD BE
READ ?

YES →

NO

S1260
READ LENGTH OF POWER-TRANSFER
PATH SEGMENT

S1270
READ SUPPLIABLE POWER

S1280
CALCULATE THIRD TRAVELING SPEED

S1290
TRANSMIT THIRD TRAVELING SPEED TO
MOBILE OBJECT

S1300
CALCULATE DEVIATION BETWEEN
REQUESTED ENERGY AND CHARGED ENERGY

S1310
CALCULATE SPEED CORRECTION TERM

S1320
CALCULATE THIRD TRAVELING SPEED

S1330
TRANSMIT THIRD TRAVELING SPEED TO
MOBILE OBJECT

S1340
ACQUIRE CHARGED ENERGY

S1350
HAS TRAVELING
OF MOBILE OBJECT BEEN
COMPLETED ?

NO

YES

END

# FIG.25

# FIG.26

FIG.27

10d

310,300c

310,300c

310,300c

320,300c

310,300c

C

Pr

Pr

100

100

| | |
|---|---|
| 200 | POWER TRANSMISSION APPARATUS |
| 400c | POWER-TRANSFER MANAGEMENT UNIT |
| 500d | PROCESS MANAGEMENT UNIT |

# FIG.28

# FIG.29

| | 0<br>(POWER SUPPLY<br>STOP) | 500<br>(POWER<br>SUPPRESSION) | 1000<br>(CONTINUOUS<br>RATING) | 1500<br>(SHORT-TIME<br>RATING) |
|---|---|---|---|---|
| SIXTH POWER-<br>TRANSFER PATH<br>SEGMENT 316 | 0 | 1000 | 2000 | 2000 |
| SEVENTH POWER-<br>TRANSFER PATH<br>SEGMENT 317 | 0 | 1500 | 3000 | 3000 |

FIG.30

## INTERNATIONAL SEARCH REPORT

| International application No. |
|---|
| **PCT/JP2024/014353** |

**A. CLASSIFICATION OF SUBJECT MATTER**

*H02J 50/40*(2016.01)i; *B60L 5/00*(2006.01)i; *B60L 50/60*(2019.01)i; *B60L 53/12*(2019.01)i; *B60L 58/10*(2019.01)i; *B60M 7/00*(2006.01)i; *H02J 7/00*(2006.01)i; *H02J 50/12*(2016.01)i; *H02J 50/80*(2016.01)i

FI:  H02J50/40; B60L5/00 B; B60L50/60; B60L53/12; B60L58/10; B60M7/00 X; H02J7/00 P; H02J7/00 X; H02J7/00 301D; H02J50/12; H02J50/80

According to International Patent Classification (IPC) or to both national classification and IPC

**B. FIELDS SEARCHED**

Minimum documentation searched (classification system followed by classification symbols)

H02J50/40; B60L5/00; B60L50/60; B60L53/12; B60L58/10; B60M7/00; H02J7/00; H02J50/12; H02J50/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-020483 A (TOYOTA JIDOSHA KABUSHIKI KAISHA) 09 February 2023 (2023-02-09) | 1-4, 9, 15, 27, 29 |
| | paragraphs [0012]-[0084], [0099]-[0121], fig. 1-6, 12-15 | |
| Y | | 11, 16, 28, 30 |
| A | | 5-8, 10, 12-14, 17-26 |
| Y | JP 5141770 B2 (TOYOTA JIDOSHA KABUSHIKI KAISHA) 13 February 2013 (2013-02-13) | 11, 16, 28, 30 |
| | paragraphs [0045]-[0047], fig. 4 | |
| A | | 1-10, 12-15, 17-27, 29 |
| A | JP 2013-192412 A (NISSAN MOTOR CO., LTD.) 26 September 2013 (2013-09-26) entire text, all drawings | 1-30 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 June 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/014353** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 112060943 A (VOLKSWAGEN AKTIENGESELLSCHAFT) 11 December 2020 (2020-12-11)<br>    entire text, all drawings | 1-30 |

Form PCT/ISA/210 (second sheet) (July 2022)

**INTERNATIONAL SEARCH REPORT**
Information on patent family members

International application No.

**PCT/JP2024/014353**

| Patent document cited in search report | | | Publication date (day/month/year) | Patent family member(s) | Publication date (day/month/year) |
|---|---|---|---|---|---|
| JP | 2023-020483 | A | 09 February 2023 | US 2023/0032752 A1 paragraphs [0062]-[0139], [0154]-[0176], fig. 1-6, 12-15 | |
| JP | 5141770 | B2 | 13 February 2013 | (Family: none) | |
| JP | 2013-192412 | A | 26 September 2013 | (Family: none) | |
| CN | 112060943 | A | 11 December 2020 | DE 102019207449 A1 entire text, all drawings | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023066091 A
- JP 2023201553 A
- JP 2021045013 A